# EUROPEAN PATENT APPLICATION

(11) **EP 4 542 529 A1**
(43) Date of publication of application: **23.04.2025**
(21) Application number: 23843112.6
(22) Date of filing: 29.03.2023
(51) Int. Cl.: G09F 9/30, G06F 1/16, H04M 1/02, H10K 77/10, H10K 102/00

(54) **FOLDABLE ELECTRONIC DEVICE**

(30) Priority: 20.07.2022 KR 20220089333; 08.09.2022 KR 20220114528
(71) Applicant: Samsung Electronics Co., Ltd., Suwon-si, Gyeonggi-do 16677 (KR)
(72) Inventor: JUNG, Hyunsuk, Suwon-si, Gyeonggi-do 16677 (KR); PARK, Daehyeong, Suwon-si, Gyeonggi-do 16677 (KR); AN, Jungchul, Suwon-si, Gyeonggi-do 16677 (KR); CHOI, Sungyun, Suwon-si, Gyeonggi-do 16677 (KR)
(74) Representative: HGF
(86) International application number: PCT/KR2023/004172
(87) International publication number: WO 2024/019251

(57) **Abstract**

According to an exemplary embodiment of the present disclosure, a foldable electronic device may include a foldable housing, a flexible display module, and a flexible film. The foldable housing may include a first housing, a second housing, and a hinge portion for connecting the first housing and the second housing. The flexible display module may include a third display area located to correspond to the hinge portion, a first display area extending from the third display area and disposed on the first housing, and a second display area extending from the third display area and disposed on the second housing. The flexible film may be disposed on a foldable housing between the foldable housing and the flexible display module. The hinge portion may include a center plate including a recess provided on one surface facing the third display area. A part or all of the flexible film may be supported by the center plate between the third display area and the center plate to be disposed flat and may overlap the recess.

## Description

### [Technical Field]

The disclosure relates to a foldable electronic device.

### [Background Art]

When a foldable electronic device is switched from an unfolded state to a folded state, an area of a flexible display module, which corresponds to a folding part of the foldable electronic device, may be disposed in a state of being deformed from a flat state to a curved state.

The above-mentioned information can be provided as a related art for helping an understanding of the disclosure. No determination has been made, and no assertion is made, as to whether any of the above-mentioned information might be applicable as prior art with regard to the disclosure.

### [Disclosure of Invention]

### [Technical Problem]

A foldable electronic device capable of reducing or preventing damage to a flexible display module due to external impact may be required.

Embodiments of the disclosure can provide a foldable electronic device capable of reducing or preventing damage to an area of a flexible display module, which corresponds to a folding part of a foldable electronic device, due to external impact.

The technical problems to be achieved in the disclosure are not limited to the technical problems mentioned above, and other technical problems not mentioned can be understood by a person skilled in the art to which the disclosure belongs from the description below.

### [Solution to Problem]

According to an exemplary embodiment of the disclosure, a foldable electronic device may include a foldable housing, a flexible display module, and a flexible film. The foldable housing may include a first housing, a second housing, and a hinge part configured to connect the first housing and the second housing. The flexible display module may include a third display area positioned to correspond to the hinge part, a first display area which extends from the third display area and is disposed in the first housing, and a second display area which extends from the third display area and is disposed in the second housing. The flexible film may be disposed in the foldable housing between the foldable housing and the flexible display module. The hinge part may include a center plate including a recess provided on one surface thereof, the one surface facing the third display area. A part or all of the flexible film may be supported by the center plate between the third display area and the center plate and thus be flatly disposed, and may overlap the recess.

### [Advantageous Effects of Invention]

A foldable electronic device according to various embodiments of the disclosure can reduce or prevent damage and/or creases of an area of a flexible display module, the area corresponding to a hinge part (or a folding part).

In addition, effects, which may be obtained or predicted through various embodiments of the disclosure, will be directly or indirectly disclosed in the detailed description of an embodiment of the disclosure.

### [Brief Description of Drawings]

The above and other aspects, features, and advantages of specific embodiments of the disclosure will become more apparent from the following detailed descriptions taken in conjunction with the accompanying drawings.
FIG. 1 is a block diagram of an electronic device in a network environment according to an embodiment of the disclosure.
FIG. 2 shows views of a foldable electronic device in an unfolded state according to an embodiment of the disclosure.
FIG. 3 shows views of a foldable electronic device in a folded state according to an embodiment of the disclosure.
FIG. 4 is an exploded perspective view of a foldable electronic device in an unfolded state according to an embodiment of the disclosure.
FIG. 5 is a cross-sectional view of a foldable electronic device in an unfolded state according to an embodiment of the disclosure.
FIG. 6 shows a cross-sectional view of a foldable electronic device in a folded state according to an embodiment of the disclosure and a partially enlarged view of the cross-sectional view.
FIG. 7 is a partially exploded perspective view of a foldable electronic device in an unfolded state according to an embodiment of the disclosure.
FIG. 8 is a partially enlarged view of the foldable electronic device illustrated in FIG. 7 according to an embodiment of the disclosure.
FIG. 9 is a perspective view of a hinge part of a foldable electronic device in an unfolded state according to an embodiment of the disclosure.
FIG. 10 is a perspective view showing a first hinge module and a hinge cover of a foldable electronic device in an unfolded state according to an embodiment of the disclosure.
FIG. 11 is a cross-sectional view of a foldable electronic device in an unfolded state, taken along line D-D' in FIG. 9 according to an embodiment of the disclosure.
FIG. 12 is a cross-sectional view of a foldable electronic device in a folded state associated with FIG. 11 according to an embodiment of the disclosure.
FIG. 13 is a cross-sectional view of a foldable electronic device in an unfolded state, taken along line E-E' in in FIG. 9 according to an embodiment of the disclosure.
FIG. 14 is a cross-sectional view of a foldable electronic device in a folded state associated with FIG. 13 according to an embodiment of the disclosure.
FIG. 15 is a cross-sectional view showing a foldable electronic device in an unfolded state according to various embodiments of the disclosure.
FIG. 16 is a cross-sectional view showing a foldable electronic device in a folded state according to various embodiments of the disclosure.
FIG. 17 is a cross-sectional view showing a foldable electronic device in an unfolded state according to various embodiments of the disclosure.
FIG. 18 is a cross-sectional view showing a foldable electronic device in a folded state according to various embodiments of the disclosure.
FIG. 19 is a cross-sectional view showing a foldable electronic device in an unfolded state according to various embodiments of the disclosure.

### [Mode for the Invention]

Hereinafter, various example embodiments of the disclosure disclosed herein will be described in greater detail with reference to the accompanying drawings.

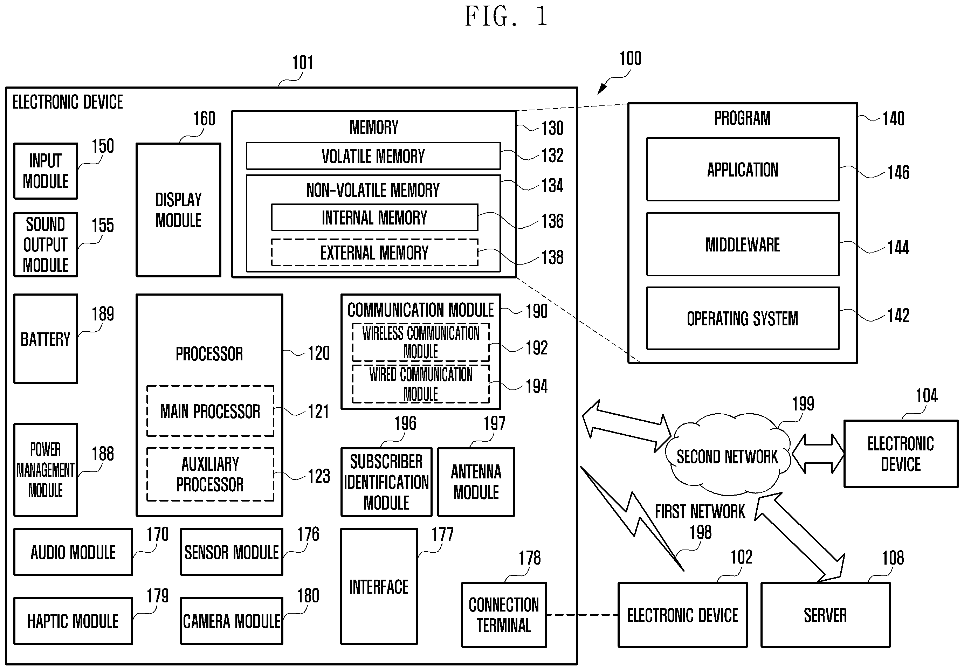

FIG. 1 is a block diagram of an electronic device 101 in a network environment 100 according to an embodiment of the disclosure.

Referring to FIG. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). The electronic device 101 may communicate with the external electronic device 104 via the server 108. The electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In some embodiments of the disclosure, at least one (e.g., the connection terminal 178) of the components may be omitted from the electronic device 101, or one or more other components may be added in the electronic device 101. In some embodiments of the disclosure, some of the components may be implemented as single integrated circuitry. For example, the sensor module 176, the camera module 180, or the antenna module 197 may be implemented as embedded in single component (e.g., the display module 160).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to an embodiment of the disclosure, the auxiliary processor 123 (e.g., a neural network processing device) may include a hardware structure specified for processing an artificial intelligence model. The artificial intelligence model may be created through machine learning. Such learning may be performed, for example, in the electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include touch circuitry (e.g., a touch sensor) adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. The interface 177 may include, for example, a high-definition multimedia interface (HDMI), a universal serial bus (USB) interface, a secure digital (SD) card interface, and/or an audio interface.

The connecting terminal 178 may include a connector via which the electronic device 101 may be physically connected with the external electronic device (e.g., the external electronic device 102). The connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, ISPs, or flashes.

The power management module 188 may manage power supplied to or consumed by the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, and/or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more CPs that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5th generation (5G) network, a next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4th generation (4G) network, and next-generation communication technology, e.g., new radio (NR) access technology. The NR access technology may support highspeed transmission of high-capacity data (i.e., enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., a mmWave band) to achieve, for example, a high data transmission rate. The wireless communication module 192 may support various technologies for securing performance in a high-frequency band, such as beamforming, massive multiple-input and multiple-output (MIMO), full-dimensional MIMO (FD-MIMO), array antenna, analog beam-forming, or large-scale antenna. The wireless communication module 192 may support various requirements specified in the electronic device 101, an external electronic device (e.g., external the electronic device 104), or a network system (e.g., the second network 199). According to an embodiment of the disclosure, the wireless communication module 192 may support a peak data rate for implementing eMBB (e.g., 20Gbps or more), loss coverage for implementing mMTC (e.g., 164dB or less), or U-plane latency for realizing URLLC (e.g., 0.5ms or less for each of downlink (DL) and uplink (UL) or 1ms or less for round trip).

The antenna module 197 may transmit or receive a signal or power to or from the outside (e.g., the external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that is disposed on or adjacent to a second surface (e.g., the top surface or the side surface) of the PCB and is capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the external electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide an ultra-low delay service using, for example, distributed computing or MEC. In another embodiment of the disclosure, the external electronic device 104 may include an internet of things (IoT) device. The server 108 may be an intelligent server using machine learning and/or neural networks. According to an embodiment of the disclosure, the external electronic device 104 or the server 108 may be included in the second network 199. The electronic device 101 may be applied to an intelligent service (e.g., smart home, smart city, smart car, or healthcare) based on 5G communication technology or IoT-related technology.

An electronic device according to an embodiment of the disclosure may be one of various types of electronic devices. The electronic devices may include a portable communication device (e.g., a smartphone), a computer device, a portable multimedia device, a portable medical device, a camera, a wearable device, or a home appliance. However, the electronic device is not limited to any of those described above.

Various embodiments of the disclosure and the terms used herein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). If an element (e.g., a first element) is referred to, with or without the term "operatively" or "communicatively," as "coupled with," "coupled to," "connected with," or "connected to" another element (e.g., a second element), the element may be coupled with the other element directly (e.g., wiredly), wirelessly, or via a third element.

The term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PLAYSTORE^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each component (e.g., a module or a program) of the above-described components may include a single entity or multiple entities. One or more of the above-described components may be omitted, or one or more other components may be added. Alternatively or additionally, a plurality of components (e.g., modules or **programs)** may be integrated into a single component. **In** such a case, the integrated component may perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

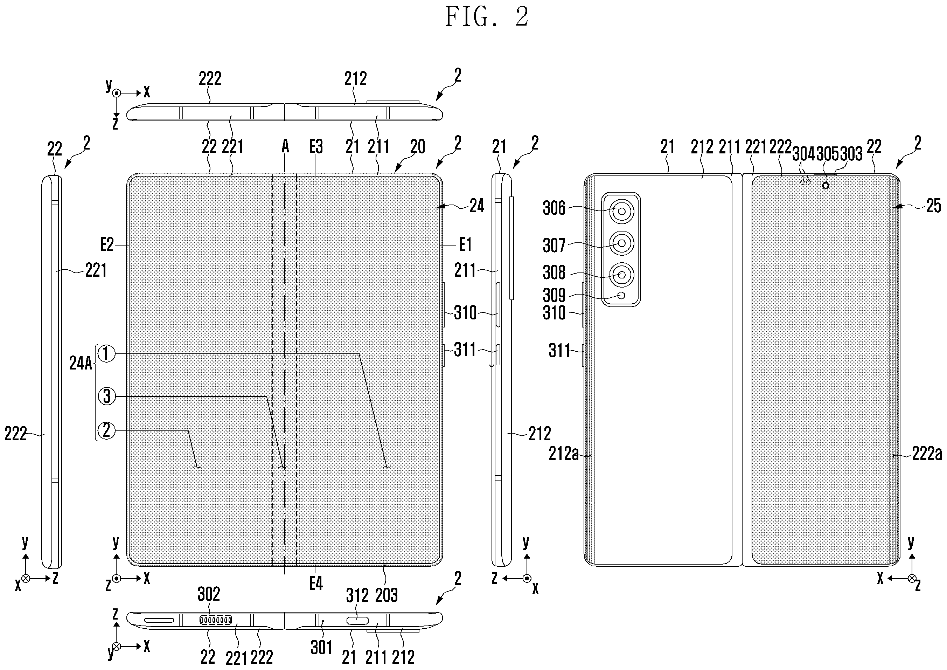

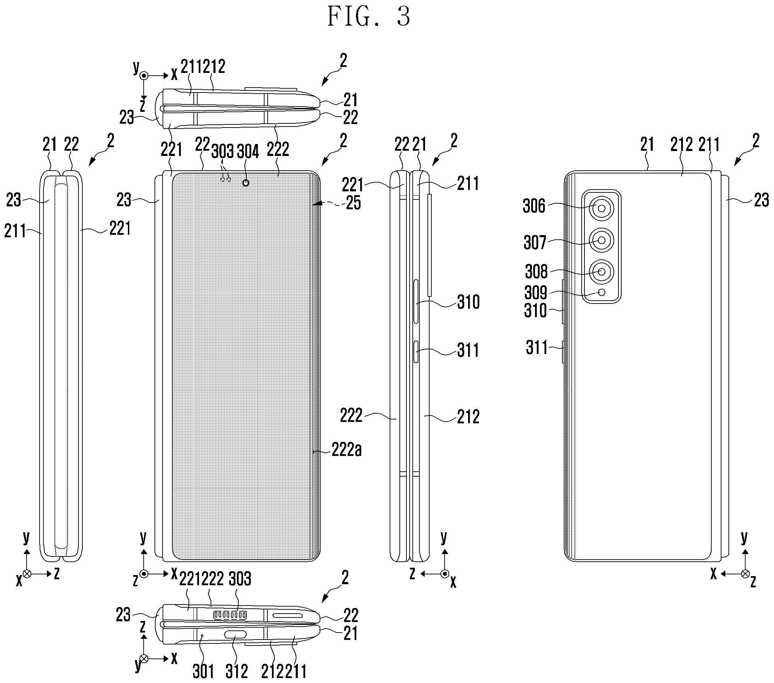

FIG. 2 shows views of a foldable electronic device 2 in an unfolded state (an unfolding state or a flat state) according to an embodiment of the disclosure. FIG. 3 shows views of a foldable electronic device 2 in a folded state (or a folding state) according to an embodiment of the disclosure.

Referring to FIGS. 2 and 3, a foldable electronic device 2 may include a foldable housing 20 and a flexible display module 24 disposed in the foldable housing 20. In various embodiments, the foldable electronic device 2 may be the electronic device 101 in FIG. 1.

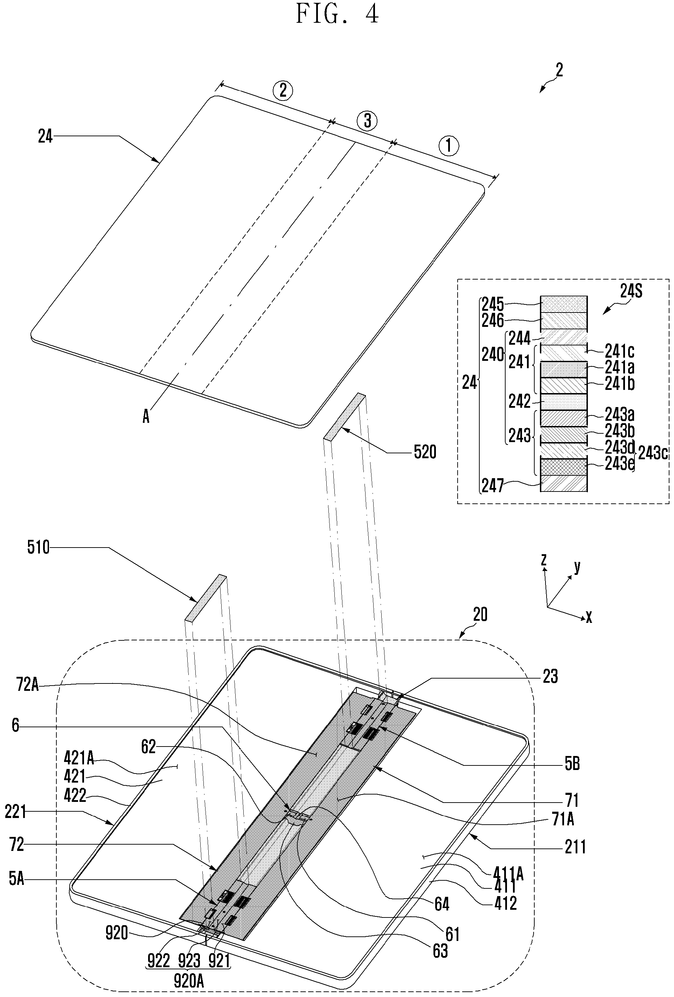

According to an embodiment, the foldable housing 20 may include a first housing (a first housing part or a first housing structure) 21, a second housing (a second housing part or a second housing structure) 22, a hinge housing 23, and/or a hinge part. The first housing 21 and the second housing 22 may be connected through the hinge part and may rotate relative to each other around the hinge part. The hinge part may include one or more hinge modules (or hinge assemblies) (e.g., the first hinge module 5A or the second hinge module 5B in FIG. 4).

According to an embodiment, a display area 24A of the flexible display module 24 may be active area of the flexible display module 24, which is capable of displaying an image, and may include a first display area (a first active area or a first screen area) ①, a second display area (a second active area or a second screen area) ②, and a third display area (a third active area or a third screen area) ③ for connecting the first display area ① and the second display area ②. The first display area ① may be positioned to correspond to the first housing 21. The second display area ② may be positioned to correspond to the second housing 22. The third display area ③ may be positioned to correspond to the hinge part. The first display area ① may be disposed in the first housing 21, and the shape of the first display area ① may be maintained by the support of the first housing 21. The second display area ② may be disposed in the second housing 22, and the shape of the second display area ② may be maintained by the support of the second housing 22. For example, the first display area ① and the second display area ② may be provided to be substantially flat. An unfolded state (see FIG. 2) of the foldable electronic device 2 may be a state in which the third display area ③ is disposed to be substantially flat. In an unfolded state of the foldable electronic device 2, the first display area ① and the second display area ② may form an angle of about 180 degrees, and the display area 24A including the first display area ①, the second display area ②, and the third display area ③ may be provided (or disposed) in a substantially flat surface shape. In an unfolded state of the foldable electronic device 2, due to the relative position between the first display area ① disposed in the first housing 21 and the second display area ② disposed in the second housing 22, the third display area ③ for connecting the first display area ① and the second display area ② may be flatly disposed. In an unfolded state of the foldable electronic device 2, the third display area ③ may be pulled from both sides thereof by the first display area ① and the second display area ②, and the pulling force may be provided to reduce damage to the third display area ③ while flatly disposing the third display area ③. In an unfolded state of the foldable electronic device 2, the third display area ③ may be pulled by the first display area ① and the second display area ② and thus be provided to have an extension width which allows the third display area to be flatly disposed while reducing stress thereof. In an unfolded state of the foldable electronic device 2, the hinge part may support the third display area ③. In an unfolded state of the foldable electronic device 2, in case that an external force (e.g., an external pressure such as a touch input using the finger of a user or a touch input using an electronic pen) is applied to the third display area ③, the hinge part may reduce a sagging phenomenon of the third display area ③ and thus contribute to that the third display area ③ is flatly maintained. In an unfolded state of the foldable electronic device 2, in case that an external impact is applied due to factors such as falling, the hinge part may be configured to reduce the influence of external impact on the third display area ③. In an unfolded state of the foldable electronic device 2, the hinge part may support the third display area ③ so that the third display area ③ is flatly disposed without sagging, thereby reducing a crease phenomenon. The illustrated coordinate axis is illustrated with reference to the first housing 21, and for example, the +z-axis direction may be interpreted as the direction in which a flat surface provided by the flat first display area ① is oriented.

According to an embodiment, the foldable electronic device 2 may be provided in an in-folding manner in which the display area 24A of the flexible display module 24 is folded inward. FIG. 3 shows a fully folded state of the foldable electronic device 2, in which the first housing 21 and the second housing 22 are arranged to be no longer close to each other. In the fully folded state of the foldable electronic device 2, the first display area ① and the second display area ② may be positioned to face each other, and the third display area ③ may be disposed in a bent shape. In the fully folded state of the foldable electronic device 2, the angle (or the angle between the first display area ① and the second display area ②) between the first housing 21 and the second housing 22 may be about 0 degrees - about 10 degrees, and the display area 24A may be substantially invisible. Although not illustrated therein, an intermediate state of the foldable electronic device 2 may be a state between an unfolded state and the fully folded state or a less folded state compared to the fully folded state. In case of an intermediate state where the angle between the first housing 21 and the second housing 22 is more than a predetermined angle, a use environment, in which there is no practical difficulty in that a user uses the display area 24A, may be provided. Hereinafter, "a folded state of the foldable electronic device 2" disclosed in the disclosure may mean a fully folded state which is compared to an intermediate state which is a less folded state.

According to an embodiment, when referring to an unfolded state (see FIG. 2) of the foldable electronic device 2, the display area 24A of the flexible display module 24 may be provided in a symmetric shape with reference to a center line A of the foldable electronic device 2. When referring to an unfolded state of the foldable electronic device 2, the center line A may correspond to the middle of a width of the third display area ③, the width extending from a first boundary between the first display area ① and the third display area ③ to a second boundary between the second display area ② and the third display area ③. In a folded state (see FIG. 3) of the foldable electronic device 2, the third display area ③ disposed in a bent shape may have a substantially symmetric shape with reference to the center line A of the foldable electronic device 2. When referring to an unfolded state of the foldable electronic device 2, the display area 24A may have a substantially rectangular shape. The display area 24A may include a first edge E1, a second edge E2, a third edge E3, and a fourth edge E4. The first edge E1 and the second edge E2 may be substantially parallel to the central line A. The third edge E3 may connect one end of the first edge E1 and one end of the second edge E2, and the fourth edge E4 may connect the other end of the first edge E1 and the other end of the second edge E2. The first display area ① may include the first edge E1, a part of the third edge E3, and a part of the fourth edge E4. The second display area ② may include the second edge E2, a part of the third edge E3, and a part of the fourth edge E4. The third display area ③ may include a part of the third edge E3 and a part of the fourth edge E4. In a folded state of the foldable electronic device 2, the first edge E1 and the second edge E2 may be aligned to overlap each other. In a folded state of the foldable electronic device 2, a part of the third edge E3, which is included in the first display area ①, and a part of the third edge E3, which is included in the second display area ② may be aligned to overlap each other. In a folded state of the foldable electronic device 2, a part of the fourth edge E4, which is included in the first display area ①, and a part of the fourth edge E4, which is included in the second display area ② may be aligned to overlap each other.

According to an embodiment, the first housing 21 may include a first frame (a first frame structure or a first framework) 211, and/or a first cover 212 disposed on the first frame 211. The first frame 211 may include a first side (a first side-surface part, a first side-surface member, a first side-surface structure, or a first side-surface bezel structure) (e.g., the first side 412 in FIG. 4). The first side may be disposed along an edge of a first display area ① of a flexible display module 24. The first side may provide a first side surface of the foldable electronic device 2, which corresponds to the first display area ① of the foldable electronic device 2. The first frame 211 may include a first support part (e.g., the first support part 411 in FIG. 4) which extends from the first side or is connected to the first side. The first display area ① may be disposed on the first support part, and the first support part may support the first display area ①. The first display area ① and the first cover 212 may be positioned at opposite sides while having the first support part of the first frame 211 interposed therebetween. The first side of the first frame 211 may be disposed to surround at least a part of a space between the first display area ① and the first cover 212. The first display area ① may provide one surface among the outer surfaces of the foldable electronic device 2, and the first cover 212 may provide the other surface among the outer surfaces of the foldable electronic device 2, the other surface being oriented in a direction substantially opposite to the first display area ①. Various electrical elements (or electronic components) such as a printed circuit board or a battery may be arranged in the first support part between the first support part of the first frame 211 and the first cover 212.

According to an embodiment, the second housing 22 may include a second frame (a second frame structure or a second framework) 221, and/or a second cover 222 disposed on the second frame 221. The second frame 221 may include a second side (a second side-surface part, a second side-surface member, a second side-surface structure, or a second side-surface bezel structure) (e.g., the second side 422 in FIG. 4). The second side may be disposed along an edge of the second display area ② of the flexible display module 24. The second side may provide a second side surface of the foldable electronic device 2, which corresponds to the second display area ② of the foldable electronic device 2. In a folded state (see FIG. 3) of the foldable electronic device 2, the first side of the first frame 211 and the second side of the second frame 221 may be aligned to overlap each other. The second frame 221 may include a second support part (e.g., the second support part 421 in FIG. 4) which extends from the second side or is connected to the second side. The second display area ② may be disposed on the second support part, and the second support part may support the second display area ②. The second display area ② and the second cover 222 may be positioned at opposite sides while having the first support part of the second frame 221 interposed therebetween. The second side of the second frame 221 may be disposed to surround at least a part of a space between the second display area ② and the second cover 222. The second display area ② may provide one surface among the outer surfaces of the foldable electronic device 2, and the second cover 222 may provide the other surface among the outer surfaces of the foldable electronic device 2, the other surface being oriented in a direction substantially opposite to the second display area ②. Various electrical elements (or electronic components) such as a printed circuit board or a battery may be arranged on the second support part between the second support part of the second frame 221 and the second cover 222.

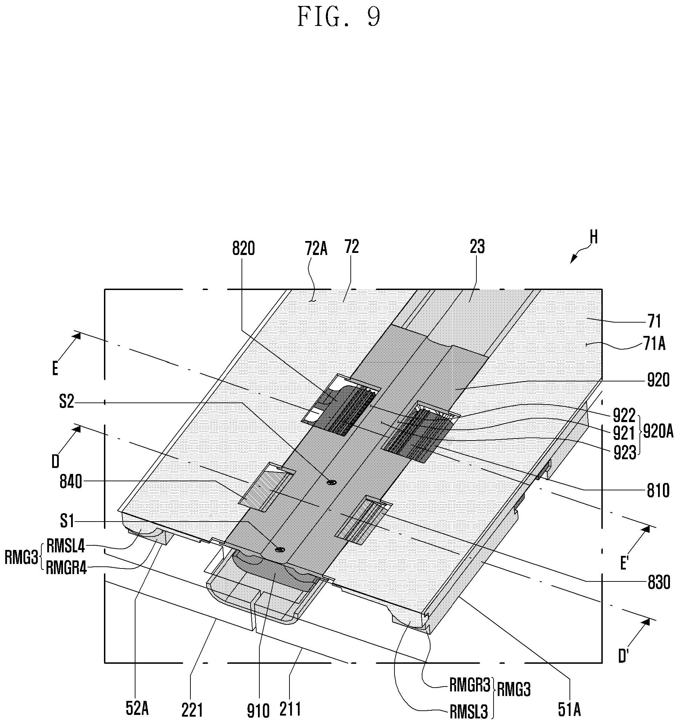

According to an embodiment, the hinge housing (or a hinge cover) 23 may be coupled to a hinge part (e.g., the hinge part H in FIG. 9) for connecting the first frame 211 and the second frame 221. When the foldable electronic device 2 is switched from an unfolded state (see FIG. 2) to a folded state (see FIG. 3), due to a change in the relative position between the first housing 21 and the second housing 22 connected to each other through the hinge part, and a state change of the hinge part coupled to the hinge housing 23, the gap between the first housing 21 and the second housing 22 is opened at the side opposite to the third display area ③, and thus the hinge housing 23 may be exposed to the outside through the open gap. In a folded state of the foldable electronic device 2, the hinge housing 23 may be a part of the exterior, which covers the inside of the foldable electronic device 2 exposed through the open gap between the first housing 21 and the second housing 22. The hinge housing 23 may be more exposed in the folded state in FIG. 3 than in an intermediate state. When the foldable electronic device 2 is switched from a folded state to an unfolded state, due to a change in the relative position between the first housing 21 and the second housing 22 connected to each other through the hinge part, and a state change of the hinge part coupled to the hinge housing 23, the gap between the first housing 21 and the second housing 22 is closed at the side opposite to the third display area ③, and the hinge housing 23 may be positioned in an inner space formed by a combination of the first housing 21 and the second housing 22 and thus may not be exposed to the outside.

According to an embodiment, the foldable electronic device 2 may include a display 25 positioned between the second frame 221 and the second cover 222. A flexible display included in the flexible display module 24 may be interpreted as a "first display", and the display 25 may be interpreted as a "second display". The second cover 222 may be substantially transparent, and the display 25 may be visible through the second cover 222. The foldable electronic device 2 may be configured to display an image through the display 25 in place of the flexible display module 24 in a folded state.

According to an embodiment, the first cover 212 may include a first curved-surface area 212a which is bent and seamlessly extends toward the first display area ① to correspond to the first edge E1 of the display area 24A. The second cover 222 may include a second curved-surface area 222a which is bent and seamlessly extends toward the second display area ② to correspond to the second edge E2 of the display area 24A. In an unfolded state (see FIG. 2) or a folded state (see FIG. 3) of the foldable electronic device 2, the first curved-surface area 212a and the second curved-surface area 222a may be provided symmetrically to each other at opposite sides, and may contribute to a beautiful outer appearance thereof. In an embodiment, the display 25 may be a flexible display which can be disposed to be bent to correspond to the second curved-surface area 222a of the second cover 222. In various embodiments, the first cover 212 may be provided to be substantially flat without the first curved-surface area 212a. In various embodiments, the second cover 222 may be provided to be substantially flat without the second curved-surface area 222a. In this case, the display 25 may be a substantially rigid display.

According to an embodiment, the foldable electronic device 2 may include at least one of one or more audio modules (e.g., the audio module 170 in FIG. 1), one or more sensor modules (e.g., the sensor module 176 in FIG. 1), one or more camera modules (e.g., the camera module 180 in FIG, 1), one or more light emitting modules, one or more input modules (e.g., the input module 150 in FIG, 1), and/or one or more connection terminal modules (e.g., the interface 177 or the connection terminal 178 in FIG. 1). In various embodiments, at least one of the elements may be omitted from the foldable electronic device 2, and other elements may be additionally included therein. The position or the number of elements included in the foldable electronic device 2 is not limited to the illustrated example, and may be various.

For example, any one of the one or more audio modules may include a microphone positioned inside the foldable electronic device 2 to correspond to a microphone hole 301 provided on the exterior of the foldable electronic device 2. In the illustrated example, the microphone hole 301 may be provided through the first side of the first frame 211, and the microphone may be positioned in the inner space of the first housing 21. The position or the number of microphones and microphone holes is not limited to the illustrated example, and may be various. In various embodiments, the foldable electronic device 2 may include multiple microphones used to detect the direction of sound.

For example, any one of the one or more audio modules may include a first speaker for multimedia playback (or record playback) positioned inside the foldable electronic device 2 to correspond to a first speaker hole 302 provided through the exterior of the foldable electronic device 2. In the illustrated example, the first speaker hole 302 may be provided through the second side of the second frame 221, and the first speaker may be positioned in the inner space of the second housing 22. For example, any one of the one or more audio modules may include a second speaker (e.g., a receiver for phone calling) positioned inside the foldable electronic device 2 to correspond to a second speaker hole (e.g., a receiver hole) 303 provided through the exterior of the foldable electronic device 2. In the illustrated example, the second speaker hole 303 may be provided through the second frame 221 to be adjacent to the second cover 222, and the second speaker may be positioned in the inner space of the second housing 22. The position or the number of speakers and speaker holes is not limited to the illustrated example, and may be various. In various embodiments, the microphone hole and the speaker hole may be implemented as a single hole. In various embodiments, a piezo speaker, in which a speaker hole is omitted, may be provided.

For example, the one or more sensor modules may generate an electrical signal or a data value corresponding to an internal operation state of the foldable electronic device 2 or an external environmental state. In an embodiment, any one of the one or more sensor modules may include an optical sensor 304 positioned in the inner space of the second housing 22 to correspond to the second cover 212. The optical sensor 304 may be positioned to be aligned with an opening provided through the display 25 or may be at least partially inserted into the opening. External light may reach the optical sensor through the second cover 222 and the opening provided through the display 25. For example, the optical sensor 304 may include a proximity sensor or an illuminance sensor. The number or the position of optical sensors is not limited to the illustrated example, and may be various.

According to various embodiments, when viewed from above the second cover 222, the optical sensor 304 may be positioned in the inner space of the second housing 22 to at least partially overlap a display area of the display 25. In this case, a sensing function of the optical sensor 304 may be performed while the optical sensor 304 or the position of the optical sensor 304 is not visually distinguished (or exposed) or is invisible. In an embodiment, the optical sensor 304 may be positioned on the rear surface of the display 25 or below or beneath the display 25, and the optical sensor 304 or the position of the optical sensor 304 may not be visually distinguished (or exposed). In various embodiments, the optical sensor 304 may be positioned to be aligned with a recess provided on the rear surface of the display 25 or may be at least partially inserted into the recess. A partial area of the display 25, which is at least partially overlapped with the optical sensor 304, may include a different pixel structure and/or wire structure compared to other areas. For example, a partial area of the display 25, which is at least partially overlapped with the optical sensor 304, may have a different pixel density compared to other areas. A pixel structure and/or a wire structure formed in a partial area, which is at least partially overlapped with the optical sensor 304, of the display 25 may reduce light loss between the outside and the optical sensor 304. For another example, multiple pixels may not be arranged in a partial area of the display 25, which is at least partially overlapped with the optical sensor 304.

According to various embodiments, the disclosure is not limited to the optical sensor 304 such as a proximity sensor or an illuminance sensor, and various other sensors may be positioned to correspond to the opening provided through the display 25 or may be positioned on the rear surface the display 25 or below the display 25. For example, an optical type, a capacitive type, or an ultrasonic type biometric sensor (e.g., fingerprint sensor) may be positioned to correspond to the opening provided through the display 25, or be positioned on the rear surface of the display 25 or below the display 25.

According to various embodiments, various sensors may be positioned to correspond to openings provided through the flexible display module 24, or be positioned on the rear surface the flexible display module 24 or below the flexible display module 24.

According to various embodiments, the foldable electronic device 2 may include various other sensors (e.g., a gesture sensor, a gyro sensor, a barometric pressure sensor, a magnetic sensor, an acceleration sensor, a grip sensor, a color sensor, an infrared (IR) sensor, a temperature sensor, or a humidity sensor) in addition thereto, and the positions thereof may be various.

According to an embodiment, the one or more camera modules may include one lens or multiple lenses, an image sensor, and/or an image signal processor. For example, the one or more camera modules may include a first camera module 305, a second camera module 306, a third camera module 307, and/or a fourth camera module 308.

According to an embodiment, the first camera module 305 may be positioned in the inner space of the second housing 22 to correspond to the second cover 222. The first camera module 305 may be positioned to be aligned with an opening provided through the display 25, or may be at least partially inserted into the opening. External light may reach the first camera module 305 through openings of the second cover 222 and the display 25. The opening of the display 25, which is aligned or overlapped with the first camera module 305, may be provided in a through-hole shape as the illustrated example. In various embodiments, the opening of the display 25, which is aligned or overlapped with the first camera module 305, may be provided in a notch shape.

According to various embodiments, when viewed from above the second cover 222, the first camera module 305 may be positioned in the inner space of the second housing 22 to at least partially overlap the display area of the display 25. In this case, the photographing function of the first camera module 305 may be performed while the first camera module 305 or the position of the first camera module 305 is not visually distinguished (or exposed) or is invisible. In an embodiment, the first camera module 305 may be positioned on the rear surface of the display 25 or below or beneath the display 25, and the first camera module 305 or the position of the first camera module 305 may not be visually distinguished (or exposed) or may be invisible. In various embodiments, the first camera module 305 may be positioned to be aligned with a recess provided on the rear surface of the display 25 or may be at least partially inserted into the recess. For example, the first camera module 305 may include a hidden display rear camera (e.g., an under display camera (UDC)). A partial area of the display 25, which is at least partially overlapped with the first camera module 305, may include a different pixel structure and/or wire structure compared to other areas. For example, a partial area of the display 25, which is at least partially overlapped with the first camera module 305, may have a different pixel density compared to other areas. A pixel structure and/or wire structure formed in a partial area, which is at least partially overlapped with the first camera module 305, of the display 25 may reduce light loss between the outside and the optical sensor. For another example, multiple pixels may not be arranged in a partial area of the display 25, which is at least partially overlapped with the first camera module 305.

According to an embodiment, the second camera module 306, the third camera module 307, or the fourth camera module 308 may be positioned in the inner space of the first housing 21 to correspond to the first cover 212. The first cover 212 may include a camera cover part (e.g., a camera decoration part) disposed to correspond to the second camera module 306, the third camera module 307, and the fourth camera module 308. The camera cover part may include a camera hole (or a light transmitting area) provided to correspond to the second camera module 306, a camera hole (or a light transmitting area) provided to correspond to the third camera module 307, and a camera hole (or a light transmitting area) provided to correspond to the fourth camera module 308. The number or the position of camera modules provided to correspond to the first cover 212 is not limited to the illustrated example, and may be various. The second camera module 306, the third camera module 307, and the fourth camera module 308 may have different attributes (e.g., angles of view) or functions. The second camera module 306, the third camera module 307, and the fourth camera module 308 may provide different angles of view (or lenses having different angles of view), and the foldable electronic device 2 may selectively use a corresponding camera module, based on a user selection related to an angle of view. Any one of the second camera module 306, the third camera module 307, and the fourth camera module 308 may include a wide-angle camera module, a telephoto camera module, a color camera module, a monochrome camera module, or an infrared (IR) camera (e.g., a time of flight (TOF) camera or a structured light camera) module. In various embodiments, the IR camera module may also operate as at least a part of a sensor module.

According to an embodiment, any one of the one or more light emitting modules may include a flash 309 positioned in the inner space of the first housing 21 to correspond to a flash hole (or light transmitting area) provided in a camera cover part of the first cover 212. The flash 309 may include a light source for the second camera module 306, the third camera module 307, and/or the fourth camera module 308. For example, the flash 309 may include a light-emitting diode (LED) or a xenon lamp.

According to various embodiments, any one light emitting module (e.g., a LED, an IR LED, or a xenon lamp) of the one or more light emitting modules may be configured to provide state information of the foldable electronic device 2 in the form of light. In various embodiments, the light emitting module may provide a light source operating in association with an operation of the first camera module 305.

According to an embodiment, the one or more input modules may include a first key input device 310 or a second key input device 311. In the illustrated example, the first key input device 310 or the second key input device 311 may be positioned in an opening provided through the first side of the first frame 211. The position or the number of input modules is not limited to the illustrated example, and may be various. In various embodiments, the foldable electronic device 2 may not include some or all of the key input devices, and a key input device not included therein may be implemented as a soft key through the flexible display module 24 or the display 25. In various embodiments, each of the input modules or each of the key input devices may include at least one sensor module.

For example, any one of the one or more connection terminal modules (connector modules or interface terminal modules) may include a connector (or an interface terminal) positioned inside the foldable electronic device 2 to correspond to a connector hole 312 formed through the exterior of the foldable electronic device 2. In the illustrated example, the connector hole 312 may be provided through the first side of the first frame 211. The position or the number of connection terminal modules is not limited to the illustrated example, and may be various. The foldable electronic device 2 may transmit and/or receive power and/or data to and/or from an external electronic device electrically connected to the connector. In an embodiment, the connector may include a USB connector or an HDMI connector. In various embodiments, any one of the one or more connection terminal modules may include an audio connector (e.g., a headphone connector or an earset connector) and a connector hole provided through the exterior of the foldable electronic device 2 to correspond to the audio connector. In various embodiments, any one of the one or more connection terminal modules may include a memory card connector positioned inside the foldable electronic device 2, and a connector hole formed through the exterior of the foldable electronic device 2 to correspond to the memory card connector.

According to various embodiments, the foldable electronic device 2 may include an attachable/detachable pen input device (e.g., an electronic pen, a digital pen, or a stylus pen) (not shown). For example, the pen input device may be implemented to be insertable into the inner space of the first housing 21 or the second housing 22. For another example, the pen input device may be attachable to or detachable from the hinge housing 23. The hinge housing 23 may include a recess, and the pen input device may be fitted into the recess.

The foldable electronic device 2 may further include various elements according to a provision form thereof. Such elements may be variously changed according to the convergence trend of the foldable electronic device 2, and thus may not be enumerated. However, elements equivalent to the mentioned elements may be additionally included in the foldable electronic device 2. In various embodiments, according to the provision form thereof, specific elements may also be excluded from the above-described elements, or may also be replaced with other elements.

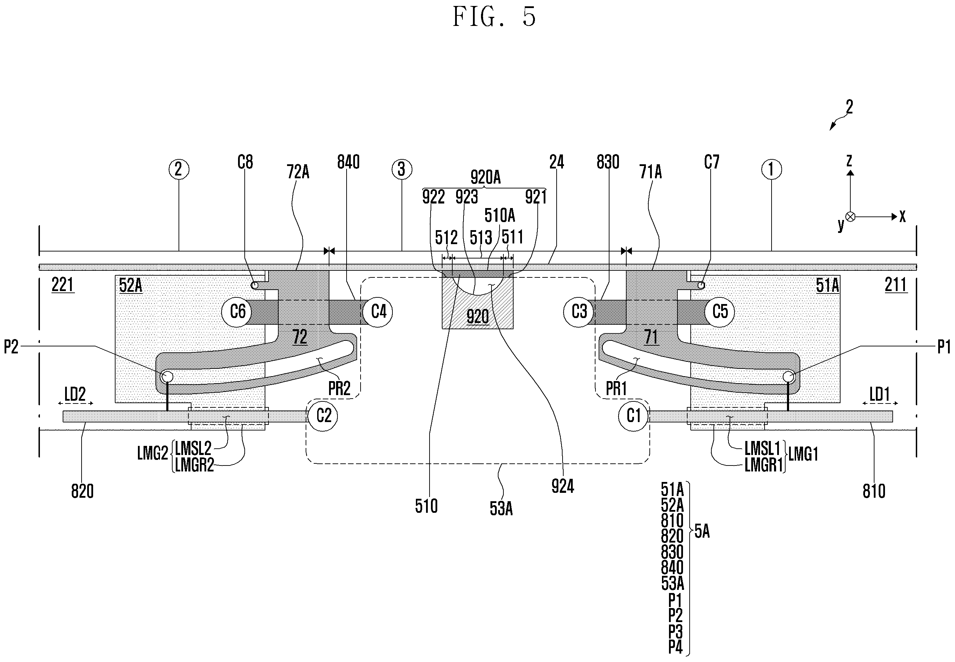

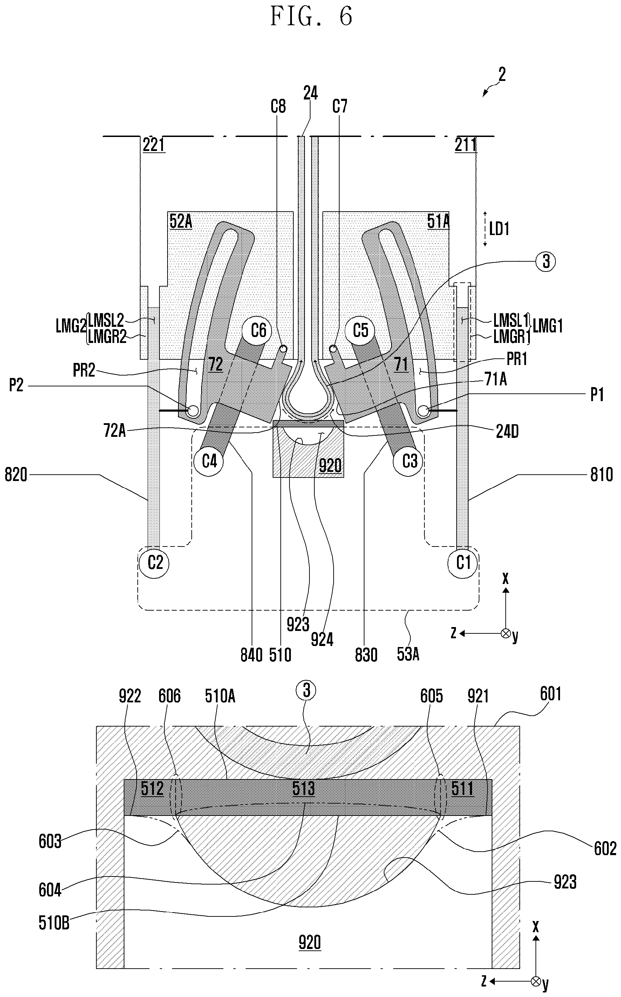

FIG. 4 is an exploded perspective view of a foldable electronic device 2 in an unfolded state according to an embodiment of the disclosure. FIG. 5 is a cross-sectional view showing a foldable electronic device 2 in an unfolded state according to an embodiment of the disclosure. FIG. 6 shows a cross-sectional view of a foldable electronic device 2 in a folded state according to an embodiment of the disclosure and a partially enlarged view 601 of the cross-sectional view.

Referring to FIGS. 4, 5, and 6, the foldable electronic device 2 may include a flexible display module 24, a foldable housing 20, a first flexible film (a first flexible sheet, a first elastic film, or a first elastic sheet) 510, and/or a second flexible film (a second flexible sheet, a second elastic film, or a second elastic sheet) 520.

According to an embodiment, the foldable housing 20 may include a first frame 211, a second frame 221, a first hinge module (or a first hinge assembly) 5A, a second hinge module (or a second hinge assembly) 5B, a guide rail assembly 6, a hinge housing 23, a first plate 71, and/or a second plate 72.

According to an embodiment, the first frame 211 may include a first support part 411 and a first side 412. The first frame 211 may be provided in an integrated form including the first support part 411 and the first side 412. The first support part 411 may be an inner structure positioned inside the foldable electronic device 2 to correspond to the first housing 21, and in various embodiments, may be referred to as various other terms such as a "first bracket", a "first support body", a "first support member", or a "first support structure". The second frame 221 may include a second support part 421 and a second side 422. The second frame 221 may be provided in an integrated form including the second support part 421 and the second side 422. The second support part 421 may be an internal structure positioned inside the foldable electronic device 2 to correspond to the second housing 22, and in various embodiments, may be referred to as various other terms such as a "second bracket", a "second support body", a "second support member", or a "second support structure". At least a part of the first frame 211 and/or at least a part of the second frame 221 may be formed of a metal material and/or a non-metal material (e.g., a polymer). Electrical elements (or electronic components) or various members related to electrical elements may be arranged in the first frame 211 or first support part 411, and may be supported by the first frame 211 or the first support part 411. For example, the first support part 411 may include a first support area 411A facing the first display area ①, and a third support area (not shown) oriented in a direction substantially opposite to the first support area 411A. The first display area ① of the flexible display module 24 may be disposed in the first support area 411A of the first support part 411. Various elements such as a printed circuit board or a battery may be disposed in the third support area. For example, the second support part 421 may include a second support area 421A facing the second display area ②, and a fourth support area (not shown) oriented in a direction substantially opposite to the second support area 421A. The second display area ② of the flexible display module 24 may be disposed in the second support area 421A of the second support part 421. Various elements such as a printed circuit board or a battery may be disposed in the fourth support area. The first display area ① may be disposed in the first support part 411 and the second display area ② may be disposed in the second support part 421, through various bonding materials (or adhesive materials) such as a heat-reactive bonding material (or a heat-reactive adhesive material), a light-reactive bonding material (or a light-reactive adhesive material), a general bonding agent (or a general adhesive agent), and/or a double-sided tape.

According to an embodiment, the "hinge part" mentioned in the description referring to FIGS. 2 and 3 may include a first hinge module 5A, a second hinge module 5B, a guide rail assembly 6, a first plate 71, a second plate 72, and/or a hinge housing 23. The hinge part may support the third display area ③ of the flexible display module 24 in an unfolded state of the foldable electronic device 2.

According to various embodiments, the foldable electronic device 2 may include a first inner support body (not shown) positioned in the inner space of the first housing 21 (see FIG. 2) to correspond to the first cover 212 (see FIG. 2) (or to face the first cover 212). For example, the first inner support body may cover and protect an element, such as a printed circuit board or a battery, disposed between the first support part 411 and the first cover 212. In various embodiments, the first inner support body may include a non-metal material, and a conductive pattern used as an antenna radiator may be disposed in the first inner support body. The first frame 211 may be referred to as a "first front case", and the first inner support body may be referred to as a "first rear case".

According to various embodiments, the foldable electronic device 2 may include a second inner support body (not shown) positioned in the inner space of the second housing 22 (see FIG. 2) to correspond to the second cover 222 (see FIG. 2) (or to face the second cover 222). For example, the second inner support body may cover and protect an element, such as a printed circuit board or a battery, disposed between the second support part 421 and the second cover 222. The second frame 221 may be referred to as a "second front case", and the second inner support body may be referred to as a "second rear case".

According to an embodiment, referring to the cross-sectional view 24S of the flexible display module 24, the flexible display module 24 may include a flexible display 240, a transparent cover 245, an optical transparent bonding member (or an optical transparent adhesive member) 246, and/or a support sheet 247. The flexible display 240 may be coupled to the transparent cover 245 through the optical transparent bonding member 246 (e.g., optical clear adhesive (OCA), optical clear resin (OCR), or super view resin (SVR)). The transparent cover 245 (e.g., a window) may cover the flexible display 240 to protect the flexible display 240 from the outside. The transparent cover 245 may be provided to have a thin film shape (e.g., a thin film layer) having flexibility. For example, the transparent cover 245 may include a plastic film (e.g., a polyimide (PI) film) or thin film glass (e.g., ultra-thin glass (UTG)). In various embodiments, the transparent cover 245 may include multiple layers. For example, the transparent cover 245 may be a shape in which various coating layers are arranged on a plastic film or thin film glass. For example, the transparent cover 245 may be a shape in which at least one protective layer or coating layer including a polymer material (e.g., polyester (PET), polyimide (PI), or thermoplastic polyurethane (TPU)) is disposed on a plastic film or thin film glass. In various embodiments, the transparent cover 245 and the optical transparent bonding member 246 may be defined or interpreted as a part of the flexible display 240. In various embodiments, the transparent cover 246 may be interpreted as a part of the foldable housing 20 (see FIG. 2) rather than the flexible display module 24. For example, the flexible display 240 may include a display panel 241, a base film 242, a lower panel 243, and/or an optical layer 244. The display panel 241 may be positioned between the optical layer 244 and the base film 242. The base film 242 may be positioned between the display panel 241 and the lower panel 243. The optical layer 244 may be positioned between the optical transparent bonding member 246 and the display panel 241. Various polymer bonding materials (or bonding members) or adhesive materials (or adhesive members) may be arranged between the display panel 241 and the base film 242, between the base film 242 and the lower panel 243, and/or between the display panel 241 and the optical layer 244. For example, the display panel 241 may include a light emitting layer 241a, a thin film transistor (TFT) film (or a TFT substrate) 241b, and/or an encapsulation layer (e.g., a thin-film encapsulation (TFE)) 241c. For example, the light emitting layer 241a may include multiple pixels implemented by a light emitting element such as an organic light emitting diode (OLED) or a micro LED. The light emitting layer 241a may be disposed on the TFT film 241b through organic evaporation. The TFT film 241b may be positioned between the light emitting layer 241a and the base film 242. The TFT film 241b may indicate a film structure in which at least one TFT is disposed on a flexible substrate (e.g., a PI film) through a series of processes such as deposition, patterning, and/or etching. The at least one TFT may control a current for a light emitting element of the light emitting layer 241a so as to adjust ON or OFF of a pixel, or brightness of a pixel. For example, the at least one TFT may be implemented with an amorphous silicon (a-Si) TFT, a liquid crystalline polymer (LCP) TFT, a low-temperature polycrystalline oxide (LTPO) TFT, or a low-temperature polycrystalline silicon (LTPS) TFT. In an embodiment, the display panel 241 may include a storage capacitor, and the storage capacitor may maintain a voltage signal to a pixel, may maintain voltage applied to a pixel within one frame, or may reduce a gate voltage change caused by leakage current during light-emitting time. The storage capacitor may maintain voltage applied to a pixel at predetermined time interval by a routine (e.g., initialization or data write) for controlling the at least one TFT. In an embodiment, the display panel 241 may be implemented based on an OLED, and the encapsulation layer 241c may cover the light emitting layer 241a. An organic material for emitting light in an OLED and an electrode may react very sensitively to oxygen and/or moisture, and thus may lose the light emitting property thereof. In order to reduce or prevent same, the encapsulation layer 241c may seal the light emitting layer 241a to prevent oxygen and/or moisture from permeating into the OLED. The base film 242 may include a flexible film formed of plastic or polymer such as polyimide or polyester (PET). The base film 242 may function to support and protect the display panel 241. In various embodiments, the base film 242 may be referred to as a "protective film", a "back film, or a "back plate". The lower panel 243 may include multiple layers for various functions. Various polymer bonding members (adhesive members) (not shown) may be arranged between multiple layers included in the lower panel 243. For example, the lower panel 243 may include a light blocking layer 243a, a buffer layer 243b, and/or a lower layer 243c. The light blocking layer 243a may be positioned between the base film 242 and the buffer layer 243b. The buffer layer 243b may be positioned between the light blocking layer 243a and the lower layer 243c. The light blocking layer 243a may block at least a part of light having been incident from the outside. For example, the light blocking layer 243a may include an embossed layer. The embossed layer may be a black layer including a bumpy pattern. The buffer layer 243b may relieve external impact applied to the flexible display 240. For example, the buffer layer 243b may include a sponge layer or a cushion layer. The lower layer 243c may disperse, diffuse, or dissipate heat generated in the foldable electronic device 2 or the flexible display 240. The lower layer 243c may absorb or shield electromagnetic waves. The lower layer 243c may relieve external impact applied to the foldable electronic device 2 or the flexible display 240. For example, the lower layer 243c may include a composite sheet 243d or a copper sheet 243e. In an embodiment, the composite sheet 243d may be a sheet formed by combining and processing sheets or layers having different properties. For example, the composite sheet 243d may include at least one of polyimide or graphite. The composite sheet 243d may also be replaced with a single sheet including one material (e.g., polyimide or graphite). The composite sheet 243d may be positioned between the buffer layer 243b and the copper sheet 243e. The copper sheet 243e may be replaced with various other metal sheets. In some embodiments, at least a part of the lower layer 243c may be a conductive member (e.g., a metal plate), may help to reinforce rigidity of the foldable electronic device 2, and may be used to shield ambient noise and dissipate heat emitted from a heat dissipation component (e.g., a display drive circuit) (e.g., a display drive integrated circuit (DDI)) therearound. For example, the conductive member may include at least one of copper (CU), aluminum (Al), stainless steel (SUS), or a CLAD (e.g., a lamination member in which SUS and Al are alternately arranged). The lower layer 243c may include various layers for various other functions. In various embodiments (not shown), at least one additional polymer layer (e.g., a layer including PI, PET, or TPU) may also be further disposed on the rear surface of the display panel 241 in addition to the base film 242. In various embodiments, at least one of multiple layers (e.g., the light blocking layer 243a, the buffer layer 243b, the composite sheet 243d, and the copper sheet 243e) included in the lower panel 243 may also be omitted. In various embodiments, the arrangement order of the multiple layers included in the lower panel 243 is not limited to the illustrated embodiment, and may be variously changed. For example, the optical layer 244 may include a polarizing layer (or a polarizer) or a retardation layer (or a retarder). The polarizing layer and the retardation layer may improve outdoor visibility of a screen. For example, the optical layer 244 may selectively transmit light which is generated from a light source of the display panel 241 and vibrates in a predetermined direction. In various embodiments, one layer, in which the polarizing layer and the phase retardation layer are combined, may be provided, and such layer may be interpreted as a "circular polarizing layer". The optical transparent adhesive member 246 may be positioned between the transparent cover 245 and the optical layer 244. In various embodiments, the polarizing layer (or a circular polarizing layer) may be omitted, and in this case, a black pixel define layer (PDL) and/or a color filter may be provided to replace the polarizing layer. The foldable electronic device 2 may include a touch detection circuit (e.g., a touch sensor) (not shown). The touch detection circuit may be implemented with a transparent conductive layer (or film) based on various conductive materials such as indium tin oxide (ITO). In an embodiment, the touch detection circuit may be disposed between the transparent cover 245 and the optical layer 244 (e.g., an add-on type). In another embodiment, the touch detection circuit may be disposed between the optical layer 244 and the display panel 241 (e.g., an on-cell type). In another embodiment, the display panel 241 may include a touch detection circuit or a touch detection function (e.g., an in-cell type). In various embodiments, the display panel 241 may be based on an OLED, and may include the encapsulation layer 241c positioned between the light emitting layer 241a and the optical layer 244. The encapsulation layer 241c may perform a function of a pixel protective layer for protecting multiple pixels of the light emitting layer 241a. In an embodiment (not shown), the flexible display 240 may include a conductive pattern, such as a metal mesh (e.g., an aluminum metal mesh), as a touch detection circuit disposed on the encapsulation layer 241c, between the encapsulation layer 241c and the optical layer 244. For example, in accordance with the bending of the flexible display 240, the metal mesh may have durability greater than a transparent conductive layer implemented with an ITO. In various embodiments, the flexible display 240 may further include a pressure sensor (not shown) capable of measuring the intensity (pressure) of a touch. Multiple layers included in the display panel 241 or the lower panel 243, the lamination structure thereof or the lamination order thereof may be various. The flexible display 240, according to the type of provision or the trend of convergence, may be implemented by omitting a part of elements or adding other elements.

According to an embodiment, the support sheet (a support plate or a support layer) 247 may be disposed on the rear surface of the flexible display 240. The rear surface of the flexible display 240 may be a surface positioned at the side opposite to the surface onto which light is emitted from a display panel 241 including multiple pixels. The support sheet 247 may cover at least a part of the lower panel 243 of the flexible display 240 and may be disposed (e.g., attached) on the rear surface of the lower panel 243. The support sheet 247 may be coupled to the lower panel 243 through a bonding material or an adhesive material. For example, a bonding material (or an adhesive material) between the flexible display 240 and the support sheet 247 may include a heat-reactive bonding material (or a heat-reactive adhesive material), a light-reactive bonding material (or a light-reactive adhesive material), a general bonding agent (or a general adhesive agent), or a double-sided tape. For another example, a bonding material (or an adhesive material) may include various polymers such as triazine thiol, dithio pyrimidine, or silane-based compounds, or an organic bonding material (or an organic adhesive material) such as a sealant. The support sheet 247 may contribute to durability (e.g., rigidity reinforcement) of the flexible display module 24. The support sheet 247 may reduce the influence of load or stress, which may occur during folding of the foldable housing 20 (see FIG. 2), on the flexible display module 24 (or the flexible display 240). The support sheet 247 may reduce or prevent damage of the flexible display module 24 by the force transmitted when the foldable housing 20 is folded. In an embodiment, the support sheet 247 may include a metal material. For example, the support sheet 247 may include stainless steel. The support sheet 247 may include various other metal materials. In various embodiments, the support sheet 247 may include engineering plastic.

According to an embodiment, the support sheet 247 may include a lattice structure (not shown) which at least partially overlaps the third display area ③ of the flexible display module 24. For example, the lattice structure may include multiple openings (or slits) provided through (or on) the support sheet 247. The lattice structure may indicate a pattern structure in which multiple openings are regularly arranged. The multiple openings may be periodically formed, may have a substantially identical shape, and may be repeatedly arranged at a predetermined interval. The lattice structure may prevent the flexibility of the third display area ③ from being degraded. In various embodiments, the lattice structure including multiple openings may be referred to as other terms such as an "opening pattern", a "hole pattern", or a "lattice pattern". In various embodiments, the support sheet 247 may include a recess pattern (not shown) including multiple recesses in place of the lattice structure. For example, the recess pattern may mean a pattern structure in which multiple recesses having recessed shapes are regularly arranged, the multiple recesses being provided on a first surface of the support sheet 247, which faces the lower panel 243 of the flexible display 240, or on a second surface of the support sheet 247, which is positioned at the side opposite to the first surface. In various embodiments, the lattice structure or the recess pattern may extend to a portion of the support sheet 247, which corresponds to the first display area ① and/or the second display area ② of the flexible display module 24. In various embodiments, the support sheet 247 including a lattice structure or a recess pattern, or a conductive member corresponding thereto may also be provided as multiple layers.

According to various embodiments, the support sheet 247 may reduce electromagnetic interference (EMI) on the flexible display 240.

According to various embodiments, the support sheet 247 may diffuse or spread heat emitted from a heat dissipation component (e.g., a display drive integrated circuit (DDI) or a display drive circuit such as a DDI chip).

According to various embodiments, the support sheet 247 may be omitted.

According to various embodiments, the support sheet 247 may be interpreted as a separate element from the flexible display module 24.

According to an embodiment, the first hinge module 5A, the second hinge module 5B, and the guide rail assembly 6 may connect the first frame 211 and the second frame 221. The first frame 211 and the second frame 221 may be rotatably connected to each other through the first hinge module 5A, the second hinge module 5B, and the guide rail assembly 6. The first hinge module 5A, the second hinge module 5B, and the guide rail assembly 6 may be arranged along the center line A of the foldable electronic device 2, and the guide rail assembly 6 may be positioned between the first hinge module 5A and the second hinge module 5B. In an embodiment, the guide rail assembly 6 may be positioned to correspond to the center (e.g., a point on the center line A, which is positioned substantially the same distance as the distances from the first hinge module 5A and second hinge module 5B) between the first hinge module 5A and the second hinge module 5B.

According to an embodiment, the first hinge module 5A may include a first bracket 51A, a second bracket 52A, and/or a bracket connection part. The first bracket 51A may be disposed in or coupled to the first support area 411A of the first frame 211 through screw fastening. For screw fastening, the first bracket 51A may include one or more screw holes, and the first support area 411A may include one or more screw fastening parts aligned in one-to-one correspondence with the one or more screw holes of the first bracket 51A. Each of the screw fastening parts may be a boss including a female thread corresponding to the male thread of a screw. The first bracket 51A of the first hinge module 5A and the first support area 411A of the first frame 211 may be provided in shapes of being fitted to each other so as to be stably coupled to each other. The second bracket 52A may be disposed in or coupled to the second support area 421A of the second frame 221 through screw fastening. For screw fastening, the second bracket 52A may include one or more screw holes, and the second support area 421A may include one or more screw fastening parts aligned in one-to-one correspondence with the one or more screw holes of the second bracket 52A. The second bracket 52A of the first hinge module 5A and the second support area 421A of the second frame 221 may be provided in shapes of being fitted to each other so as to be stably coupled to each other. The bracket connection part may connect the first bracket 51A and the second bracket 52A. The first bracket 51A and the second bracket 52A may be rotatable relative to the bracket connection part.

According to an embodiment, the bracket connection part of the first hinge module 5A may be configured such that the first frame 211, to which the first bracket 51A is fixed, and the second frame 221, to which the second bracket 52A is fixed, are rotatable in directions opposite to each other at the same angle. The bracket connection part may be configured such that the first frame 211, to which the first bracket 51A is fixed, and the second frame 221, to which the second bracket 52A is fixed, are rotated at at least one designated angle and then maintained. For example, the bracket connection part may have a free-stop function. The bracket connection part may be configured such that the first frame 211, to which the first bracket 51A is fixed, and the second frame 221, to which the second bracket 52A is fixed, provide a force enabling mutual rotation therebetween.

The second hinge module 5B may be provided substantially identically to the first hinge module 5A, and for example, may include a first bracket, a second bracket, and/or a bracket connection part. In an embodiment, the second hinge module 5B may be disposed in the foldable electronic device 2 in a direction opposite to the first hinge module 5A. The first bracket of the second hinge module 5B may be disposed in or coupled to the second support area 421A of the second frame 221, and the second bracket of the second hinge module 5B may be disposed in or coupled to the first support area 411A of the second frame 221.

According to an embodiment, the first hinge module 5A, the second hinge module 5B, and the guide rail assembly 6 may be coupled to the hinge housing 23 by screws. The hinge housing 23 may be connected to the first frame 211 and the second frame 221 through the first hinge module 5A, the second hinge module 5B, and the guide rail assembly 6. The hinge housing 23 may include a recess provided on the other surface thereof, which is opposite to one surface exposed to the outside in a folded state (see FIG. 3) of the foldable electronic device 2, and the bracket connection part of the first hinge module 5A, the bracket connection part of the second hinge module 5B, and the guide rail assembly 6 may be arranged in the recess of the hinge housing 23 through screw fastening. For screw fastening, the bracket connection part of the first hinge module 5A may include one or more screw holes, and the hinge housing 23 may include one or more screw fastening parts aligned in one-to-one correspondence with the one or more screw holes of the bracket connection part. For screw fastening, the bracket connection part of the second hinge module 5B may include one or more screw holes, and the hinge housing 23 may include one or more screw fastening parts aligned in one-to-one correspondence with the one or more screw holes of the bracket connection part. For screw fastening, the guide rail assembly 6 may include one or more screw holes, and the hinge housing 23 may include one or more screw fastening parts aligned in one-to-one correspondence with the one or more screw holes of the guide rail assembly 6.

According to an embodiment, the first plate 71 may be positioned to correspond to the first frame 211, and the second plate 72 may be positioned to correspond to the second frame 221. The first plate 71 and the second plate 72 may have shapes in which first widths thereof in the direction of the center line A (e.g., the y-axis direction) are relatively larger than second widths thereof in a direction perpendicular to the direction of the center line, and may overlap the first hinge module 5A, the second hinge module 5B, and/or the guide rail assembly 6. The first plate 71 and the second plate 72 may be coupled to the first hinge module 5A, the second hinge module 5B, and the guide rail assembly 6.

According to an embodiment, the first plate 71 may be connected to the bracket connection part of the first hinge module 5A and the bracket connection part of the second hinge module 5B. The second plate 72 may be connected to the bracket connection part of the first hinge module 5A and the bracket connection part of the second hinge module 5B. In an embodiment, the first plate 71 and the second plate 72 may be provided to be substantially symmetric with reference to the center line A of the foldable electronic device 2.

According to an embodiment, the first plate 71 may include a first surface 71A provided to correspond to the third display area ③ of the flexible display module 24. The second plate 72 may include a second surface 72A provided to correspond to the third display area ③ of the flexible display module 24. In an unfolded state (see FIG. 2) of the foldable electronic device 2, the first surface 71A of the first plate 71 may support a part of the third display area ③, and the second surface 72B of the second plate 72 may support a part of the third display area ③. The first surface 71A of the first plate 71 may include a flat surface capable of supporting one side area of the third display area ③ with reference to the center line A of the foldable electronic device 2 in an unfolded state of the foldable electronic device 2. The second surface 72A of the second plate 72 may include a flat surface capable of supporting the other side area of the third display area ③ with reference to the center line A of the foldable electronic device 2 in an unfolded state of the foldable electronic device 2. In an unfolded state of the foldable electronic device 2, the first surface 71A of the first plate 71 and the second surface 72A of the second plate 72 may substantially form an angle of about 180 degrees and may be arranged without a substantial height difference. In an unfolded state of the foldable electronic device 2, even though an external force (e.g., an external pressure such as a touch input using the finger of a user or a touch input using an electronic pen) is applied to the third display area ③, the third display area ③ may be flatly maintained due to the support of the first plate 71 and the second plate 72.

According to an embodiment, the guide rail assembly 6 may include a first slider 61, a second slider 62, and a guide rail 63. The guide rail 63 may be disposed in or coupled to the hinge housing 23. The hinge housing 23 may include a recess provided on the other surface thereof, which is opposite to one surface exposed to the outside in a folded state (see FIG. 3) of the foldable electronic device 2, and the guide rail 63 may be disposed in the recess of the hinge housing 23 through screw fastening. The first slider 61 may be disposed on the guide rail 63 to be slidable relative to the guide rail 63, and be coupled to the first plate 71 by a screw. The second slider 62 may be disposed on the guide rail 63 to be slidable relative to the guide rail 63, and be coupled to the second plate 72 by a screw. The guide rail 63 may include a first guide rail which is a sliding pair with the first slider 61, and a second guide rail which is a sliding pair with the second slider 62. In accordance that the relative position of the first plate 71 with respect to the first frame 211 is changed and the relative position of the second plate 72 with respect to the second frame 221 is changed due to operations (or a state change) of the first hinge module 5A and the second hinge module 5B when the angle between the first frame 211 and the second frame 221 is changed, the first guide rail may be configured to guide a path in which the first slider 61 coupled to the first plate 71 moves relative to the guide rail 63, and the second guide rail may be configured to guide a path in which the second slider 62 coupled to the second plate 72 moves relative to the guide rail 63. The structure, in which the guide rail assembly 6 between the first hinge module 5A and the second hinge module 5B is coupled to the first plate 71 and the second plate 72, may reduce or prevent the phenomenon in which the first plate 71 and the second plate 72 are lifted.

According to an embodiment, when the foldable electronic device 2 is switched from an unfolded state (see FIG. 2) to a folded state (see FIG. 3), the hinge part may be configured to provide a space in which the third display area ③ of the flexible display module 24 can be disposed in a bent shape capable of reducing bending stress. When the foldable electronic device 2 is switched from an unfolded state to a folded state, the hinge part may be configured to provide a space in which the third display area ③ can be disposed in a bent shape capable of reducing buckling. When the foldable electronic device 2 is switched from an unfolded state to a folded state, the third display area ③ may be disposed in a water drop shape or a dumbbell shape capable of reducing breakage or permanent deformation. In a folded state of the foldable electronic device 2, the third display area ③ may be disposed in a bent shape capable of reducing a collision (e.g., bending stress) between compressive stress occurring in one side area of the third display area ③ and tensile stress occurring in one side area of the third display area ③ with reference to a neutral surface (a neutral plane) inside the third display area ③.

According to an embodiment, the first hinge module 5A may include a first bracket 51A, a second bracket 52A, a first portion 810, a second portion 820, a third portion 830, a fourth portion 840, a first pin P1, a second pin P2, and/or a center plate 920. The bracket connection part of the first hinge module 5A may include the first portion 810, the second portion 820, the third portion 830, the fourth portion 840, the first pin P1, the second pin P2, and/or the center plate 920. The bracket connection part may include a center part (or a center area) 53A aligned to correspond to the center line A of the foldable electronic device 2. The center part 53A may include various other elements (not shown) such as the center plate 920. The first portion 810, the second portion 820, the third portion 830, and the fourth portion 840 may be rotatably connected to the center part 53A.

According to an embodiment, in an unfolded state of the foldable electronic device 2, the center plate 920 may support a part of the third display area ③ of the flexible display module 24, the part corresponding to the gap between the first plate 71 and the second plate 72. In an unfolded state of the foldable electronic device 2, the center plate 920 may reduce or prevent a sagging phenomenon or a crease phenomenon of a part of the third display area ③, the part corresponding to the gap between the first surface 71A of the first plate 71 and the second surface 72A of the second plate 72.

According to an embodiment, the first portion 810 and the center part 53A may be connected to each other so as to enable rotational motion relative to each other around a first rotational axis C1. The third portion 830 and the center part 53A may be connected to each other so as to enable rotational motion to each other around a third rotational axis C3. The third portion 830 and the first bracket 51A may be connected to each other so as to enable rotational motion relative to each other around a fifth rotational axis C5. The first rotational axis C1, the third rotational axis C3, and the fifth rotational axis C5 may be substantially parallel to the center line A of the foldable electronic device 2, and may be positioned to be spaced apart from one another. The first portion 810 may be slidably connected to the first bracket 51A so as to enable linear motion relative to the first bracket 51A in a first straight line direction LD1. The first straight line direction LD1 may be perpendicular to the first rotational axis C1. In an embodiment, when viewed in the direction of the center line A of the foldable electronic device 2 (e.g., when viewed in the y-axis direction), the first straight line direction LD1 may be substantially parallel to the direction in which the first display area ① of the flexible display module 24 flatly extends.

According to an embodiment, the second portion 820 and the center part 53A may be connected to each other so as to enable rotational motion relative to each other around a second rotational axis C2. The fourth portion 840 and the center part 53A may be connected to each other so as to enable rotational motion relative to each other around a fourth rotational axis C4. The fourth portion 840 and the first bracket 51A may be connected to each other so as to enable rotational motion relative to each other around a sixth rotational axis C6. The second rotational axis C2, the fourth rotational axis C4, and the sixth rotational axis C6 may be substantially parallel to the center line A of the foldable electronic device 2, and may be positioned to be spaced apart from one another. The second portion 820 may be slidably connected to the second bracket 52A so as to enable linear motion relative to the second bracket 52A in a second straight line direction LD2. The second straight line direction LD2 may be perpendicular to the second rotational axis C2. In an embodiment, when viewed in the direction of the center line A of the foldable electronic device 2 (e.g., when viewed in the y-axis direction), the second straight line direction LD2 may be substantially parallel to the direction in which the second display area ② of the flexible display module 24 flatly extends. The first rotational axis C1 and the second rotational axis C2 may be positioned substantially symmetrically with reference to the center part 53A or the center line A of the foldable electronic device 2. The third rotational axis C3 and the fourth rotational axis C4 may be positioned substantially symmetrically with reference to the center part 53A or the center line A of the foldable electronic device 2. The fifth rotational axis C5 and the sixth rotational axis C6 may be positioned substantially symmetrically with reference to the center part 53A or the center line A of the foldable electronic device 2. The first straight line direction LD1 in which the first portion 810 and the first bracket 51A moves linearly relative to each other, and the second straight line direction LD2 in which the second portion 820 and the second bracket 52A moves linearly relative to each other, may be configured to be substantially symmetric to each other with reference to the center part 53A or the center line A of the foldable electronic device 2.

According to an embodiment, the first portion 810 and the second portion 820 may be provided substantially symmetrically with reference to the center part 53A or the center line A of the foldable electronic device 2. The third portion 830 and the fourth portion 840 may be provided substantially symmetrically with reference to the center part 53A or the center line A of the foldable electronic device 2. The first bracket 51A and the second bracket 52A may be provided substantially symmetrically with reference to the center part 53A or the center line A of the foldable electronic device 2.

According to an embodiment, the first hinge module 5A may include a first linear motion guide LMG1 so that the first portion 810 and the first bracket 51A are slidable relative to each other (e.g., linearly move relative to each other) in the first straight line direction LD1. For example, the first linear motion guide LMG1 may include a first linear motion guide rail LMGR1 included in the first bracket 51A and a first linear motion slider LMSL1 included in the first portion 810. The first linear motion slider LMSL1 may be inserted into the first linear motion guide rail LMGR1. When the angle between the first frame 211 to which the first bracket 51A is fixed and the second frame 221 to which the second bracket 52A is fixed changes, the first bracket 51A and the first portion 810 may slide relative to each other in the first straight line direction LD1 by mutual guidance between the first linear motion guide rail LMGR1 and the first linear motion slider LMSL1. The first bracket 51A and the first portion 810 may be connected to be stably slidable relative to each other in the first straight line direction LD1 by a combination (e.g., a sliding pair) of the first linear motion guide rail LMGR1 and the first linear motion slider LMSL1. According to the position where the first portion 810 and the first bracket 51A has been slid relative to each other in the first straight line direction LD1, the degree in which the first linear motion slider LMSL1 is inserted into the first linear motion guide rail LMGR1 or the relative positions between the first linear motion slider LMSL1 and the first linear motion guide rail LMGR1, may vary. The first linear motion guide LMG1 including the first linear motion guide rail LMGR1 and the first linear motion slider LMSL1 may enable linear motion of the first portion 810 relative to the first bracket 51A fixed to the first frame 211, but may make the rotational motion of the first portion 810 relative to the first bracket 51A be substantially difficult.

According to an embodiment, the first hinge module 5A may include a second linear motion guide LMG2 so that the second portion 820 and the second bracket 52A are slidable relative to each other (e.g., linearly move relative to each other) in the second straight line direction LD2. The first linear motion guide LMG1 and the second linear motion guide LMG2 may be provided substantially symmetrically with reference to the center part 53A or the center line A of the foldable electronic device 2. For example, the second linear motion guide LMG2 may include a second linear motion guide rail LMGR2 included in the second bracket 52A, and a second linear motion slider LMSL2 included in the second portion 820. The second linear motion slider LMSL2 may be inserted into the second linear motion guide rail LMGR2. When the angle between the first frame 211 to which the first bracket 51A is fixed and the second frame 221 to which the second bracket 52A is fixed changes, the second bracket 52A and the second portion 820 may slide relative to each other in the second straight line direction LD2 by mutual guidance between the second linear motion guide rail LMGR2 and the second linear motion slider LMSL2. The second bracket 52A and the second portion 820 may be connected to be stably slidable relative to each other in the second straight line direction LD2 by a combination (e.g., a sliding pair) of the second linear motion guide rail LMGR2 and the second linear motion slider LMSL2. According to the position where the second portion 820 and the second bracket 52A has been slid relative to each other in the second straight line direction LD1, the degree in which the second linear motion slider LMSL2 is inserted into the second linear motion guide rail LMGR2 or the relative positions between the second linear motion slider LMSL2 and the second linear motion guide rail LMGR2, may vary. The second linear motion guide LMG2 including the second linear motion guide rail LMGR2 and the second linear motion slider LMSL2 may enable linear motion of the second portion 820 relative to the second bracket 52A fixed to the second frame 221, but may make the rotational motion of the second portion 820 relative to the second bracket 52A be substantially difficult.

According to an embodiment, the first pin P1 may be disposed in (or coupled to) the first portion 810. The first pin P1 may be disposed in the first portion 810 so as to be substantially parallel to the first rotational axis C1, the third rotational axis C3, and the fifth rotational axis C5. The first plate 71 may include a first pin rail PR1 having a slit shape. The first pin P1 may be inserted into the first pin rail PR1 or may extend through the first pin rail PR1. The first plate 71 and the first bracket 51A may be connected to each other so as to enable rotational motion relative to each other around a seventh rotational axis C7. For example, the seventh rotational axis C7 may be provided by a rotational motion guide formed by a combination (e.g., sliding pair) of a rotational motion guide rail and a rotational motion slider. For another example, the seventh rotational axis C7 may be provided by a pin for connecting the first plate 71 and the first bracket 51A. The seventh rotational axis C7 may be substantially parallel to the first rotational axis C1, the third rotational axis C3, and the fifth rotational axis C5.

According to an embodiment, the second pin P2 may be disposed in (or coupled to) the second portion 820. The second pin P2 may be disposed in the second portion 820 so as to be substantially parallel to the second rotational axis C2, the fourth rotational axis C4, and the sixth rotational axis C6. The second plate 72 may include a second pin rail PR2 having a slit shape. The second pin P2 may be inserted into the second pin rail PR2 or may extend through the second pin rail PR2. The second plate 72 and the second bracket 52A may be connected to each other so as to enable rotational motion relative to each other around an eighth rotational axis C8. For example, the eighth rotational axis C8 may be provided by a rotational motion guide formed by a combination (e.g., sliding pair) of a rotational motion guide rail and a rotational motion slider. For another example, the eighth rotational axis C8 may be provided by a pin for connecting the second plate 72 and the second bracket 52A. The eighth rotational axis C8 may be substantially parallel to the second rotational axis C2, the fourth rotational axis C4, and the sixth rotational axis C6. A pin-rail structure including the second pin P2 and the second pin rail PR2 may be provided substantially symmetrically to the pin-rail structure including the first pin P1 and the first pin rail PR1 with reference to the center part 53A or the center line A of the foldable electronic device 2.

According to an embodiment, when the angle between the first frame 211 and the second frame 221 changes, there may be a rotational motion of the first portion 810 relative to the center part 53A around the first rotational axis C1, a mutual linear motion between the first portion 810 and the first bracket 51A through the first linear motion guide LMG1, a rotational motion of the third portion 830 relative to the center part 53A around the third rotational axis C3, and a rotational motion of the third portion 830 relative to the first bracket 51A around the fifth rotational axis C5. When the angle between the first frame 211 and the second frame 221 changes, in accordance with a change in relative positions between the center part 53A, the first portion 810, the second portion 820, the third portion 830, and the first bracket 51A, the first plate 71 may rotate around the seventh rotational axis C7 by the interaction between the first pin P1 and the first pin rail PR1. When the angle between the first frame 211 and the second frame 221 changes, there may be a rotational motion of the second portion 820 relative to the center part 53A around the second rotational axis C2, a mutual linear motion between the second portion 820 and the second bracket 52A through the second linear motion guide LMG2, a rotational motion of the fourth portion 840 relative to the center part 53A around the fourth rotational axis C4, and a rotational motion of the fourth portion 840 relative to the second bracket 52A around the sixth rotational axis C6. When the angle between the first frame 211 and the second frame 221 changes, in accordance with a change in relative positions between the center part 53A, the first portion 810, the second portion 820, the third portion 830, and the first bracket 51A, the second plate 72 may rotate around the eighth rotational axis C8 by the interaction between the second pin P2 and the second pin rail PR2. The second hinge module 5B may be provided substantially identically to the first hinge module 5A, and may move substantially the same as the movement of the first hinge module 5A when the angle between the first frame 211 and the second frame 221 changes.

According to an embodiment, when the foldable electronic device 2 is switched from an unfolded state to a folded state, the first surface 71A of the first plate 71 and the second surface 72A of the second plate 72 may face each other and be positioned to be spaced apart from each other. When the foldable electronic device 2 is switched from an unfolded state to a folded state, the first plate 71 and the second plate 72 connected to (e.g., operating in association with) the movement of the first hinge module 5A may be disposed to be tilted with respect to the first bracket 51A, compared to an unfolded state of the foldable electronic device 2. When the foldable electronic device 2 is switched from an unfolded state to a folded state, the space between the first surface 71A of the first plate 71 and the second surface 72A of the second plate 72 may be provided in a shape expanding in the direction toward the hinge housing 23 (see FIG. 4) so that the third display area ③ of the flexible display module 24 can be disposed in a bent shape capable of reducing bending stress and/or a buckling phenomenon.

According to an embodiment, the center plate 920 may include a third surface 920A facing the third display area ③ of the flexible display module 24. The third surface 920A may include a first surface area 921, a second surface area 922, and/or a third surface area 923. When viewed from above (e.g., in the -z-axis direction) the flexible display module 24 in an unfolded state of the foldable electronic device 2, the third surface area 923 may be positioned between the first surface area 921 and the second surface area 922. When viewed from above the flexible display module 24 in an unfolded state of the foldable electronic device 2, the first surface area 921 may be positioned between the first surface 71A of the first plate 71 and the third surface area 923 of the center plate 920. When viewed from above the flexible display module 24 in an unfolded state of the foldable electronic device 2, the second surface area 922 may be positioned between the second surface 72A of the second plate 72 and the third surface area 923 of the center plate 920. In an unfolded state of the foldable electronic device 2, the third display area ③ of the flexible display module 24 may be flatly disposed, the first surface area 921 may include a first flat surface capable of flatly supporting a part of the third display area ③, and the second surface area 922 may include a second flat surface capable of flatly supporting a part of the third display area ③. The center plate 920 may include a recess 924 provided by the third surface area 923 which is a curved surface. Referring to a cross section perpendicular to the direction (e.g., the y-axis direction) of the center line A of the foldable electronic device 2, the recess 924 may be a space having a shape recessed in a direction toward the hinge housing 23.

According to an embodiment, the first flexible film 510 may be disposed on the foldable housing 20 between the foldable housing 20 and the flexible display module 24. In the illustrated example, the first flexible film 510 may be disposed on the center plate 920. The first flexible film 510 may include a first area 511 overlapping the first surface area 921 of the third surface 920A, a second area 512 overlapping the second surface area 922 of the third surface 920A, and a third area 513 between the first area 511 and the second area 512. An attachment material may be disposed between the first surface area 921 of the center plate 920 and the first area 511 of the first flexible film 510, and thus the first area 511 may be coupled to the first surface area 921. An attachment material may be disposed between the second surface area 922 of the center plate 920 and the second area 512 of the first flexible film 510, and thus the second area 512 may be coupled to the second surface area 922. For example, the attachment material may be a heat-reactive bonding material or a heat-reactive adhesive material, a light-reactive bonding material or a light-reactive adhesive material, a general bonding agent or a general adhesive agent, or various bonding materials or adhesive materials such as a double-sided tape. The foldable electronic device 2 may include a first fixation area (or a first fixation part) including a bonding material or adhesive material which couples the first surface area 921 of the center plate 920 and the first area 511 of the first flexible film 510. The foldable electronic device 2 may include a second fixation area (or a second fixation part) including a bonding material or adhesive material which couples the second surface area 922 of the center plate 920 and the second area 512 of the first flexible film 510. The first flexible film 510 may be disposed to be substantially flat. The third area 513 of the first flexible film 510 may be substantially flatly disposed by the support of the first area 511 coupled to the first surface area 921 and the second area 512 coupled to the second surface area 512. The third area 513 of the first flexible film 510 may be pulled at both sides thereof by the first area 511 attached to the first surface area 921 and the second area 922 attached to the second surface area 512 and thus be substantially flatly disposed. When viewed from above the third surface 920A of the center plate 920, the third area 513 of the first flexible film 510 may overlap the recess 924. The third area 513 of the first flexible film 510 may be positioned to be at least partially spaced apart from the third surface area 923 included in the third surface 920A of the center plate 920 while having the recess 924 therebetween.

According to an embodiment, in an unfolded state of the foldable electronic device 2, the first flexible film 510 may support the third display area ③ of the flexible display module 24. The first flexible film 510 may include a fourth surface 510A facing the third display area ③. In an unfolded state of the foldable electronic device 2, in case that there is no external force or external impact which enables the third display area ③ to press the first flexible film 510, the fourth surface 510A may be disposed as a substantially flat surface. In a folded state of the foldable electronic device 2, in case that there is no external impact (e.g., an external impact applied to the hinge housing 23 exposed to the outside) which enables the third display area ③ to press the first flexible film 510, the fourth surface 510A may be disposed as a substantially flat surface. The fourth surface 510A of the first flexible film 510 may support the third display area ③ in an unfolded state of the foldable electronic device 2. In an unfolded state of the foldable electronic device 2, the fourth surface 510A of the first flexible film 510 may be disposed without a substantial height difference from the first surface 71A of the first plate 71 and the second surface 72A of the second plate 72. In an unfolded state of the foldable electronic device 2, the first flexible film 510 may support the third display area ③ so that the third display area ③ can be flatly disposed without sagging, and thus can reduce the sagging phenomenon or the crease phenomenon of the third display area ③.

In case that an external impact is applied to the foldable electronic device 2 in a folded state (e.g., in case that an external impact is applied to the hinge housing 23 exposed to the outside), there may be a movement in which the third display area ③ and the center plate 920 try to get close to each other due to a connection structure between elements included in the hinge part (e.g., the hinge part H in FIG. 9) and the clearance of the connection therebetween. In an embodiment, in case that an external impact is applied to the foldable electronic device 2 in a folded state, the recess 924 between the center plate 920 and the third display area ③ of the flexible display module 24 may become a spaced space for reducing or preventing that the third display area ③ of the flexible display module 24 collides with the center plate 920. The embodiment, in which the recess 924 is provided on the third surface 920A of the center plate 920, may contribute to the slimming of the foldable electronic device 2, compared to the comparative example (not shown) in which the third surface 920A of the center plate 920 is provided as a substantially flat surface and is configured to be spaced apart from the third display area ③. The embodiment, in which a recess 924 is provided on the third surface 920A of the center plate 920 and a first flexible film 510 is disposed on the sensor plate 920, may reduce or prevent the crease phenomenon due to sagging of the third display area ③ in an unfolded state of the foldable electronic device 2, compared to the comparative example (not shown) in which the recess 924 is provided on the third surface 920A of the center plate 920 and the first flexible film 510 is omitted.

According to an embodiment, in the center plate 920, the recess 924 and the third surface area 923, which is a curved surface, for the recess 924 may be provided substantially symmetrically with reference to the center line A of the foldable electronic device 2. In a folded state of the foldable electronic device 2, the third display area ③ of the flexible display module 24 may be disposed in a water drop shape or a dumbbell shape which is substantially symmetric with reference to the center line A of the foldable electronic device 2. In a folded state of the foldable electronic device 2, the third surface area 923 of the center plate 920 may be provided in a shape substantially matching a part 24D of the rear surface of the third display area ③ disposed in a water drop shape or a dumbbell shape, the part being aligned with the third surface area 923. There may be a comparative example in which the third surface area 923 is provided in a shape different from the part 24D of the rear surface of the third display area ③, the part being aligned with the third surface area 923. Compared to the comparative example, the embodiment, in which the third surface area 923 of the center plate 920 substantially matches the part 24D of the rear surface of the third display area ③, the part being aligned with the third surface area 923, may reduce the possibility that the center plate 920 may apply impact to the third display area ③, when the third display area ③ becomes close to the center plate 920 while causing the first flexible film 510 to sag due to an external impact applied to the foldable electronic device 2 in the folded state.

According to an embodiment, in accordance with a movement in which the third display area ③ and the center plate 920 of the flexible display module 24 try to get close to each other due to an external impact (e.g., an external impact applied to the hinge housing 23 exposed to the outside) applied to the foldable electronic device 2 in a folded state, the first flexible film 510 may be provided to be able to sag while reducing the stress on the third display area ③. For example, in case that an external impact is applied to the foldable electronic device 2 in a folded state, the third display area ③ disposed in a bent shape may be brought close to the center plate 920 while causing the first flexible film 510 to sag, without substantial deformation. The first flexible film 510 may include various polymers (e.g., elastomer) and may be provided in various shapes according to material properties thereof. In various embodiments, the first flexible film 510 may at least partially include a metal material.

According to an embodiment, the first flexible film 510 may reduce the influence of an external impact on the third display area ③ between the third display area ③ of the flexible display module 24 and the center plate 920. In case that an external impact is applied to the foldable electronic device 2 in a folded state (e.g., in case that an external impact is applied to the hinge housing 23 exposed to the outside), the first flexible film 510 may absorb or relieve (or buffer) an external impact applied to the third display area ③ between the third display area ③ of the flexible display module 24 and the center plate 920. The first flexible film 510 may include a buffer material.

According to an embodiment, in an unfolded state of the foldable electronic device 2, in case that an external force (e.g., an external pressure such as a touch input using the finger of a user or a touch input using an electronic pen) is applied to the third display area ③, the first flexible film 510 can relieve stress occurring in the third display area ③ and may contribute to that the third display area ③ can be flatly maintained by reducing a sagging phenomenon of the third display area ③.

According to an embodiment, the first flexible film 510 may have a substantially constant thickness, and the structure, in which the first flexible film 510 and the center plate 920 are coupled to each other, may be configured such that the fourth surface 510A of the first flexible film 510 is disposed as a substantially flat surface. In various embodiments (not shown separately), the first flexible film 510 may have a partially different thickness, and the structure, in which the first flexible film 510 and the center plate 920 are coupled to each other, may be configured such that the fourth surface 510A of the first flexible film 510 is disposed as a substantially flat surface. For example, the first area 511 and the second area 512 of the first flexible film 510 may have thicknesses different from that of the third area 513 of the first flexible film 510, but the structure, in which the first flexible film 510 and the center plate 920 are coupled to each other, may be configured such that the fourth surface 510A of the first flexible film 510 is disposed as a substantially flat surface.

According to an embodiment, the first flexible film 510 may include a fifth surface 510B oriented in a direction opposite to the fourth surface 510A facing the third display area ③ of the flexible display module 24. The fifth surface 510B may include a first portion area included in the first area 511, a second portion area included in the second area 512, and a third portion area included in the third area 513. In an unfolded state of the foldable electronic device 2, in case that there is no external force or external impact which enables the third display area ③ to press the first flexible film 510, the third portion area may be disposed as a substantially flat surface. In a folded state of the foldable electronic device 2, in case that there is no external impact (e.g., an external impact applied to the hinge housing 23 exposed to the outside) which enables the third display area ③ to press the first flexible film 510, the third portion area may be disposed as a substantially flat surface.

According to an embodiment, in a foldable electronic device 2 in a folded state, in case that the third display area ③ disposed in a bent shape due to an external impact applied to the hinge housing 23 exposed to the outside becomes close to the center plate 920 while causing the first flexible film 510 to sag, the foldable electronic device may be implemented to reduce collision between the third area 513 of the first flexible film 510 and the third surface area 923 of the center plate 920 and/or to reduce the phenomenon in which the third area 513 comes into contact with the third surface area 923.

According to various embodiments, the third portion area included in the fifth surface 510B of the first flexible film 510 may be provided as a curved surface 604 which is convex in a direction toward the third display area ③ of the flexible display module 24. A portion (e.g., the third area 513) of the first flexible film 510, which includes the curved surface 604, may have a thin thickness compared to other portions. The curved surface 604 may be provided substantially symmetrically with reference to the center line A (see FIG. 4) of the electronic device 2. In a foldable electronic device 2 in a folded state, in case that the third display area ③ disposed in a bent shape due to an external impact applied to the hinge housing 23 exposed to the outside becomes close to the center plate 920 while causing the first flexible film 510 to sag, the curved surface 604 may contribute to reducing collision between the third area 513 of the first flexible film 510 and the third surface area 923 of the center plate 920 and/or reducing the phenomenon in which the third area 513 comes into contact with the third surface area 923. In various embodiments, the curved surface 604 may further extend to the first area 511 and/or the second area 512.

According to various embodiments, the first surface area 921 and the third surface area 923 of the center plate 920 may be smoothly or seamlessly connected to each other as the virtual line (see FIG. 6) indicated by reference numeral "602". By that the first surface area 921 and the third surface area 923 are smoothly or seamlessly connected to each other, in case that the third display area ③ disposed in a bent shape due to an external impact applied to the foldable electronic device 2 in a folded state becomes close to the center plate 920 while causing the first flexible film 510 to sag, bending stress occurring in a boundary area 605 between the first area 511 and the third area 513 of the first flexible film 510 may be reduced and a phenomenon in which stress is concentrated in the boundary area 605 may be reduced. The second surface area 922 and the third surface area 923 of the center plate 920 may be smoothly or seamlessly connected to each other as the virtual line (see FIG. 6) indicated by reference numeral "603" . By that the second surface area 922 and the third surface area 923 are smoothly or seamlessly connected to each other, in case that the third display area ③ disposed in a bent shape due to an external impact applied to the foldable electronic device 2 in a folded state becomes close to the center plate 920 while causing the first flexible film 510 to sag, bending stress occurring in a boundary area 606 between the second area 512 and the third area 513 of the first flexible film 510 may be reduced and a phenomenon in which stress is concentrated in the boundary area 606 may be reduced. That the first surface area 921 and the third surface area 923 are smoothly or seamlessly connected to each other and that the second surface area 922 and the third surface area 923 are smoothly or seamlessly connected to each other may contribute to that the first flexible film 510 sags while reducing stress on the third display area ③, in accordance with a movement in which the third display area ③ of the flexible display module 24 and the center plate 920 try to get close to each other due to an external impact applied to the foldable electronic device 2 in the folded state.

According to various embodiments, the third area 513 of the first flexible film 510 may include a lattice structure (not shown). For example, the lattice structure may include multiple openings (or slits) provided in the third area 513. The lattice structure may indicate a pattern structure in which multiple openings are regularly arranged. The multiple openings may be periodically formed, may have a substantially identical shape, and may be repeatedly arranged at a predetermined interval. The lattice structure including multiple openings may be referred to as other terms such as an "opening pattern", a "hole pattern", or a "lattice pattern".

According to various embodiments, the first flexible film 510 may include multiple layers laminated on each other. A material included in one layer among the multiple layers may be different from the material included in another layer thereamong.

According to various embodiments, a buffer material may be disposed (e.g., filled) between (e.g., the recess 924) the third area 513 of the first flexible film 510 and the third surface area 923 of the center plate 920.

According to an embodiment, the second flexible film 520 may be disposed on the second hinge module 5B in substantially the same manner as the first flexible film 510 is disposed on the first hinge module 5A.

According to an embodiment, the guide rail assembly 6 may include a recess 64 for performing substantially the same function as the recess 924 provided on the center plate 920 of the first hinge module 5A. In various embodiments, the foldable electronic device 2 may further include a third flexible film (not shown) disposed on the guide rail assembly 6, the third flexible film being disposed in substantially the same manner as the first flexible film 510 is disposed on the center plate 920 of the first hinge module 5A.

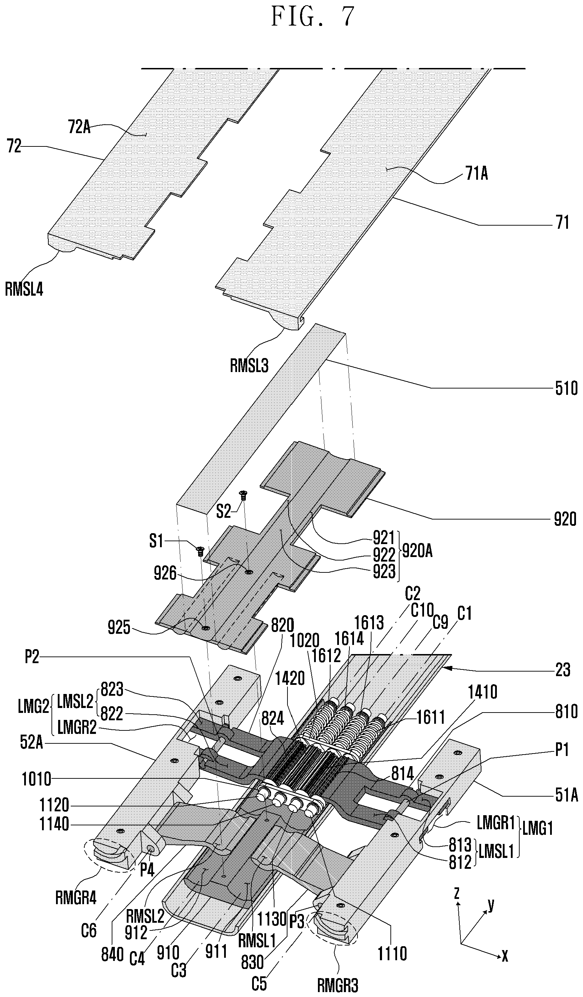

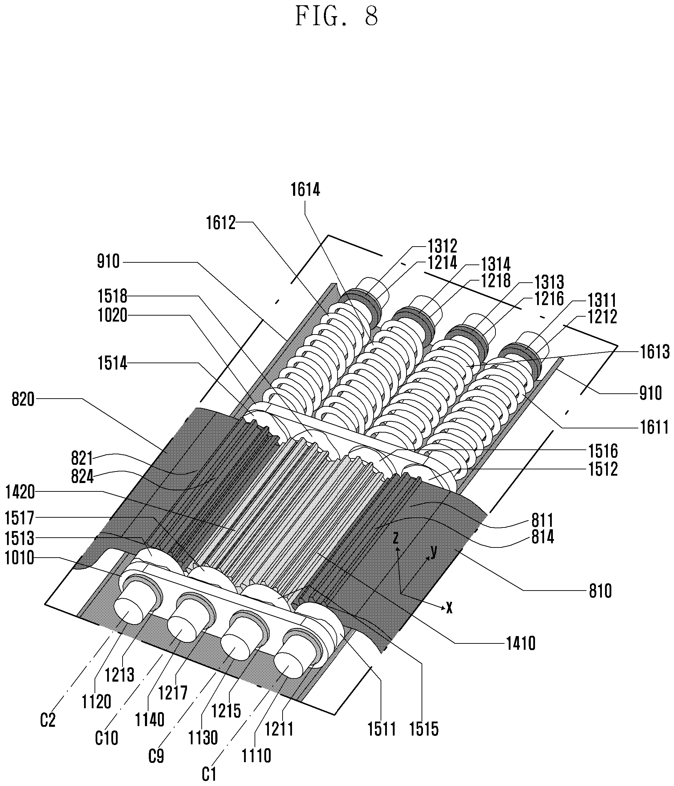

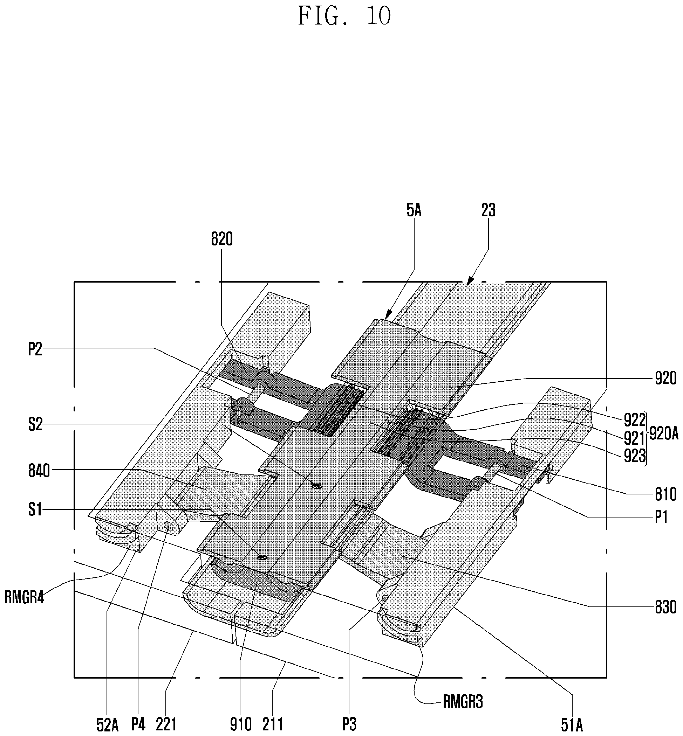

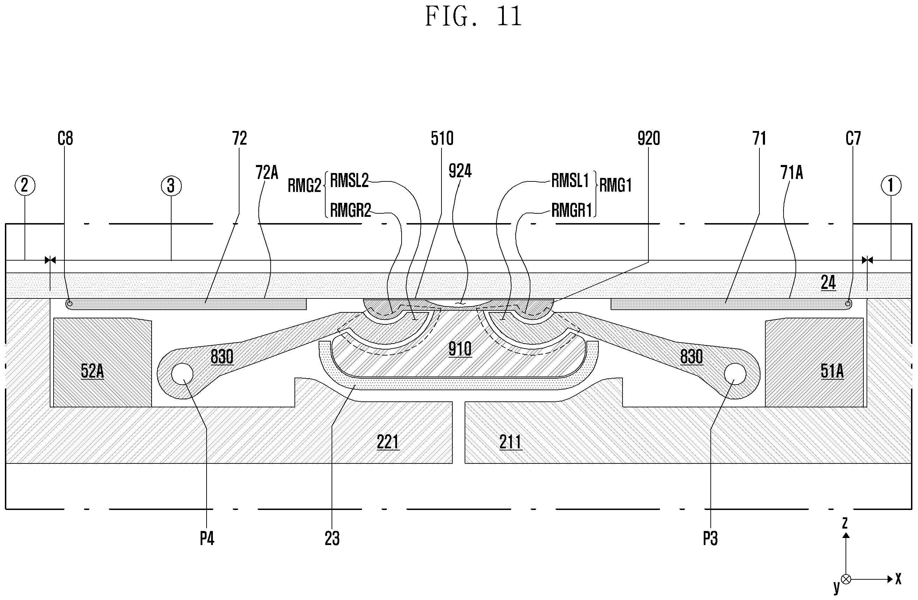

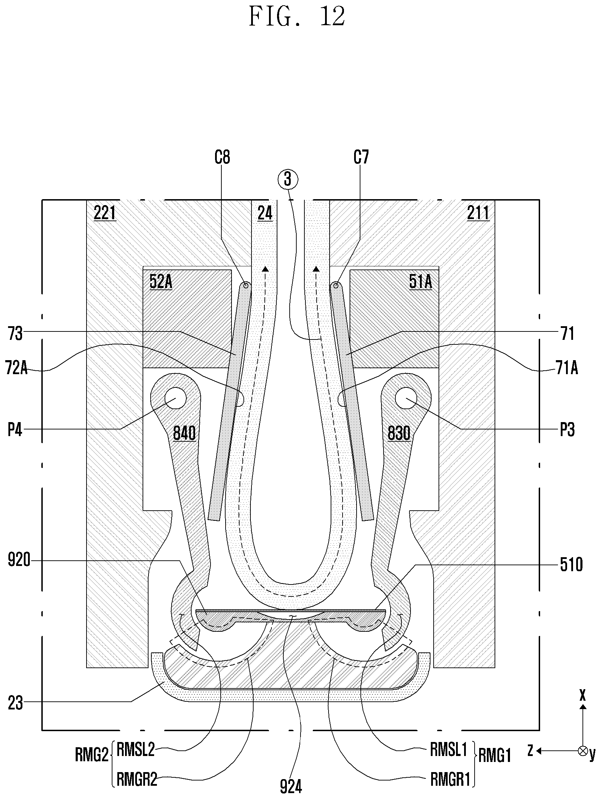

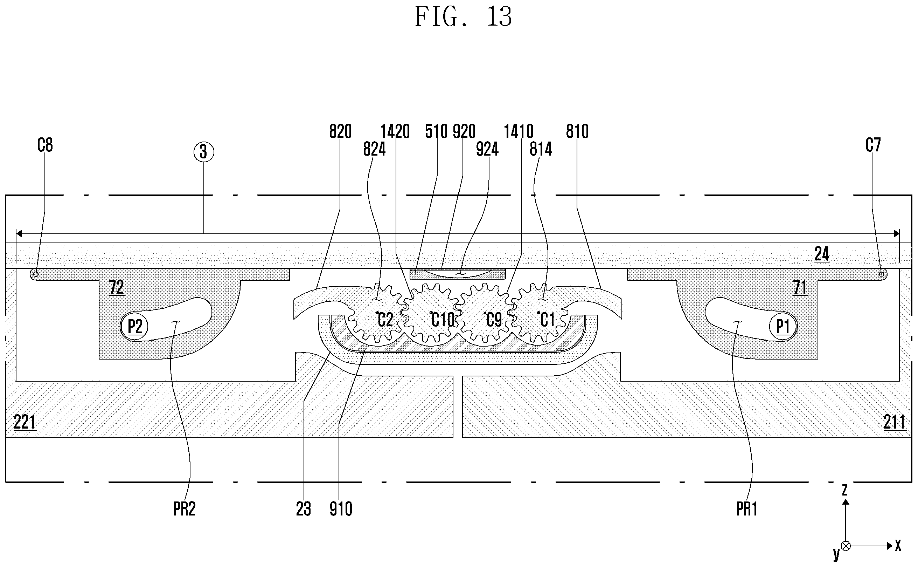

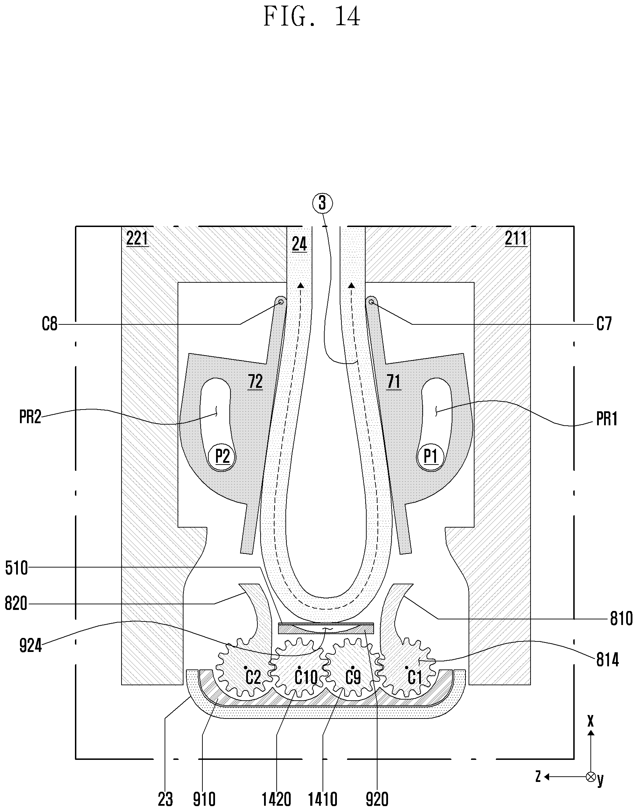

FIG. 7 is a partially exploded perspective view of a foldable electronic device 2 in an unfolded state according to an embodiment of the disclosure. FIG. 8 is a partially enlarged view of the foldable electronic device 2 illustrated in FIG. 7 according to an embodiment of the disclosure. FIG. 9 is a perspective view of a hinge part H of a foldable electronic device 2 in an unfolded state according to an embodiment of the disclosure. FIG. 10 is a perspective view showing a first hinge module 5A and a hinge cover 23 of a foldable electronic device 2 in an unfolded state according to an embodiment of the disclosure. FIG. 11 is a cross-sectional view of a foldable electronic device 2 in an unfolded state, taken along line D-D' in FIG. 9 according to an embodiment of the disclosure. FIG. 12 is a cross-sectional view of a foldable electronic device 2 in a folded state associated with FIG. 11 according to an embodiment of the disclosure. FIG. 13 is a cross-sectional view of a foldable electronic device 2 in an unfolded state, taken along line E-E' in FIG. 9 according to an embodiment of the disclosure. FIG. 14 is a cross-sectional view of a foldable electronic device 2 in a folded state associated with FIG. 13 according to an embodiment of the disclosure.

Referring to FIGS. 7, 8, 9, 10, 11, 12, 13, and 14, the foldable electronic device 2 may include a first hinge module 5A, a first flexible film 510, a first plate 71, and/or a second plate 72. The first hinge module 5A may include a first bracket 51A, a second bracket 52, a first portion 810, a second portion 820, a third portion 830, a fourth portion 840, and/or a center part 53A (see FIG. 5). In an embodiment, the center part 53A may include a rotation support bracket 910, a center plate (or, a cover or a bracket cover) 920, a first rotation support part (a first rotation support member or a first rotation support element) 1010, a second rotation support part (a second rotation support member or a second rotation support element) 1020, a first shaft 1110, a second shaft 1120, a third shaft 1130, a fourth shaft 1140, a first snap ring 1211, a second snap ring 1212, a third snap ring 1213, a fourth snap ring 1214, a fifth snap ring 1215, a sixth snap ring 1216, a seventh snap ring 1217, an eighth snap ring 1218, a first washer 1311, a second washer 1312, a third washer 1313, a fourth washer 1314, a third circular gear 1410, a fourth circular gear 1420, a first cam gear 1511, a second cam gear 1512, a third cam gear 1513, a fourth cam gear 1514, a fifth cam gear 1515, a sixth cam gear 1516, a seventh cam gear 1517, an eighth cam gear 1518, a first compression spring 1611, a second compression spring 1612, a third compression spring 1613, a fourth compression spring 1614, a first pin P1, a second pin P2, a third pin P3, and/or a fourth pin P4.

According to an embodiment, the rotation support bracket 910 may be at least partially positioned between the hinge housing 23 and the center plate 920. The rotation support bracket 910 may be coupled to the hinge housing 23 through screw fastening. The rotation support bracket 910 may be provided in a substantially symmetric shape with reference to the center line A (see FIG. 4) of the foldable electronic device 2.

According to an embodiment, the center plate 920 may be coupled to the rotation support bracket 910. The rotation support bracket 910 and the center plate 920 may be coupled to each other through screw fastening and/or snap-fit fastening (e.g., a fastening manner including a hook and a hook fastening part). For example, for screw fastening, the center plate 920 may include multiple screw holes 925 and 926, and the rotation support bracket 910 may include multiple screw fastening parts aligned in one-to-one correspondence with the multiple screw holes 925 and 926. In an embodiment, the multiple screw holes 925 and 926 may be provided in a central area (e.g., a portion of the center plate 920, which includes the third surface area 923) of the center plate 920, the central area corresponding to the center line A (see FIG. 2) of the foldable electronic device 2, and may be disposed to be spaced apart from each other in the direction (e.g., the y-axis direction) of the center line A (see FIG. 2). The multiple screw fastening parts may be provided in a central area (e.g., a portion between the first rail surface 911 and the second rail surface 912) of the rotation support bracket 910, the central area corresponding to the center line A (see FIG. 2) of the foldable electronic device 2. Multiple screws S1 and S2 positioned in the multiple screw holes 925 and 926 may be arranged so as not to protrude from the third surface area 923 for the recess 924 (see FIG. 5). That the multiple screws S1 and S2 do not protrude from the third surface area 923 may reduce or prevent the possibility that the multiple screws S1 and S2 will apply impact to the third display area ③ of the flexible display module 24, in case that an external impact is applied to the foldable electronic device 2 in the folded state. The positions of the screw holes and the screw fastening parts are not limited to the illustrated example and may be various.

According to an embodiment, the rotation support bracket 910 may include a first rail surface 911 and a second rail surface 912 which are provided on the other surface thereof opposite to one surface thereof facing the hinge housing 23. A first rotational motion slider RMSL1 included in the third portion 830 may be slidably positioned in a first space between the first rail surface 911 and the center plate 920, and the first space may be a first rotational motion guide rail RMGR1 (see FIGS. 11 and 12) for guiding a movement of the first rotational motion slider RMSL1. The first rotational motion slider RMSL1 and the first rotational motion guide rail RMGR1 may be provided in curved shapes extending in the circumferential direction thereof in order to allow the first portion 830 and the center part 53A (see FIG. 5) to perform a stable rotational motion relative to each other. A second rotational motion slider RMSL2 included in the fourth portion 840 may be slidably positioned in a second space between the second rail surface 912 and the center plate 920, and the second space may be a second rotational motion guide rail RMGR2 (see FIGS. 11 and 12) for guiding a movement of the second rotational motion slider RMSL2. The second rotational motion slider RMSL2 and the second rotational motion guide rail RMGR2 may be provided in curved shapes extending in the circumferential direction thereof in order to allow the fourth portion 840 and the center part 53A (see FIG. 5) to perform a stable rotational motion relative to each other. A first rotational motion guide RMG1 (see FIGS. 11 and 12) including the first rotational motion guide rail RMGR1 and the first rotational motion slider RMSL1 may be provided substantially symmetrically to a second rotational motion guide RMG2 including the second rotational motion guide rail RMGR2 and the second rotational motion slider RMSL2, with reference to the center line A (see FIG. 2) of the foldable electronic device 2. The third rotational axis C3 of the third portion 830 may be substantially provided by a sliding pair including the first rotational motion slider RMSL1 and the first rotational motion guide rail RMGR1. The fourth rotational axis C4 of the fourth portion 840 may be substantially provided by a sliding pair including the second rotational motion slider RMSL2 and the second rotational motion guide rail RMGR2.

According to various embodiments, without being limited to the illustrated example, instead of the first rotational motion guide, the third portion 830 and the center part 53A (see FIG. 5) may be rotatably connected to each other through a shaft or a pin. Without being limited to the illustrated example, instead of the second rotational motion guide, the fourth portion 840 and the center part 53A (see FIG. 5) may be rotatably connected to each other through a shaft or a pin.

According to an embodiment, the third portion 830 may be connected to the first bracket 51A through the third pin P3. The third portion 830 and the first bracket 51A may be capable of rotational motion relative to each other through the third pin P3. The fifth rotational axis C5 may be provided by the third pin P3.

According to an embodiment, the fourth portion 840 may be connected to the second bracket 52A through the fourth pin P4. The fourth portion 820 and the second bracket 52A may be capable of rotational motion relative to each other through the fourth pin P4. The sixth rotational axis C6 may be provided by the fourth pin P4.

According to an embodiment, the first portion 810 may be positioned to be spaced apart from the third portion 830 in the direction (e.g., the y-axis direction) of the first rotational axis C1. The first portion 810 may include a first shaft connection part (a first shaft connection arm or a first shaft arm) 811. The first shaft 1110 may extend through a shaft hole provided through the first shaft connection part 811. The first rotational axis C1 of the first portion 810 may be the center axis of the first shaft 1110. The first shaft connection part 811 may be disposed on the first shaft 1110 so as to be rotatable together with the first shaft 1110. The first portion 810 may rotate together with the first shaft 1110 around the first rotational axis C1.

According to an embodiment, the second portion 820 may be positioned to be spaced apart from the fourth portion 840 in the direction (e.g., the y-axis direction) of the second rotational axis C2. The second portion 820 may include a second shaft connection part (a second shaft connection arm or a second shaft arm) 821. The second shaft 1120 may extend through a shaft hole provided through the second shaft connection part 821. The second rotational axis C2 of the second portion 820 may be the center axis of the second shaft 1120. The second shaft connection part 821 may be disposed on the second shaft 1120 so as to be rotatable together with the second shaft 1120. The second portion 820 may rotate together with the second shaft 1120 around the second rotational axis C2.

According to an embodiment, the first rotation support part 1010 and the second rotation support part 1020 may be at least partially positioned between the rotation support bracket 910 and the center plate 920, and may be coupled to the rotation support bracket 910 through screw fastening. The first rotation support part 1010 and the second rotation support part 1020 may be positioned to be spaced apart from each other in the direction (e.g., the y-axis direction) of the center line A (see FIG. 2) of the foldable electronic device 2. The first rotation support part 1010 and the second rotation support part 1020 may support the first shaft 1110, the second shaft 1120, the third shaft 1130, and the fourth shaft 1140 so that the first shaft 1110, the second shaft 1120, the third shaft 1130, and the fourth shaft 1140 are positioned at predetermined positions. The first shaft 1110 may extend through a shaft hole provided through the first rotation support part 1010 and a shaft hole provided through the second rotation support part 1020. The second shaft 1120 may extend through a shaft hole provided through the first rotation support part 1010 and a shaft hole provided through the second rotation support part 1020. The third shaft 1130 may extend through a shaft hole provided through the first rotation support part 1010 and a shaft hole provided through the second rotation support part 1020. The fourth shaft 1140 may extend through a shaft hole provided through the first rotation support part 1010 and a shaft hole provided through the second rotation support part 1020. The first rotation support part 1010 and the second rotation support part 1020 may support the first shaft 1110 so that the first shaft 1110 is rotatable around the first rotational axis C1. The first rotational axis C1 may be the center axis of the first shaft 1110. The first rotation support part 1010 and the second rotation support part 1020 may support the second shaft 1120 so that the second shaft 1120 is rotatable around the second rotational axis C2. The second rotational axis C2 may be the center axis of the second shaft 1120. The first rotation support part 1010 and the second rotation support part 1020 may support the third shaft 1130 so that the third shaft 1130 can rotate around a ninth rotational axis C9 which is substantially parallel to the first rotational axis C1 and the second rotational axis C2. The ninth rotational axis C9 may be the center axis of the third shaft 1130. The first rotation support part 1010 and the second rotation support part 1020 may support the fourth shaft 1140 so that the fourth shaft 1140 can rotate around a tenth rotational axis C10 which is substantially parallel to the first rotational axis C1 and the second rotational axis C2. The tenth rotational axis C10 may be the center axis of the fourth shaft 1140. The ninth rotational axis C9 and the tenth rotational axis C10 may be positioned on a virtual straight line passing through the first rotational axis C1 and the second rotational axis C2. The ninth rotational axis C9 may be positioned between the first rotational axis C1 and the tenth rotational axis C10, and the tenth rotational axis C10 may be positioned between the second rotational axis C2 and the ninth rotational axis C9. A virtual first straight line passing through the first rotational axis C1 and the second rotational axis C2 may be substantially parallel to a virtual second straight line passing through the ninth rotational axis C9 and the tenth rotational axis C10, and the first straight line and the second straight line may be coincident with each other. In various embodiments, the first shaft 1110, the second shaft 1120, the third shaft 1130, and the fourth shaft 1140 may also be positioned such that the first straight line and the second straight line are spaced apart from each other while being parallel to each other.

According to an embodiment, the third circular gear 1410 may be disposed on the third shaft 1130. The third shaft 1130 may extend through a shaft hole provided through the third circular gear 1410. The third circular gear 1410 may be disposed on the third shaft 1130 so as to be rotatable together with the third shaft 1130. The fourth circular gear 1420 may be disposed on the fourth shaft 1140. The fourth shaft 1140 may extend through a shaft hole provided through the fourth circular gear 1420. The fourth circular gear 1420 may be disposed on the fourth shaft 1140 so as to be rotatable together with the fourth shaft 1140. In various embodiments, the third shaft 1130 may be provided in a form including a circular gear, and in this case, the third circular gear 1410 may be omitted. In various embodiments, the fourth shaft 1140 may be provided in a form including a circular gear, and in this case, the fourth circular gear 1420 may be omitted.

According to an embodiment, the first shaft connection part 811 of the first portion 810 may include a first circular gear 814. The second shaft connection part 821 of the second portion 820 may include a second circular gear 824. The first shaft connection part 811 of the first portion 810, which includes the first circular gear 814, the second shaft connection part 821 of the second portion 820, which includes the second circular gear 824, the third circular gear 1410, and the fourth circular gear 1420 may be positioned between the first rotation support part 1010 and the second rotation support part 1020. The third circular gear 1410 may be engaged with the first circular gear 814. The fourth circular gear 1420 may be engaged with the second circular gear 824. The third circular gear 1410 and the fourth circular gear 1420 may be engaged with each other. For example, the third circular gear 1410 and the fourth circular gear 1420 may be spur gears having the same number of teeth. The first circular gear 814 included in the first shaft connection part 811 of the first portion 810 may be provided in a form in which teeth are arranged on a partial section of the circumference thereof, the partial section being engaged with the third circular gear 1410, in accordance with a state change (e.g., the switching between the unfolded state in FIG. 2 and the folded state in FIG. 3) of the foldable electronic device 2, compared to the third circular gear 1410 having teeth arranged along the circumference thereof. The first linear motion slider LMSL1 may extend from the first shaft connection part 811 including the first circular gear 814. The second circular gear 824 included in the second shaft connection part 821 of the second portion 820 may be provided in a form in which teeth are arranged on a partial section of the circumference thereof, the partial section being engaged with the fourth circular gear 1420, in accordance with a state change of the foldable electronic device 2, compared to the fourth circular gear 1420 having teeth arranged along the circumference thereof. The second linear motion slider LMSL2 may extend from the second shaft connection part 821 including the second circular gear 824. When the first portion 810 rotates around the first rotational axis C1 in a first direction and the second portion 820 rotates around the second rotational axis C2 in a second direction opposite to the first direction, the third circular gear 1410 and the fourth circular gear 1420 may contribute to the transmission of force (e.g., rotational force) and the balance of force between the first circular gear 1111 and the second circular gear 1121.

According to various embodiments, the third circular gear 1410 and the fourth circular gear 1420 may be gears having sizes different from those of the first circular gear 1111 and the second circular gear 1121.

According to an embodiment, the first cam gear 1511 may be positioned between the first rotation support part 1010 and the first shaft connection part 811 of the first portion 810. The first shaft 1110 may extend through a shaft hole provided through the first cam gear 1511, and the first cam gear 1511 may be disposed on the first shaft 1110 so as to be rotatable together with the first shaft 1110 around the first rotational axis C1. The second cam gear 1512 may be positioned between the second rotation support part 1020 and the first shaft connection part 811 of the first portion 810. The first shaft 1110 may extend through a shaft hole provided through the second cam gear 1512, and the second cam gear 1512 may be disposed on the first shaft 1110 so as to be rotatable together with the first shaft 1110 around the first rotational axis C1. The first rotation support part 1010 may include a cam gear positioned to correspond to the first cam gear 1511, and the second rotation support part 1020 may include a cam gear positioned to correspond to the second cam gear 1512.

According to an embodiment, the third cam gear 1513 may be positioned between the first rotation support part 1010 and the second shaft connection part 821 of the second portion 820. The second shaft 1120 may extend through a shaft hole provided through the third cam gear 1513, and the third cam gear 1513 may be disposed on the second shaft 1120 so as to be rotatable together with the second shaft 1120 around the second rotational axis C2. The fourth cam gear 1514 may be positioned between the second rotation support part 1020 and the second shaft connection part 821 of the second portion 820. The second shaft 1120 may extend through a shaft hole provided through the fourth cam gear 1514, and the fourth cam gear 1514 may be disposed on the second shaft 1120 so as to be rotatable together with the second shaft 1120 around the second rotational axis C2. The first rotation support part 1010 may include a cam gear positioned to correspond to the third cam gear 1513, and the second rotation support part 1020 may include a cam gear positioned to correspond to the fourth cam gear 1514.

According to an embodiment, the fifth cam gear 1515 may be positioned between the first rotation support part 1010 and the third circular gear 1410. The third shaft 1130 may extend through a shaft hole provided through the fifth cam gear 1515, and the fifth cam gear 1515 may be disposed on the third shaft 1130 so as to be rotatable together with the third shaft 1130 around the third rotational axis C3. The sixth cam gear 1516 may be positioned between the second rotation support part 1020 and the third circular gear 1410. The third shaft 1130 may extend through a shaft hole provided through the sixth cam gear 1516, and the sixth cam gear 1516 may be disposed on the third shaft 1130 so as to be rotatable together with the third shaft 1130 around the third rotational axis C3. The first rotation support part 1010 may include a cam gear positioned to correspond to the fifth cam gear 1515, and the second rotation support part 1020 may include a cam gear positioned to correspond to the sixth cam gear 1516.

According to an embodiment, the seventh cam gear 1517 may be positioned between the first rotation support part 1010 and the fourth circular gear 1420. The fourth shaft 1140 may extend through a shaft hole provided through the seventh cam gear 1517, and the seventh cam gear 1517 may be disposed on the fourth shaft 1140 so as to be rotatable together with the fourth shaft 1140 around the fourth rotational axis C4. The eighth cam gear 1518 may be positioned between the second rotation support part 1020 and the fourth circular gear 1420. The fourth shaft 1140 may extend through a shaft hole provided through the eighth cam gear 1518, and the eighth cam gear 1518 may be disposed on the fourth shaft 1140 so as to be rotatable together with the fourth shaft 1140 around the fourth rotational axis C4. The first rotation support part 1010 may include a cam gear positioned to correspond to the seventh cam gear 1517, and the second rotation support part 1020 may include a cam gear positioned to correspond to the eighth cam gear 1518.

According to an embodiment, the first snap ring (e.g., a first E-ring) 1211 may be fastened to one end of the first shaft 1110, and the second snap ring (e.g., a second E-ring) 1212 may be fastened to the other end of the first shaft 1110. The first snap ring 1211 and the second snap ring 1212 may prevent the first shaft 1110 from being separated from the center part 53A (see FIG. 5). The first washer 1311 may allow the first shaft 1110 to extend therethrough, and may be positioned between the second snap ring 1212 and a portion of the second rotation support part 1020, the portion including a shaft hole through which the first shaft 1110 extends. The first shaft 1110 may extend through the first compression spring 1611, and the first compression spring 1611 may be elastically positioned between the second rotation support part 1020 and the first washer 1311. By the elasticity of the first compression spring 1611, the first cam gear 1511 and a cam gear of the first rotation support part 1010 may be elastically in contact with each other, and the second cam gear 1512 and a cam gear of the second rotation support part 1020 may be elastically in contact with each other.

According to an embodiment, the third snap ring (e.g., a third E-ring) 1213 may be fastened to one end of the second shaft 1120, and the fourth snap ring (e.g., a fourth E-ring) 1214 may be fastened to the other end of the second shaft 1120. The third snap ring 1213 and the fourth snap ring 1214 may prevent the second shaft 1120 from being separated from the center part 53A (see FIG. 5). The second washer 1312 may allow the second shaft 1120 to extend therethrough, and may be positioned between the fourth snap ring 1214 and a portion of the second rotation support part 1020, the portion including a shaft hole through which the second shaft 1120 extends. The second shaft 1120 may extend through the second compression spring 1612, and the second compression spring 1612 may be elastically positioned between the second rotation support part 1020 and the second washer 1312. By the elasticity of the second compression spring 1612, the third cam gear 1513 and a cam gear of the first rotation support part 1010 may be elastically in contact with each other, and the fourth cam gear 1514 and a cam gear of the second rotation support part 1020 may be elastically in contact with each other.

According to an embodiment, the fifth snap ring (e.g., a fifth E-ring) 1215 may be fastened to one end of the third shaft 1130, and the sixth snap ring (e.g., a sixth E-ring) 1216 may be fastened to the other end of the third shaft 1130. The fifth snap ring 1215 and the sixth snap ring 1216 may prevent the third shaft 1130 from being separated from the center part 53A (see FIG. 5). The third washer 1313 may allow the third shaft 1130 to extend therethrough, and may be positioned between the sixth snap ring 1216 and a portion of the second rotation support part 1020, the portion including a shaft hole through which the third shaft 1130 extends. The third shaft 1130 may extend through the third compression spring 1613, and the third compression spring 1613 may be elastically positioned between the second rotation support part 1020 and the third washer 1313. By the elasticity of the third compression spring 1613, the fifth cam gear 1515 and a cam gear of the first rotation support part 1010 may be elastically in contact with each other, and the sixth cam gear 1516 and a cam gear of the second rotation support part 1020 may be elastically in contact with each other.

According to an embodiment, the seventh snap ring (e.g., a seventh E-ring) 1217 may be fastened to one end of the fourth shaft 1140, and the eighth snap ring (e.g., an eighth E-ring) 1218 may be fastened to the other end of the fourth shaft 1140. The seventh snap ring 1217 and the eighth snap ring 1218 may prevent the fourth shaft 1140 from being separated from the center part 53A (see FIG. 5). The fourth washer 1314 may allow the fourth shaft 1140 to extend therethrough, and may be positioned between the eighth snap ring 1218 and a portion of the second rotation support part 1020, the portion including a shaft hole through which the fourth shaft 1140 extends. The fourth shaft 1140 may extend through the fourth compression spring 1614, and the fourth compression spring 1614 may be elastically positioned between the second rotation support part 1020 and the fourth washer 1314. By the elasticity of the fourth compression spring 1614, the seventh cam gear 1517 and a cam gear of the first rotation support part 1010 may be elastically in contact with each other, and the eighth cam gear 1518 and a cam gear of the second rotation support part 1020 may be elastically in contact with each other.

According to an embodiment, the center part 53A (see FIG. 5) may have a function of providing force so that the first portion 810 and the second portion 820 can rotate relative to each other. The center part 53A (see FIG. 5) may have a function which enables the first portion 810 and the second portion 820 to rotate at the same angle in directions opposite to each other. The center part 53A (see FIG. 5) may have a function (e.g., a free stop function) which allows the first portion 810 and the second portion 820 to be rotated at at least one specified angle and then maintained. When the angle between the first portion 810 and the second portion 820 changes in accordance with the above-described functions of the center part 53A (see FIG. 5), there may be an interaction between the multiple circular gears 814, 824, 1410, and 1420. When the angle between the first portion 810 and the second portion 820 changes in accordance with the above-described functions of the center part 53A (see FIG. 5), there may be an interaction between the first cam gear 1511 and the first rotation support part 1010 by using the elasticity of the first compression spring 1611, and an interaction between the second cam gear 1512 and the second rotation support part 1020 by using the elasticity of the first compression spring 1611. When the angle between the first portion 810 and the second portion 820 changes in accordance with the above-described functions of the center part 53A (see FIG. 5), there may be an interaction between the third cam gear 1513 and the first rotation support part 1010 by using the elasticity of the second compression spring 1612, and an interaction between the fourth cam gear 1514 and the second rotation support part 1020 by using the elasticity of the second compression spring 1612. When the angle between the first portion 810 and the second portion 820 changes in accordance with the above-described functions of the center part 53A (see FIG. 5), there may be an interaction between the fifth cam gear 1515 and the first rotation support part 1010 by using the elasticity of the third compression spring 1613, and an interaction between the sixth cam gear 1516 and the second rotation support part 1020 by using the elasticity of the third compression spring 1613. When the angle between the first portion 810 and the second portion 820 changes in accordance with the above-described functions of the center part 53A (see FIG. 5), there may be an interaction between the seventh cam gear 1517 and the first rotation support part 1010 by using the elasticity of the fourth compression spring 1614, and an interaction between the eighth cam gear 1518 and the second rotation support part 1020 by using the elasticity of the fourth compression spring 1614. In various embodiments, a bracket connection part including the center part 53A (see FIG. 5) may be interpreted as an "actuator" of the first hinge module 5A. The third portion 830 may be connected to the first bracket 51A so as to be slidable relative to the first bracket 51A fixed to the first frame 211 (see FIG. 4), the fourth portion 840 may be connected to the second bracket 52A so as to be slidable relative to the second bracket 52A fixed to the second frame 221 (see FIG. 4), and thus the above-described functions of the center part 53A can be substantially provided for mutual rotational motion between the first frame 211 and the second frame 221.

According to an embodiment, the first hinge module 5A may include a first linear motion guide LMG1 so that the third portion 830 and the first bracket 51A are slidable relative to each other (e.g., linearly move relative to each other) in the first straight line direction. The first linear motion guide LMG1 may include a first linear motion guide rail LMGR1 included in the first bracket 51A, and a first linear motion slider LMSL1 included in the third portion 830. By the combination (e.g., sliding pair) of the first linear motion guide rail LMGR1 and the first linear motion slider LMSL1, the third portion 830 and the first bracket 51A may be connected to be stably slidable relative to each other in the first straight line direction. The combination of the first linear motion guide rail LMGR1 and the first linear motion slider LMSL1 may enable mutual linear motion between the third portion 830 and the first bracket 51A, but may make mutual rotational motion between the third portion 830 and the first bracket 51A be substantially difficult.

According to an embodiment, the first hinge module 5A may include a second linear motion guide LMG2 so that the fourth portion 840 and the second bracket 52A are slidable relative to each other (e.g., linearly move relative to each other) in the second straight line direction. The second linear motion guide LMG2 may include a second linear motion guide rail LMGR2 included in the second bracket 52A, and a second linear motion slider LMSL2 included in the fourth portion 840. By the combination (e.g., sliding pair) of the second linear motion guide rail LMGR2 and the second linear motion slider LMSL2, the fourth portion 840 and second bracket 52A may be connected to be stably slidable relative to each other in the second straight line direction. The combination of the second linear motion guide rail LMGR2 and the second linear motion slider LMSL2 may enable mutual linear motion between the fourth portion 840 and second bracket 52A, but may make mutual rotational motion between the fourth portion 840 and the second bracket 52A be substantially difficult.

According to an embodiment, the first pin P1 may be disposed (or coupled) to the first linear motion slider LMSL1 of the first portion 810, which extends from the first shaft connection part 811. The first linear motion slider LMSL1 may include a first extension part 812 and a second extension part 813 which are positioned to be spaced apart from each other in the direction (e.g., the y-axis direction) of the first rotational axis C1. One end of the first pin P1 may be disposed on the first extension part 812, and the other end of the first pin P1 may be disposed on the second extension part 813.

According to an embodiment, the second pin P2 may be disposed (or coupled) to the second linear motion slider LMSL2 of the second portion 820, which extends from the second shaft connection part 821. The second linear motion slider LMSL2 may include a third extension part 822 and a fourth extension part 823 which are positioned to be spaced apart from each other in the direction (e.g., the y-axis direction) of the second rotational axis C2. One end of the second pin P2 may be disposed on the third extension part 822, and the other end of the second pin P2 may be disposed on the fourth extension part 823.

According to an embodiment, the first plate 71 may include a first pin rail PR1 (see FIGS. 13 and 14) having a slit shape. The first pin P1 may extend through the first pin rail PR1.

According to an embodiment, the first plate 71 and the first bracket 51A may be connected to enable rotational motion relative to each other through a third rotational motion guide RMG3. For example, the third rotational motion guide RMG3 may include a third rotational motion guide rail RMGR3 included in the first bracket 51A, and a third rotational motion slider RMSL3 included in the first plate 71. By the combination (e.g., a sliding pair) of the third rotational motion guide rail RMGR3 and the third rotational motion slider RMSL3, the first plate 71 and the first bracket 51A may be rotatable relative to each other around the seventh rotational axis C7 (see FIG. 5). The first plate 71 may extend from one end to the other end thereof in the direction (e.g., the y-axis direction) of the center line A of the foldable electronic device 2, and the third rotational motion slider RMSL3 may be provided at one end of the first plate 71. The third rotational motion guide rail RMGR3 may be provided at one-side part of the first bracket 51A to correspond to the third rotational motion slider RMSL3.

According to an embodiment, the second plate 72 may include a second pin rail PR2 (see FIGS. 13 and 14) having a slit shape. The second pin P2 may extend through the second pin rail PR1.

According to an embodiment, the second plate 72 and the second bracket 52A may be connected to enable rotational motion relative to each other through a fourth rotational motion guide RMG4. For example, the fourth rotational motion guide RMG4 may include a fourth rotational motion guide rail RMGR4 included in the second bracket 52A, and a fourth rotational motion slider RMSL4 included in the second plate 72. By the combination (e.g., a sliding pair) of the fourth rotational motion guide rail RMGR4 and the fourth rotational motion slider RMSL4, the second 72 and the second bracket 52A may be rotatable relative to each other around the eighth rotational axis C8 (see FIG. 5). The second plate 72 may extend from one end to the other end thereof in the direction (e.g., the y-axis direction) of the center line A of the foldable electronic device 2, and the fourth rotational motion slider RMSL4 may be provided at one end of the second plate 72. The fourth rotational motion guide rail RMGR4 may be provided at one-side part of the second bracket 52A to correspond to the fourth rotational motion slider RMSL4. The third rotational motion guide RMG3 and the fourth rotational motion guide RMG4 may be provided substantially symmetrically to each other with reference to the center line A (see FIG. 2) or the center part 53A (see FIG. 5) of the foldable electronic device 2.

According to an embodiment, the second hinge module 5B (see FIG. 4) may be connected to the first plate 71 and the second plate 72 substantially in the same manner as the first plate 71 and the second plate 72 are connected to the first hinge module 5A.

According to an embodiment, when the angle between the first frame 211 and the second frame 221 changes, there may be a rotational motion of the first portion 810 relative to the center part 53A (see FIG. 5) around the first rotational axis C1, a linear motion of the first portion 810 relative to the first bracket 51A, based on the first linear motion guide LMG1, a rotational motion of the third portion 830 relative to the center part 53A (see FIG. 5) around the third rotational axis C3, and a rotational motion of the third portion 830 relative to the first bracket 51A around the fifth rotational axis C5. When the angle between the first frame 211 and the second frame 221 changes, there may be a rotational motion of the second portion 820 relative to the center part 53A (see FIG. 5) around the second rotational axis C2, a linear motion of the second portion 820 relative to the second bracket 52A, based on the second linear motion guide LMG2, a rotational motion of the fourth portion 840 relative to the center part 53A (see FIG. 5) around the fourth rotational axis C4, and a rotational motion of the fourth portion 840 relative to the second bracket 52A around the sixth rotational axis C6. When the angle between the first frame 211 and the second frame 221 changes, in accordance with a change in relative positions between the center part 53A (see FIG. 5), the first portion 810, the second portion 820, the third portion 830, and the first bracket 51A, the first plate 71 may rotate around the seventh rotational axis C7 by the interaction between the first pin P1 and the first pin rail PR1. When the angle between the first frame 211 and the second frame 221 changes, in accordance with a change in relative positions between the center part 53A (see FIG. 5), the first portion 810, the second portion 820, the third portion 830, and the first bracket 51A, the second plate 72 may rotate around the eighth rotational axis C8 by the interaction between the second pin P2 and the second pin rail PR2. When the foldable electronic device 2 is switched from an unfolded state to a folded state, the first surface 71A of the first plate 71 and the second surface 72A of the second plate 72 may face each other and be positioned to be spaced apart from each other. When the foldable electronic device 2 is switched from an unfolded state to a folded state, the first plate 71 and the second plate 72 connected to (e.g., operating in association with) the movement of the first hinge module 5A may be disposed to be tilted with respect to the first bracket 51A, compared to an unfolded state of the foldable electronic device 2. When the foldable electronic device 2 is switched from an unfolded state to a folded state, the first surface 71A of the first plate 71 and the second surface 72A of the second plate 72 may form an acute angle. In a folded state of the foldable electronic device 2, the space between the first surface 71A and the second surface 72A may be provided in a shape which widens in the direction toward the hinge housing 23, so that the third display area ③ of the flexible display module 24 can be arranged in a bent shape capable of reducing bending stress and/or a buckling phenomenon thereof.

According to an embodiment, the first flexible film 510 may be disposed on the center plate 920 between a flexible display module 24 and a first hinge module 5A. The center plate 920 may include a recess 924, and the first flexible film 510 may be disposed to be substantially flat and may overlap the recess 924 of the center plate 920.

According to various embodiments, the first portion 810 may be referred to as a "first hinge arm" or "first arm", and the second portion 820 may be referred to as a "second hinge arm" or "second arm". The third portion 830 may be referred to as a "first rotator", and the fourth portion 840 may be referred to as a "second rotator". The first plate 71 may be referred to as a "first wing plate", and the second plate 72 may be referred to as a "second wing plate".

According to various embodiments, in order to reduce a frictional force, loss of motion transmission, or loss of power transmission between any two elements included in the first hinge module 5A, a lubricant (e.g., grease) may be placed (e.g., applied) between the elements. According to various embodiments, in order to reduce a frictional force, loss of motion transmission, or loss of power transmission between two elements, lubricating coating (e.g., coating using various lubricating materials such as Teflon) may be provided on the surfaces of each of the elements.

According to various embodiments, elements included in the first hinge module 5A may be formed of a material (e.g., metal or engineering plastic) having a rigidity or a durable force for preventing substantial deformation, in accordance with a force acting on the mutual rotational motion between the first housing 21 and the second housing 22.

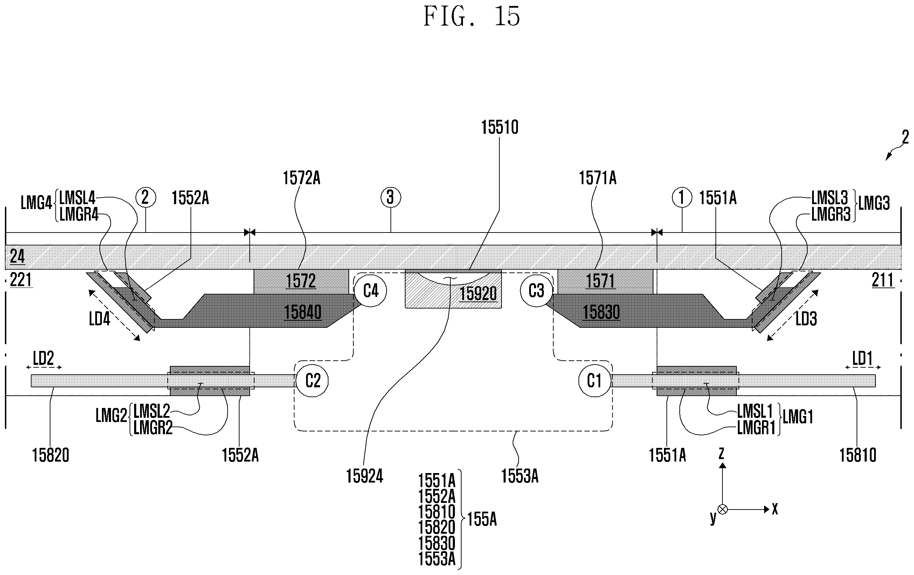

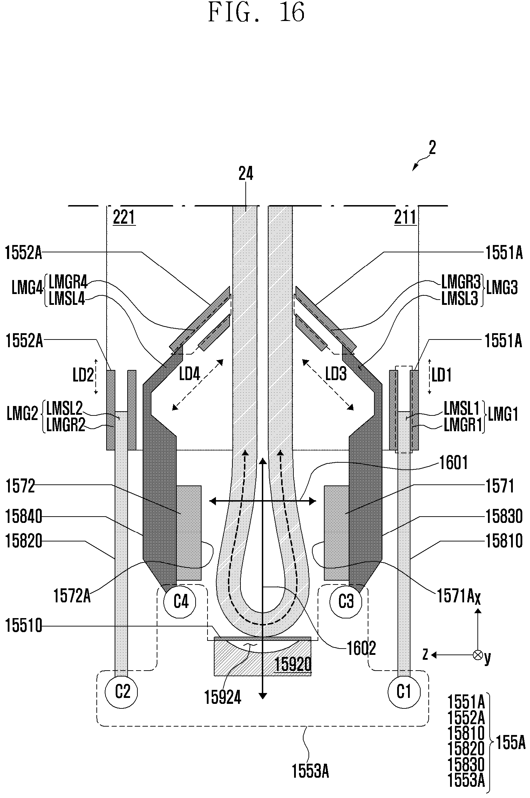

FIG. 15 is a cross-sectional view showing a foldable electronic device 2 in an unfolded state according to various embodiments of the disclosure. FIG. 16 is a cross-sectional view showing a foldable electronic device 2 in a folded state according to various embodiments of the disclosure.

Referring to FIGS. 15 and 16, the foldable electronic device 2 may include a flexible display module 24, a first frame 211, a second frame 221, a hinge module 155A, a first plate (or a first wing plate) 1571, a second plate (or a second wing plate) 1572, and/or a flexible film 15510 (e.g., the first flexible film 510 in FIG. 5). The hinge module 155A may be implemented by changing or modifying the first hinge module 5A according to the embodiment of FIG. 5 or the embodiment of FIG. 7.

According to an embodiment, the hinge module 155A may include a first bracket 1551A, a second bracket 1552A, a first portion 15810, a second portion 15820, a third portion 15830, a fourth portion 15840, and/or a center part 1553A. The center part 1553A may include various other elements (not shown) such as the center plate (15920) (e.g., the center plate 920 in FIG. 5). The first portion 15810 (e.g., a first hinge arm or a first arm), the second portion 15820 (e.g., a second hinge arm or a second arm), the third portion 15830 (e.g., a first rotator), and the fourth portion 15840 (e.g., a second rotator) may be rotatably connected to the center part 1553A (e.g., the center part 53A in FIG. 5).

According to an embodiment, the first portion 15810 and the center part 1553A may be connected to each other so as to enable rotational motion relative to each other around the first rotational axis C1. The second portion 15820 and the center part 1553A may be connected to each other so as to enable rotational motion relative to each other around the second rotational axis C2. The first rotational axis C1 and the second rotational axis C2 may be provided substantially symmetrically with reference to the center part 1553A or the center line A (see FIG. 2) of the foldable electronic device 2. The first portion 15810 and the second portion 15820 may be provided substantially symmetrically with reference to the center part 1553A or the center line A (see FIG. 2) of the foldable electronic device 2.

According to an embodiment, the third portion 15830 and the center part 1553A may be connected to each other so as to enable rotational motion relative to each other around the third rotational axis C3. The fourth portion 15840 and the center part 1553A may be connected to each other so as to enable rotational motion relative to each other around a fourth rotational axis C4. The third rotational axis C3 and the fourth rotational axis C4 may be provided substantially symmetrically with reference to the center part 1553A or the center line A (see FIG. 2) of the foldable electronic device 2. The third portion 15830 and the fourth portion 15840 may be provided substantially symmetrically with reference to the center part 1553A or the center line A (see FIG. 2) of the foldable electronic device 2.

According to an embodiment, the first portion 15810 may be slidably connected to the first bracket 1551A so as to enable linear motion relative to the first bracket 1551A in a first straight line direction LD1. The hinge module 155A may include a first linear motion guide LMG1 so that the first portion 15810 and the first bracket 1551A are slidable relative to each other (e.g., linearly move relative to each other) in the first straight line direction LD1. For example, the first linear motion guide LMG1 may include a first linear motion guide rail LMGR1 included in the first bracket 1551A, and a first linear motion slider LMSL1 included in the first portion 15810. The first bracket 1551A and the first portion 15810 may be connected to be stably slidable relative to each other in the first straight line direction LD1 by a combination (e.g., a sliding pair) of the first linear motion guide rail LMGR1 and the first linear motion slider LMSL1. The second portion 15820 may be slidably connected to the second bracket 1552A so as to enable linear motion relative to the second bracket 1552A in a second straight line direction LD2. The hinge module 155A may include a second linear motion guide LMG2 so that the second portion 15820 and the second bracket 1552A are slidable relative to each other (e.g., linearly move relative to each other) in the second straight line direction LD2. For example, the second linear motion guide LMG2 may include a second linear motion guide rail LMGR2 included in the second bracket 1552A, and a second linear motion slider LMSL2 included in the second portion 15820. The second bracket 1552A and the second portion 15820 may be connected to be stably slidable relative to each other in the second straight line direction LD2 by a combination (e.g., a sliding pair) of the second linear motion guide rail LMGR2 and the second linear motion slider LMSL2. The first linear motion guide LMG1 and the second linear motion guide LMG2 may be provided substantially symmetrically with reference to the center part 1553A or the center line A (see FIG. 2) of the foldable electronic device 2. The first straight line direction LD1 and the second straight line direction LD2 may be perpendicular to the direction (e.g., the y-axis direction) of the center line A (see FIG. 2) of the foldable electronic device 2. When viewed in the direction of the center line A of the foldable electronic device 2 (e.g., when viewed in the y-axis direction), the first straight line direction LD1 may be substantially parallel to the direction in which the first display area ① of the flexible display module 24 flatly extends. When viewed in the direction of the center line A of the foldable electronic device 2 (e.g., when viewed in the y-axis direction), the second straight line direction LD2 may be substantially parallel to the direction in which the second display area ② of the flexible display module 24 flatly extends.

According to an embodiment, the third portion 15830 may be slidably connected to the first bracket 1551A so as to enable linear motion relative to the first bracket 1551A in a third straight line direction LD3 different from the first straight line direction LD1. The hinge module 155A may include a third linear motion guide LMG3 so that the third portion 15830 and the first bracket 1551A are slidable relative to each other (e.g., linearly move relative to each other) in the third straight line direction LD3. For example, the third linear motion guide LMG3 may include a third linear motion guide rail LMGR3 included in the first bracket 1551A, and a third linear motion slider LMSL3 included in the third portion 15830. The first bracket 1551A and the third portion 15830 may be connected to be stably slidable relative to each other in the third straight line direction LD3 by a combination (e.g., a sliding pair) of the third linear motion guide rail LMGR3 and the third linear motion slider LMSL3. The fourth portion 15840 may be slidably connected to the second bracket 1552A so as to enable linear motion relative to the second bracket 1552A in a fourth straight line direction LD4 different from the second straight line direction LD2. The hinge module 155A may include a fourth linear motion guide LMG4 so that the fourth portion 15840 and the second bracket 1552A are slidable relative to each other (e.g., linearly move relative to each other) in the fourth straight line direction LD4. For example, the fourth linear motion guide LMG4 may include a fourth linear motion guide rail LMGR4 included in second bracket 1552A, and a fourth linear motion slider LMSL4 included in the fourth portion 15840. The second bracket 1552A and the fourth portion 15840 may be connected to be stably slidable relative to each other in the fourth straight line direction LD4 by a combination (e.g., a sliding pair) of the fourth linear motion guide rail LMGR4 and the fourth linear motion slider LMSL4. The third linear motion guide LMG3 and the fourth linear motion guide LMG4 may be provided substantially symmetrically with reference to the center part 1553A or the center line A (see FIG. 2) of the foldable electronic device 2. The third straight line direction LD3 and the fourth straight line direction LD4 may be perpendicular to the direction (e.g., the y-axis direction) of the center line A (see FIG. 2) of the foldable electronic device 2.

According to an embodiment, when the angle between the first frame 211 to which the first bracket 1551A is fixed and the second frame 221 to which the second bracket 1552A is fixed changes, there may be a rotational motion of the first portion 15810 around the first rotational axis C1, a linear motion between the first portion 15810 and the first bracket 1551A, a rotational motion of the third portion 15830 around the third rotational axis C3, and a linear motion between the third portion 15830 and the first bracket 1551A. When the angle between the first frame 211 to which the first bracket 1551A is fixed and the second frame 221 to which the second bracket 1552A is fixed changes, there may be a rotational motion of the second portion 15820 around the second rotational axis C2, a linear motion between the second portion 15820 and the second bracket 1552A, a rotational motion of the fourth portion 15840 around the fourth rotational axis C4, and a linear motion between the fourth portion 15830 and the second bracket 1552A.

According to an embodiment, when the foldable electronic device 2 is switched from an unfolded state to a folded state, the first rotational axis C1 and the third rotational axis C3 may be positioned to be further spaced apart from the first frame 211 to which the first bracket 1551A is fixed, compared to an unfolded state of the foldable electronic device 2. When the foldable electronic device 2 is switched from an unfolded state to a folded state, the second rotational axis C2 and the fourth rotational axis C4 may be positioned to be further spaced apart from the second frame 221 to which the second bracket 1552A is fixed, compared to an unfolded state of the foldable electronic device 2. When the foldable electronic device 2 is switched from an unfolded state to a folded state, the third portion 15830 may move back with respect to the first bracket 1551A and then positioned, in a direction opposite to the direction toward the third display area ③ of the flexible display module 24. When the foldable electronic device 2 is switched from an unfolded state to a folded state, the fourth portion 15840 may move back with respect to the second bracket 1552A and then positioned, in a direction opposite to the direction toward the third display area ③ of the flexible display module 24. The first plate 1551 may be coupled to the third portion 15830, and the second plate 1572 may be coupled to the fourth portion 15840. When the foldable electronic device 2 is switched from an unfolded state to a folded state, the first surface 1571A included in the first plate 1571 and the second surface 1572A included in the second plate 1572 may face each other and be positioned to be spaced apart from each other. When the foldable electronic device 2 is switched from an unfolded state to a folded state, due to the moving back of the third portion 15830 with respect to the first bracket 1551A, the first plate 1571 coupled to the third portion 15830 may be disposed to be tilted with respect to the first bracket 1551A compared to an unfolded state of the foldable electronic device 2, so as to allow a space, in which the third display area ③ of the flexible display module 24 can be disposed in a bent shape capable of reducing bending stress and/or a buckling phenomenon, to be provided therein. When the foldable electronic device 2 is switched from an unfolded state to a folded state, due to the moving back of the fourth portion 15840 with respect to the second bracket 1552A, the second plate 1572 coupled to the fourth portion 15840 may be disposed to be tilted with respect to the second bracket 1552A compared to an unfolded state of the foldable electronic device 2, so as to allow a space, in which the third display area ③ of the flexible display module 24 can be disposed in a bent shape capable of reducing bending stress and/or a buckling phenomenon, to be provided therein. When the foldable electronic device 2 is switched from an unfolded state to a folded state, the space between the first surface 1571A of the first plate 1571 and the second surface 1552A of the second plate 1572 may have a width in the first direction 1601, the width being provided to allow the third display area ③ to be disposed in a bent shape capable of reducing bending stress and/or a buckling phenomenon. In a folded state of the foldable electronic device 2, the space between the first plate 1571 and the second plate 1572 may be provided in a shape widening in the direction toward the hinge housing 23 (see FIG. 4). When the foldable electronic device 2 is switched from an unfolded state to a folded state, that the first rotational axis C1 and the third rotational axis C3 become far away from the first frame 211 where the first display area ① is disposed, and that the second rotational axis C2 and the fourth rotational axis C4 become far away from the second frame 221 where the second display area ② is disposed, may mean that a portion of the center part 1553A, which includes the center plate 15920 and the hinge housing 23 (see FIG. 4), is positioned, in the second direction 1602 perpendicular to the first direction 1601, far away from the structure in which the first frame 211 and the second frame 221 face each other. When the foldable electronic device 2 is switched from an unfolded state to a folded state, due to that a portion of the center part 1553A, which includes the center plate 15920 and the hinge housing 23 (see FIG. 4), is positioned, in the second direction 1602, far away from the structure in which the first frame 211 and the second frame 221 face each other, the space may have a width in the second direction 1602, the width being provided to allow the third display area ③ to be disposed in a bent shape capable of reducing bending stress and/or a buckling phenomenon.

According to an embodiment, when the foldable electronic device 2 is switched from an unfolded state to a folded state, due to that a portion of the center part 1553A, which includes the center plate 15920 and the hinge housing 23 (see FIG. 4), is positioned, in the second direction 1602, far away from the structure in which the first frame 211 and the second frame 221 face each other, the hinge housing 23 may be exposed to the outside through an open gap between the first housing 21 and the second housing 22 as illustrated in FIG. 3, while reducing the gap with the first housing 21 (see FIG. 2) and the gap with the second housing 22 (see FIG. 2).

According to an embodiment, when the foldable electronic device 2 is switched from a folded state to an unfolded state, by the relative position change between the first frame 211 and the second frame 221 and the hinge module 155A operating in response thereto, the first surface 1571A of the first plate 1571 and the second surface 1572A of the second plate 1572 may be positioned to support the third display area ③ of the flexible display module 24.

According to an embodiment, the center plate 15920 (e.g., the center plate 920 in FIG. 5) may include a recess 15924 (e.g., the recess 924 in FIG. 5) provided on one surface (e.g., the third surface 920A in FIG. 5) facing the third display area ③ of the flexible display module 24. The flexible film 15510 (e.g., the first flexible film 510 in FIG. 5) may be disposed on the center plate 15920 between the flexible display module 24 and the center plate 15920. When in the foldable electronic device 2 in an unfolded state, viewed from above the flexible display module 24, the flexible film 15510 may overlap the recess 15924 of the center plate 15920. The structure, which includes the center plate 15920 including the recess 15924 and the flexible film 15510 disposed on the center plate 15920, may perform substantially the same function as the structure which includes the center plate 920 including the recess 924 and the first flexible film 510 disposed on the center plate 920 according to the embodiment of FIG. 5.

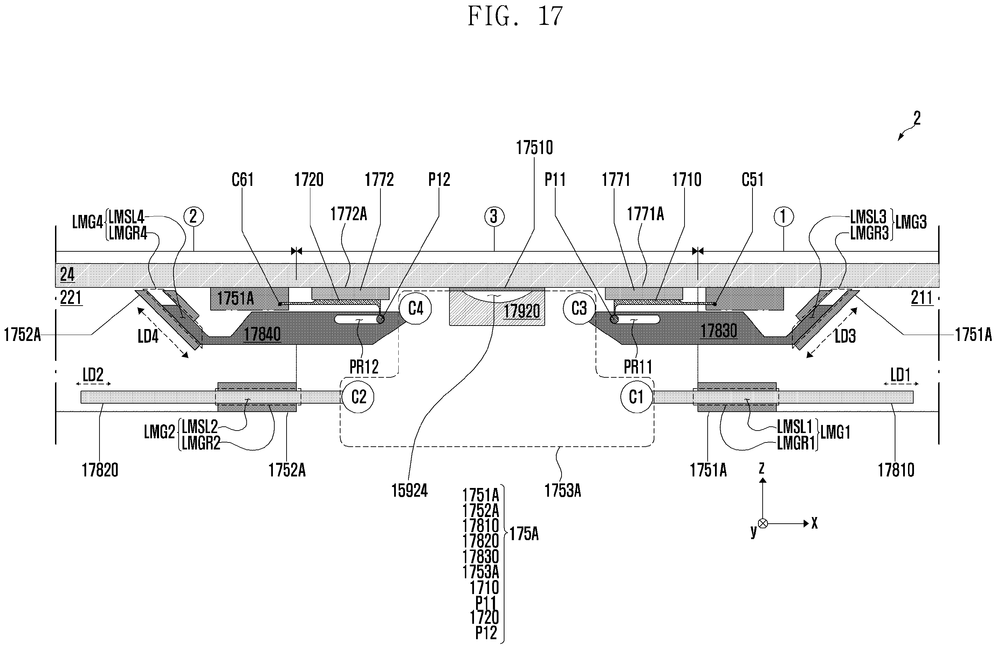

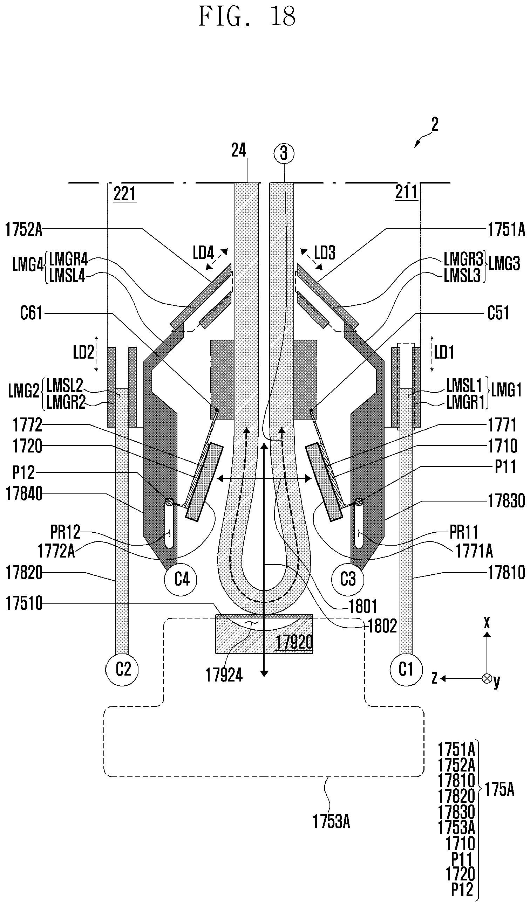

FIG. 17 is a cross-sectional view showing a foldable electronic device 2 in an unfolded state according to various embodiments of the disclosure. FIG. 18 is a cross-sectional view showing a foldable electronic device 2 in a folded state according to various embodiments of the disclosure.

Referring to FIGS. 17 and 18, the foldable electronic device 2 may include a flexible display module 24, a first frame 211, a second frame 221, a hinge module 175A, a first plate (or a first wing plate) 1771, a second plate (or a second wing plate) 1772, and/or a flexible film 17510 (e.g., the first flexible film 510 in FIG. 5). The hinge module 175A may be implemented by changing or modifying the first hinge module 5A according to the embodiment of FIG. 5 or the embodiment of FIG. 7 or the hinge module 155A according to the embodiment of FIG. 15.

According to an embodiment, the hinge module 175A may include a first bracket 1751A, a second bracket 1752A, a first portion 17810, a second portion 17820, a third portion 17830, a fourth portion 17840, a center part 1753A, a first connection part 1710, a second connection part 1720, a first pin P11, and/or a second pin P12. The center part 1753A (e.g., the center part 53A in FIG. 5 or the center part 1553A in FIG. 15) may include various other elements (not shown) such as the center plate 17920 (e.g., the center plate 920 in FIG. 5 or the center plate 15920 in FIG. 15). The first portion 17810 (e.g., a first hinge arm or a first arm), the second portion 17820 (e.g., a second hinge arm or a second arm), the third portion 17830 (e.g., a first rotator), and the fourth portion 17840 (e.g., a second rotator) may be rotatably connected to the center part 1753A (e.g., the center part 53A in FIG. 5).

According to an embodiment, the first portion 17810 and the center part 1753A may be connected to each other so as to enable rotational motion relative to each other around the first rotational axis C1. The second portion 17820 and the center part 1753A may be connected to each other so as to enable rotational motion relative to each other around the second rotational axis C2. The first rotational axis C1 and the second rotational axis C2 may be provided substantially symmetrically with reference to the center part 1753A or the center line A (see FIG. 2) of the foldable electronic device 2. The first portion 17810 and the second portion 17820 may be provided substantially symmetrically with reference to the center part 1753A or the center line A (see FIG. 2) of the foldable electronic device 2.

According to an embodiment, the third portion 17830 and the center part 1753A may be connected to each other so as to enable rotational motion relative to each other around the third rotational axis C3. The fourth portion 17840 and the center part 1753A may be connected to each other so as to enable rotational motion relative to each other around a fourth rotational axis C4. The third rotational axis C3 and the fourth rotational axis C4 may be provided substantially symmetrically with reference to the center part 1753A or the center line A (see FIG. 2) of the foldable electronic device 2. The third portion 17830 and the fourth portion 17840 may be provided substantially symmetrically with reference to the center part 1753A or the center line A (see FIG. 2) of the foldable electronic device 2.

According to an embodiment, the first portion 17810 (e.g., the first portion 15810 in FIG. 15) may be slidably connected to the first bracket 1751A so as to enable linear motion relative to the first bracket 1751A (e.g., the first bracket 1551A in FIG. 15) in the first straight line direction LD1. The hinge module 175A may include a first linear motion guide LMG1 (e.g., the first linear motion guide LMG1 in FIG. 15) so that the first portion 17810 and the first bracket 1751A are slidable relative to each other (e.g., linearly move relative to each other) in the first straight line direction LD1. For example, the first linear motion guide LMG1 may include a first linear motion guide rail LMGR1 included in the first bracket 1751A, and a first linear motion slider LMSL1 included in the first portion 17810. The second portion 17820 (e.g., the second portion 15820 in FIG. 15) may be slidably connected to the second bracket 1752A so as to enable linear motion relative to the second bracket 1752A (e.g., the second bracket 1552A in FIG. 15) in the second straight line direction LD2. The hinge module 175A may include a second linear motion guide LMG2 (e.g., the second linear motion guide LMG2 in FIG. 15) so that the second portion 17820 and the second bracket 1752A are slidable relative to each other (e.g., linearly move relative to each other) in the second straight line direction LD2. For example, the second linear motion guide LMG2 may include a second linear motion guide rail LMGR2 included in the second bracket 1752A, and a second linear motion slider LMSL2 included in the second portion 17820. The first linear motion guide LMG1 and the second linear motion guide LMG2 may be provided substantially symmetrically with reference to the center part 1753A or the center line A (see FIG. 2) of the foldable electronic device 2.

According to an embodiment, the third portion 17830 (e.g., the third portion 15830 in FIG. 15) may be slidably connected to the first bracket 1751A so as to enable linear motion relative to the first bracket 1751A (e.g., the first bracket 1551A in FIG. 15) in the third straight line direction LD3 different from the first straight line direction LD1. The hinge module 175A may include a third linear motion guide LMG3 (e.g., the third linear motion guide LMG3 in FIG. 15) so that the third portion 17830 and the first bracket 1751A are slidable relative to each other (e.g., linearly move relative to each other) in the third straight line direction LD3. For example, the third linear motion guide LMG3 may include a third linear motion guide rail LMGR3 included in the first bracket 1751A, and a third linear motion slider LMSL3 included in the third portion 17830. The fourth portion 17840 (e.g., the fourth portion 15840 in FIG. 15) may be slidably connected to the second bracket 1752A so as to enable linear motion relative to the second bracket 1752A (e.g., the second bracket 1552A in FIG. 15) in the fourth straight line direction LD4 different from the second straight line direction LD2. The hinge module 175A may include a fourth linear motion guide LMG4 (e.g., the fourth linear motion guide LMG4 in FIG. 15) so that the fourth portion 17840 and the second bracket 1752A are slidable relative to each other (e.g., linearly move relative to each other) in the fourth straight line direction LD4. For example, the fourth linear motion guide LMG4 may include a fourth linear motion guide rail LMGR4 included in second bracket 1752A, and a fourth linear motion slider LMSL4 included in the fourth portion 17840. The third linear motion guide LMG3 and the fourth linear motion guide LMG4 may be provided substantially symmetrically with reference to the center part 1753A or the center line A (see FIG. 2) of the foldable electronic device 2.

According to an embodiment, the first connection part 1710 may connect the first bracket 1751A and the third portion 17830. The first connection part 1710 may be capable of rotational motion relative to the first bracket 1751A around a fifth rotational axis C51 which is parallel to the third rotational axis C3. For example, the fifth rotational axis C51 may be provided by a shaft or a pin for connecting the first connection part 1710 and the first bracket 1751A. The first pin P11 may be disposed in the first connection part 1710. For example, the first connection part 1710 may include a pin hole corresponding to the first pin P11, and the first pin P11 may be disposed in the first connection part 1710 in the form of extending through the pin hole. The first pin P11 coupled to the first connection part 1710 may be disposed and maintained substantially parallel to the fifth rotational axis C51 (or the third rotational axis C3). The first pin P11 may be substantially parallel to the fifth rotational axis C51 and be positioned to be spaced apart from the fifth rotational axis C51. In various embodiments, the first connection part 1710 may be provided in a shape further including a portion including the first pin P11, and in this case, the first pin P11 may be omitted. The third portion 17830 may include a first pin rail PR11 having a recess shape or a slit shape to correspond to the first pin P11. The first pin P11 may be positioned or inserted in the first pin rail PR11. When the angle between the first frame 211 and the second frame 221 changes, the third portion 17830 may be moved in the third straight line direction LD3 with respect to the first bracket 1751A, and the first connection part 1710 may be rotated around the fifth rotational axis C51 relative to the third portion 17830 due to the interaction between the first pin P11 and the first pin rail PR11. When the angle between the first frame 211 and the second frame 221 changes, the position of the first pin P11 with respect to the first pin rail PR11 may vary according to the linear motion of the third portion 15830 relative to the first bracket 1751A.

According to an embodiment, the second connection part 1720 may connect the second bracket 1752A and the fourth portion 17840. The second connection part 1720 may be capable of rotational motion relative to the second bracket 1752A around a sixth rotational axis C61 which is parallel to the fourth rotational axis C4. For example, the sixth rotational axis C61 may be provided by a shaft or a pin for connecting the second connection part 1720 and the second bracket 1752A. The second pin P12 may be disposed in the second connection part 1720. For example, the second connection part 1720 may include a pin hole corresponding to the second pin P12, and the second pin P12 may be disposed in the second connection part 1720 in the form of extending through the pin hole. The second pin P12 coupled to the second connection part 1720 may be disposed and maintained substantially parallel to the sixth rotational axis C61 (or the fourth rotational axis C4). The second pin P12 may be substantially parallel to the sixth rotational axis C61 and be positioned to be spaced apart from the sixth rotational axis C61. In various embodiments, the second connection part 1720 may be provided in a shape further including a portion including the second pin P12, and in this case, the second pin P12 may be omitted. The fourth portion 17840 may include a second pin rail PR12 having a recess shape or a slit shape to correspond to the second pin P12. A pin-rail structure including the second pin P12 and the second pin rail PR12 may be provided substantially symmetrically to the pin-rail structure including the first pin P11 and the first pin rail PR11 with reference to the center part 1553A or the center line A (see FIG. 2) of the foldable electronic device 2. When the angle between the first frame 211 and the second frame 221 changes, the fourth portion 17840 may be moved in the fourth straight line direction LD4 relative to the second bracket 1752A, and the second connection part 1720 may be rotated around the sixth rotational axis C61 relative to the fourth portion 17840 due to the interaction between the second pin P12 and the second pin rail PR12. When the angle between the first frame 211 and the second frame 221 changes, the position of the second pin P12 with respect to the second pin rail PR12 may vary according to the linear motion of the fourth portion 15840 relative to the second bracket 1752A.

According to an embodiment, when the angle between the first frame 211 to which the first bracket 1751A is fixed and the second frame 221 to which the second bracket 1752A is fixed changes, there may be a rotational motion of the first portion 17810 around the first rotational axis C1, a linear motion between the first portion 17810 and the first bracket 1751A, a rotational motion of the third portion 17830 around the third rotational axis C3, and a linear motion between the third portion 17830 and the first bracket 1751A. When the angle between the first frame 211 to which the first bracket 1751A is fixed and the second frame 221 to which the second bracket 1752A is fixed changes, there may be a rotational motion of the second portion 17820 around the second rotational axis C2, a linear motion between the second portion 17820 and the second bracket 1752A, a rotational motion of the fourth portion 17840 around the fourth rotational axis C4, and a linear motion between the fourth portion 17830 and the second bracket 1752A. When the angle between the first frame 211 to which the first bracket 1751A is fixed and the second frame 221 to which the second bracket 1752A is fixed changes, there may be a movement of the first connection part 1710 for connecting the third portion 17830 and the first bracket 1751A and a movement of the second connection part 1720 for connecting the fourth portion 17840 and the second bracket 1752A.

According to an embodiment, the first plate 1771 may be coupled to the first connection part 1710, and the second plate 1772 may be coupled to the second connection part 1720.

According to an embodiment, when the foldable electronic device 2 is switched from an unfolded state to a folded state, the first rotational axis C1 and the third rotational axis C3 may be positioned to be further spaced apart from the first frame 211 to which the first bracket 1751A is fixed, compared to an unfolded state of the foldable electronic device 2. When the foldable electronic device 2 is switched from an unfolded state to a folded state, the second rotational axis C2 and the fourth rotational axis C4 may be positioned to be further spaced apart from the second frame 221 to which the second bracket 1552A is fixed, compared to an unfolded state of the foldable electronic device 2. When the foldable electronic device 2 is switched from an unfolded state to a folded state, the third portion 17830 may move back with respect to the first bracket 1751A and then positioned, in a direction opposite to the direction toward the third display area ③ of the flexible display module 24. When the foldable electronic device 2 is switched from an unfolded state to a folded state, the fourth portion 17840 may move back with respect to the second bracket 1752A and then positioned, in a direction opposite to the direction toward the third display area ③ of the flexible display module 24. When the foldable electronic device 2 is switched from an unfolded state to a folded state, the first surface 1771A included in the first plate 1771 and the second surface 1772A included in the second plate 1772 may face each other and be positioned to be spaced apart from each other. When the foldable electronic device 2 is switched from an unfolded state to a folded state, due to the moving back of the third portion 17830 with respect to the first bracket 1751A and the movement of the first connection part 1710 for connecting the third portion 17830 and the first bracket 1751A, the first plate 1771 coupled to the first connection part 1710 may be disposed to be tilted with respect to the first bracket 1751A compared to an unfolded state of the foldable electronic device 2, so as to enable a space, in which the third display area ③ of the flexible display module 24 can be disposed in a bent shape capable of reducing bending stress and/or a buckling phenomenon, to be provided therein. When the foldable electronic device 2 is switched from an unfolded state to a folded state, due to the moving back of the fourth portion 17840 with respect to the second bracket 1752A and the movement of the second connection part 1720 for connecting the fourth portion 17840 and the second bracket 1752A, the second plate 1772 coupled to the second connection part 1720 may be disposed to be tilted with respect to the second bracket 1752A compared to an unfolded state of the foldable electronic device 2, so as to enable a space, in which the third display area ③ of the flexible display module 24 can be disposed in a bent shape capable of reducing bending stress and/or a buckling phenomenon, to be provided therein.

When the foldable electronic device 2 is switched from an unfolded state to a folded state, the space between the first surface 1771A of the first plate 1771 and the second surface 1772A of the second plate 1772 may have a width in the first direction 1801, which is provided to allow the third display area ③ to be disposed in a bent shape capable of reducing bending stress and/or a buckling phenomenon. In a folded state of the foldable electronic device 2, the space between the first surface 1771A of the first plate 1771 and the second surface 1772A of the second plate 1772 may be provided in a shape widening in the direction toward the hinge housing 23 (see FIG. 4). When the foldable electronic device 2 is switched from an unfolded state to a folded state, that the first rotational axis C1 and the third rotational axis C3 become far away from the first frame 211 where the first display area ① is disposed, and that the second rotational axis C2 and the fourth rotational axis C4 become far away from the second frame 221 where the second display area ② is disposed, may mean that a portion of the center part 1753A, which includes the center plate 17920 and the hinge housing 23 (see FIG. 4), is positioned, in the second direction 1802 perpendicular to the first direction 1801, far away from the structure in which the first frame 211 and the second frame 221 face each other. When the foldable electronic device 2 is switched from an unfolded state to a folded state, due to that a portion of the center part 1753A, which includes the center plate 17920 and the hinge housing 23 (see FIG. 4), is positioned, in the second direction 1802, far away from the structure in which the first frame 211 and the second frame 221 face each other, the space may have a width in the second direction 1802, which is provided to allow the third display area ③ to be disposed in a bent shape capable of reducing bending stress and/or a buckling phenomenon.

According to an embodiment, when the foldable electronic device 2 is switched from an unfolded state to a folded state, due to that a portion of the center part 1753A, which includes the center plate 17920 and the hinge housing 23 (see FIG. 4), is positioned, in the second direction 1802, far away from the structure in which the first frame 211 and the second frame 221 face each other, the hinge housing 23 (see FIG. 4) may be exposed to the outside through an open gap between the first housing 21 and the second housing 22 as illustrated in FIG. 3, while reducing the gap with the first housing 21 and the gap with the second housing 22.

According to an embodiment, when the foldable electronic device 2 is switched from a folded state to an unfolded state, by the relative position change between the first frame 211 and the second frame 221 and the hinge module 175A operating in response thereto, the first surface 1771A of the first plate 1771 and the second surface 1772A of the second plate 1772 may be positioned to support the third display area ③ of the flexible display module 24.

According to various embodiments (not shown), the embodiments of FIGS. 17 and 18 may be changed or modified such that the first connection part 1710 enables rotational motion relative to the third portion 17830 around the fifth rotational axis, a first pin disposed in the first connection part 1710 is positioned on a pin rail provided in the first bracket 1751A, the second connection part 1720 enables rotational motion relative to the fourth portion 17840 around the sixth rotational axis, and a second pin disposed in the second connection part 1720 is positioned on a pin rail provided in the second bracket 1752A.

According to an embodiment, the center plate 17920 (e.g., the center plate 920 in FIG. 5 or the center plate 15920 in FIG. 15) may include a recess 17924 (e.g., the recess 924 in FIG. 5) provided on one surface (e.g., the third surface 920A in FIG. 5) facing the third display area ③ of the flexible display module 24. The flexible film 17510 (e.g., the first flexible film 510 in FIG. 5) may be disposed on the center plate 17920 between the flexible display module 24 and the center plate 17920. When, in the foldable electronic device 2 in an unfolded state, viewed from above the flexible display module 24, the flexible film 17510 may overlap the recess 17924 of the center plate 17920. The structure including the center plate 17920 including the recess 17924, and the flexible film 17510 disposed on the center plate 17920 may perform substantially the same function as the structure including the center plate 920 including the recess 924 and the first flexible film 510 disposed on the center plate 920 according to the embodiment of FIG. 5.

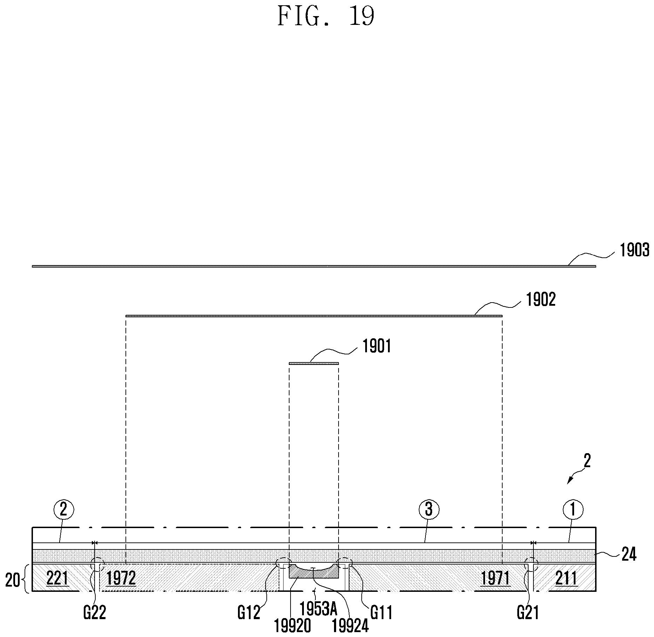

FIG. 19 is a cross-sectional view showing a foldable electronic device 2 in an unfolded state according to various embodiments of the disclosure.

Referring to FIG. 19, the foldable electronic device 2 may include a flexible display module 24, a first frame 211, a second frame 221, a first plate (e.g., a first wing plate) 1971, a second plate (or a second wing plate) 1972, and/or a center plate 19920. The first frame 211 and the second frame 221 may be connected to each other through a hinge module (e.g., the first hinge module 5A in FIG. 5, the hinge module 155A in FIG. 15, or the hinge module 175A in FIG. 17). In the example where the first hinge module 5A connects the first plate 211 and the second plate 221 according to FIG. 5, the center plate 19920 may be the center plate (920) included in the center part 53A of the first hinge module 5A. In the example where the hinge module 155A connects the first plate 211 and the second plate 221 according to FIG. 15, the center plate 19920 may be the center plate 15920 included in the center part 1553A of the hinge module 155A. In the example where the hinge module 175A connects the first plate 211 and the second plate 221 according to FIG. 17, the center plate 19920 may be the center plate 17920 included in the center part 1753A of the hinge module 175A. The center plate 19920 may include a recess 19924 (e.g., the recess 924 in FIG. 5, the recess 15924 in FIG. 15, or the recess 17924 in FIG. 17) positioned to correspond to the third display area ③ of the flexible display module 24.

According to a first exemplary embodiment, a flexible film 1901 (e.g., the first flexible film 510 in FIG. 5, the flexible film 15510 in FIG. 15, or the flexible film 17510 in FIG. 17) positioned between the flexible display module 24 and the foldable housing 20 may overlap the center plate 19920 when, in the foldable electronic device 2 in the unfolded state, viewed from above the flexible display module 24. A bonding material or an adhesive material may be disposed between the flexible film 1901 and the center plate 19920.

According to a second exemplary embodiment, the flexible film 1902 positioned between the flexible display module 24 and the foldable housing 20 may further overlap the first plate 1971 and the second plate 1972, compared to the flexible film 1901 according to the first exemplary embodiment, when, in the foldable electronic device 2 in the unfolded state, viewed from above the flexible display module 24. The foldable electronic device 2 may include a first fixation area (or a first fixation part) for coupling the flexible film 1902 and the first plate 1971, and a second fixation area (or a second fixation part) for coupling the flexible film 1902 and the second plate 1972. The first fixation area may include a bonding material or an adhesive material at least partially disposed between the flexible film 1902 and the first plate 1971. The second fixation area may include a bonding material or an adhesive material at least partially disposed between the flexible film 1902 and the second plate 1972. A portion of the flexible film 1902, which corresponds to the third display area ③ of the flexible display module 24, may be pulled from both sides thereof by the first fixation area and the second fixation area and thus be disposed to be substantially flat, in an unfolded state of the foldable electronic device 2. In various embodiments, the foldable electronic device 2 may further include a fixation area (or a fixation part) for coupling the flexible film 1902 and the center plate 19920 (the first surface area 921 and/or the second surface area 922 in FIG. 5) through a bonding material or an adhesive material. The flexible film 1902 may flatly support the third display area ③ to reduce a sagging phenomenon or a crease phenomenon of a portion of the third display area ③ of the flexible display module 24, the portion corresponding to a gap G11 between the center plate 19920 and the first plate 1971, in an unfolded state of the foldable electronic device 2. The flexible film 1902 may flatly support the third display area ③ to reduce a sagging phenomenon or a crease phenomenon of a portion of the third display area ③ of the flexible display module 24, the portion corresponding to a gap G12 between the center plate 19920 and the second plate 1972, in the unfolded state of the foldable electronic device 2.

According to a third exemplary embodiment, the flexible film 1903 positioned between the flexible display module 24 and the foldable housing 20 may further overlap the first frame 211 and the second frame 221, compared to the flexible film 1902 according to the second exemplary second, when, in the foldable electronic device 2 in the unfolded state, viewed from above the flexible display module 24. The foldable electronic device 2 may include a first fixation area (or a first fixation part) for coupling the flexible film 1903 and the first frame 211 (or the first support area 411A in FIG. 4), and a second fixation area (or a second fixation part) for coupling the flexible film 1903 and the second frame 221 (or the second support area 421A in FIG. 4). The first fixation area may include a bonding material or an adhesive material at least partially disposed between the flexible film 1903 and the first frame 211. The second fixation area may include a bonding material or an adhesive material at least partially disposed between the flexible film 1903 and the second frame 221. A portion of the flexible film 1903, which corresponds to the third display area ③ of the flexible display module 24, may be pulled from both sides thereof by the first fixation area and the second fixation area and thus be disposed to be substantially flat, in an unfolded state of the foldable electronic device 2. In various embodiments, the foldable electronic device 2 may further include a fixation area (or a fixation part) for coupling the flexible film 1902 and the first plate 1971 through a bonding material or an adhesive material, and/or a fixation area (or a fixation part) for coupling the flexible film 1902 and the second plate 1972 through a bonding material or an adhesive material. In various embodiments, the foldable electronic device 2 may further include a fixation area (or a fixation part) for coupling the flexible film 1902 and the center plate 19920 (the first surface area 921 and/or the second surface area 922 in FIG. 5) through a bonding material or an adhesive material. The flexible film 1903 may flatly support the third display area ③ to reduce a sagging phenomenon or a crease phenomenon of a portion of the third display area ③ of the flexible display module 24, the portion corresponding to a gap G21 between the first plate 1971 and the first frame 211, in an unfolded state of the foldable electronic device 2. The flexible film 1903 may flatly support the third display area ③ to reduce a sagging phenomenon or a crease phenomenon of a portion of the third display area ③ of the flexible display module 24, the portion corresponding to a gap G22 between the second plate 1972 and the second frame 221, in an unfolded state of the foldable electronic device 2.

According to an exemplary embodiment of the disclosure, a foldable electronic device (e.g., the foldable electronic device 2 in FIG. 2) may include a foldable housing (e.g., the foldable housing 20 in FIG. 4). The foldable housing may include a first housing (e.g., the first housing 21 in FIG. 2), a second housing (e.g., the second housing 22 in FIG. 2), and a hinge part (e.g., the hinge part H in FIG. 9) configured to connect the first housing and the second housing. The foldable electronic device may include a flexible display module (e.g., the flexible display module 24 in FIG. 4). The flexible display module may include a first display area ①, a second display area ②, and a third display area ③. The third display area may be positioned to correspond to the hinge part. The first display area may extend from the third display area and be positioned in the first housing. The second display area may extend from the third display area and be positioned in the second housing. The foldable electronic device may include a flexible film (e.g., the first flexible film 510 in FIG. 5). The flexible film may be positioned between the foldable housing and the flexible display module and may be disposed in the foldable housing. The hinge part may include a center plate (e.g., the center plate 920 in FIG. 5). The center plate may include a recess (e.g., the recess 924 in FIG. 5) provided on one surface (e.g., the third surface 920A in FIG. 5) facing the third display area. A part or all of the flexible film may be supported by the center plate between the third display area and the center plate and thus be flatly disposed, and may overlap the recess.

According to an exemplary embodiment of the disclosure, one surface (e.g., the third surface 920A in FIG. 5) of the center plate, which faces the third display area, may include a surface area (e.g., the third surface area 923 in FIG. 5) configured to provide the recess. The surface area may be provided to have a curved-surface shape substantially matching a part (e.g., reference numeral "24D" in FIG. 6) of a rear surface of the third display area disposed in a bent shape in a folded state of the foldable housing, the part being aligned with the surface area.

According to an exemplary embodiment of the disclosure, the hinge part may include a hinge module (e.g., the first hinge module 5A in FIG. 5). The hinge module may include a first bracket (e.g., the first bracket 51A in FIG. 5) fixed to the first housing, a second bracket (e.g., the second bracket 52A in FIG. 5) fixed to the second housing, and a bracket connection part configured to connect the first bracket and the second bracket. The bracket connection part may include a center plate (e.g., the center plate 920 in FIG. 5). The hinge part may include a first plate (e.g., the first plate 71 in FIG. 5) and a second plate (e.g., the second plate 72 in FIG. 5) which are coupled to the bracket connection part. In an unfolded state of the foldable housing, the first surface (e.g., the first surface 71A in FIG. 5) included in the first plate may be configured to support a part of the third display area, and the second surface (e.g., the second surface 72A in FIG. 5) included in the second plate may be configured to support a part of the third display area. In an unfolded state of the foldable housing, the flexible film may be configured to support a part of the third display area, the part corresponding to a portion between the first surface and the second surface. In a folded state of the foldable housing, the first surface and the second surface may face each other while being spaced apart from each other, and the third display area may be disposed in a bent shape in a space between the first surface, the second surface, and the center plate.

According to an exemplary embodiment of the disclosure, the foldable electronic device may be configured such that the first surface (e.g., the first surface 1571A in FIG. 16) and the second surface (e.g., the second surface 1572A in FIG. 16) are arranged parallel to each other, in a folded state of the foldable housing.

According to an exemplary embodiment of the disclosure, the foldable electronic device may be configured such that the first surface (e.g., the first surface 71A in FIG. 6 or the first surface 1771A in FIG. 18) and the second surface (e.g., the second surface 72A in FIG. 6 or the second surface 1772A in FIG. 18) form an acute angle, in a folded state of the foldable housing. The foldable electronic device may be configured such that a space between the first surface and the second surface is provided with a shape widening in a direction toward the center plate.

According to an exemplary embodiment of the disclosure, when viewed from above the flexible display module in an unfolded state of the foldable housing, the center plate may include a third surface (e.g., the third surface 920A in FIG. 5) positioned between the first surface (e.g., the first surface 71A in FIG. 5) and the second surface (e.g., the second surface 72A in FIG. 5). When viewed from above the flexible display module in an unfolded state of the foldable housing, the third surface may include a first surface area (e.g., the first surface area 921 in FIG. 5), a second surface area (e.g., the second surface area 922 in FIG. 5), and a third surface area (e.g., the third surface area 923 in FIG. 5) positioned between the first surface area and the second surface area. The third surface area may be configured to provide a recess (e.g., the recess 924 in FIG. 5). The flexible film (e.g., the first flexible film 510 in FIG. 5) may include a first area attached to the first surface area (e.g., the first area 511 in FIG. 5), a second area attached to the second surface area (e.g., the second area 512 in FIG. 5), and a third area (e.g., the third area 513 in FIG. 5) configured to connect the first area and the second area and overlap the recess.

According to an exemplary embodiment of the disclosure, when viewed from above the flexible display module in an unfolded state of the foldable housing, the center plate may include a third surface (e.g., the third surface 920A in FIG. 5) positioned between the first surface and the second surface. The third surface may be configured to provide a recess (e.g., the recess 924 in FIG. 5). When viewed from above the flexible display module in an unfolded state of the foldable housing, the flexible film (e.g., the flexible film 1902 in FIG. 19) may overlap the first surface, the second surface, and the third surface.

According to an exemplary embodiment of the disclosure, the foldable electronic device may further include a fixation area positioned between the flexible film and the foldable housing. The fixation area may include a bonding material or an adhesive material configured to couple the flexible film and the foldable housing. The fixation area may include a first fixation area positioned in at least a part between the flexible film and the first surface, and a second fixation area positioned in at least a part between the flexible film and the second surface.

According to an exemplary embodiment of the disclosure, when viewed from above the flexible display module in an unfolded state of the foldable housing, the center plate may include a third surface (e.g., the third surface 923 in FIG. 5) positioned between the first surface and the second surface and configured to provide the recess. When viewed from above the flexible display module in an unfolded state of the foldable housing, the flexible film may overlap the first surface, the second surface, the third surface, a first support area (e.g., the first support area 411A in FIG. 4) of the first housing, the first display area being disposed in the first support area, and a second support area (e.g., the second support area 421A in FIG. 4) of the second housing, the second display area being disposed in the second support area.

According to an exemplary embodiment of the disclosure, the foldable electronic device may further include a fixation area disposed between the flexible film and the foldable housing. The fixation area may include a bonding material or an adhesive material configured to couple the flexible film and the foldable housing. The fixation area may include a first fixation area positioned in at least a part between the flexible film and the first support area, and a second fixation area positioned in at least a part between the flexible film and the second support area.

According to an exemplary embodiment of the disclosure, the hinge part may include a center part (e.g., the center part 53A in FIG. 5) including a center plate. The hinge part may include a first portion (e.g., the first portion 810 in FIG. 5) connected to the center part so as to be rotatable around a first rotational axis (e.g., the first rotational axis C1 in FIG. 5). The hinge part may include a third portion (e.g., the third portion 830 in FIG. 5) connected to the center part so as to be rotatable around a third rotational axis (e.g., the third rotational axis C3 in FIG. 5) parallel to the first rotational axis. The hinge part may include a first bracket (e.g., the first bracket 51A in FIG. 5) connected to the first portion and the third portion. The first bracket may be fixed to the first housing. The hinge part may include a second portion (e.g., the second portion 820 in FIG. 5) connected to the center part so as to be rotatable around a second rotational axis (e.g., the second rotational axis C2 in FIG. 5). The hinge part may include a fourth portion (e.g., the fourth portion 840 in FIG. 5) connected to the center part so as to be rotatable around a fourth rotational axis (e.g., the fourth rotational axis C4 in FIG. 5) parallel to the second rotational axis. The hinge part may include a second bracket (e.g., the second bracket 52A in FIG. 5) connected to the third portion and the fourth portion. The second bracket may be fixed to the second housing. The first rotational axis and the second rotational axis may be positioned to be symmetric to each other with reference to the center part, and the first portion and the second portion may be provided to be symmetric to each other with reference to the center part. The third rotational axis and the fourth rotational axis may be positioned to be symmetric to each other with reference to the center part, and the third portion and the fourth portion may be provided to be symmetric to each other with reference to the center part. The first portion and the first bracket may be connected to be slidable relative to each other in a first straight line direction (e.g., the first straight line direction LD1 in FIG. 5). The second portion and the second bracket may be connected to be slidable relative to each other in a second straight line direction (e.g., the second straight line direction LD2 in FIG. 5) symmetric to the first straight line direction with reference to the center part. The third portion and the first bracket may be connected to be rotatable relative to each other around a fifth rotational axis (e.g., the fifth rotational axis C5 in FIG. 5) which is parallel to the first rotational axis. The fourth portion and the second bracket may be connected to be rotatable relative to each other around a sixth rotational axis (e.g., the sixth rotational axis C6 in FIG. 5) which is parallel to the second rotational axis. The fifth rotational axis and the sixth rotational axis may be positioned to be symmetric to each other with reference to the center part.

According to an exemplary embodiment of the disclosure, the hinge part may include a first plate (e.g., the first plate 71 in FIG. 5) configured to connect the first bracket and the first portion. The hinge part may include a second plate (e.g., the second plate 72 in FIG. 5) configured to connect the second bracket and the second portion. The hinge part may include a first pin (e.g., the first pin P1 in FIG. 5) disposed in the first portion. The hinge part may include a second pin (e.g., the second pin P2 in FIG. 5) disposed in the second portion. The first plate may be connected to the first bracket so as to be rotatable around a seventh rotational axis (e.g., the seventh rotational axis C7 in FIG. 5) which is parallel to the first rotational axis. The first plate may include a first pin rail (e.g., the first pin rail PR1 in FIG. 5) corresponding to the first pin. The second plate may be connected to the second bracket so as to be rotatable around an eighth rotational axis (e.g., the eighth rotational axis C8 in FIG. 5) which is symmetric to the seventh rotational axis with reference to the center part. The second plate may include a second pin rail (e.g., the second pin rail PR2 in FIG. 5) corresponding to the second pin. The second pin rail may be provided to be symmetric to the first pin rail with reference to the center part. In an unfolded state of the foldable housing, a first surface included in the first plate may be configured to support a part of the third display area, and a second surface included in the second plate may be configured to support a part of the third display area. In an unfolded state of the foldable housing, the flexible film may be configured to support a part of the third display area, the part corresponding to a portion between the first surface and the second surface. In a folded state of the foldable housing, the first surface and the second surface may face each other while being spaced apart from each other, and the third display area may be disposed in a bent shape in a space between the first surface, the second surface, and the center plate.

According to an exemplary embodiment of the disclosure, the center part may include a first shaft (e.g., the first shaft 1110 in FIG. 7), a second shaft (e.g., the second shaft 1120 in FIG. 7), a third circular gear (e.g., the third circular gear 1410 in FIG. 7), and a fourth circular gear (e.g., the fourth circular gear 1420 in FIG. 7). The first shaft may be connected to the first portion (e.g., the first portion 810 in FIG. 7) and configured to provide the first rotational axis (e.g., the first rotational axis C1 in FIG. 7). The second shaft may be connected to the second portion (e.g., the second portion 820 in FIG. 7) and configured to provide the second rotational axis (e.g., the second rotational axis C2 in FIG. 7). The third circular gear may be engaged with a first circular gear (e.g., the first circular gear 814 in FIG. 7) included in the first portion. The fourth circular gear may be engaged with a second circular gear (e.g., the second circular gear 824 in FIG. 7) included in the second portion and a third circular gear.

According to an exemplary embodiment of the disclosure, the hinge part may include a center part (e.g., the center part 1553A in FIG. 15) including a center plate (e.g., the center plate 15920 in FIG. 15). The hinge part may include a first portion (e.g., the first portion 15810 in FIG. 15) connected to the center part so as to be rotatable around a first rotational axis (e.g., the first rotational axis C1 in FIG. 15). The hinge part may include a third portion (e.g., the third portion 15830 in FIG. 15) connected to the center part so as to be rotatable around a third rotational axis (e.g., the third rotational axis C3 in FIG. 15) parallel to the first rotational axis. The hinge part may include a first bracket (e.g., the first bracket 1551A in FIG. 15) connected to the first portion and the third portion. The first bracket may be fixed to the first housing. The hinge part may include a second portion (e.g., the second portion 15820 in FIG. 15) connected to the center part so as to be rotatable around a second rotational axis (e.g., the second rotational axis C2 in FIG. 15). The hinge part may include a fourth portion (e.g., the fourth portion 15840 in FIG. 15) connected to the center part so as to be rotatable around a fourth rotational axis (e.g., the fourth rotational axis C4 in FIG. 15) parallel to the second rotational axis. The hinge part may include a second bracket (e.g., the second bracket 1552A in FIG. 15) connected to the third portion and the fourth portion. The second bracket may be fixed to the second housing. The first rotational axis and the second rotational axis may be positioned to be symmetric to each other with reference to the center part, and the first portion and the second portion may be provided to be symmetric to each other with reference to the center part. The third rotational axis and the fourth rotational axis may be positioned to be symmetric to each other with reference to the center part, and the third portion and the fourth portion may be provided to be symmetric to each other with reference to the center part. The first portion and the first bracket may be connected to be slidable relative to each other in a first straight line direction (e.g., the first straight line direction LD1 in FIG. 15). The second portion and the second bracket may be connected to be slidable relative to each other in a second straight line direction (e.g., the second straight line direction LD2 in FIG. 15) symmetric to the first straight line direction with reference to the center part. The third portion and the first bracket may be connected to be slidable relative to each other in a third straight line direction (e.g., the third straight line direction LD3 in FIG. 15) different from the first straight line direction. The fourth portion and the second bracket may be connected to be slidable relative to each other in a fourth straight line direction (e.g., the fourth straight line direction LD4 in FIG. 15) symmetric to the third straight line direction with reference to the center part.

According to an exemplary embodiment of the disclosure, the hinge part may further include a first plate (e.g., the first plate 1571 in FIG. 15) coupled to the third portion, and a second plate (e.g., the second plate 1572 in FIG. 15) coupled to the fourth portion. In an unfolded state of the foldable housing, the first surface (e.g., the first surface 1571A in FIG. 15) included in the first plate may be configured to support a part of the third display area, and the second surface (e.g., the second surface 1572A in FIG. 15) of the second plate may be configured to support a part of the third display area. In an unfolded state of the foldable housing, the flexible film (e.g., the flexible film 15510 in FIG. 15) may be configured to support a part of the third display area, the part corresponding to a portion between the first surface and the second surface. In a folded state of the foldable housing, the first surface and the second surface may face each other while being spaced apart from each other, and the third display area may be disposed in a bent shape in a space between the first surface, the second surface, and the center plate.

According to an exemplary embodiment of the disclosure, the hinge part may further include a first connection part (e.g., the first connection part 1710 in FIG. 17) configured to connect the first bracket and the third portion. The hinge part may further include a second connection part (e.g., the second connection part 1720 in FIG. 17) configured to connect the second bracket and the fourth portion. The hinge part may further include a first plate (e.g., the first plate 1771 in FIG. 17) coupled to the first connection part. The hinge part may further include a second plate (e.g., the second plate 1772 in FIG. 17) coupled to the second connection part. The first connection part may be connected to the first bracket so as to be rotatable around a fifth rotational axis (e.g., the fifth rotational axis C51 in FIG. 17) parallel to the first rotational axis. The first connection part may include a first pin (e.g., the first pin P11 in FIG. 17) positioned in a first pin rail (e.g., the first pin rail PR11 in FIG. 17) provided in the third portion. The second connection part may be connected to the second bracket so as to be rotatable around a sixth rotational axis (e.g., the sixth rotational axis C6 in FIG. 17) symmetric to the fifth rotational axis with reference to the center part. The second plate may include a second pin (e.g., the second pin P12 in FIG. 17) positioned in a second pin rail (e.g., the second pin rail PR12 in FIG. 17) provided in the fourth portion to be symmetric to the first pin rail with reference to the center part. In an unfolded state of the foldable housing, the first surface (e.g., the first surface 1771A in FIG. 17) included in the first plate may be configured to support a part of the third display area. The second surface (e.g., the second surface 1772A in FIG. 17) included in the second plate may be configured to support a part of the third display area. In an unfolded state of the foldable housing, the flexible film (e.g., the flexible film 17510 in FIG. 17) may be configured to support a part of the third display area, the part corresponding to a portion between the first surface and the second surface. In a folded state of the foldable housing, the first surface and the second surface may face each other while being spaced apart from each other, and the third display area may be disposed in a bent shape in a space between the first surface, the second surface, and the center plate.

According to an exemplary embodiment of the disclosure, a flexible film (e.g., the first flexible film 510 in FIG. 5, the flexible film 15510 in FIG. 15, or the flexible film 17510 in FIG. 17) may include a lattice structure including multiple openings or multiple slits provided to correspond to the third display area.

According to an exemplary embodiment of the disclosure, the hinge part may include a hinge module and a hinge housing (e.g., the hinge housing 23 in FIG. 7). The hinge module may include a first bracket (e.g., the first bracket 51A in FIG. 7) fixed to the first housing. The hinge module may include a second bracket (e.g., the second bracket 52A in FIG. 7) fixed to the second housing. The hinge module may include a bracket connection part configured to connect the first bracket and the second bracket. The bracket connection part may include a center plate (e.g., the center plate 920 in FIG. 7). The hinge housing may be coupled to the bracket connection part. The hinge housing may be exposed to the outside through between the first housing and the second housing so as to provide a part of an outer surface of the foldable electronic device, in a folded state of the foldable housing.

According to an exemplary embodiment of the disclosure, the foldable electronic device may further include a buffer material disposed in a recess (e.g., the recess 924 in FIG. 5, the recess 15924 in FIG. 15, or the recess 17924 in FIG. 17).

According to an exemplary embodiment of the disclosure, the flexible display module may include a flexible display (e.g., the flexible display 240 in FIG. 4) and a support sheet (e.g., the support sheet 247 in FIG. 4) disposed on a rear surface of the flexible display. The support sheet may include a lattice structure including multiple openings or multiple slits provided to correspond to the third display area.

Embodiments disclosed in the disclosure and the drawings are merely specific examples presented to more easily describe the technical contents and to help understanding of the disclosure, and are not intended to limit the scope of the disclosure. Accordingly, in connection with a scope of various embodiments of the disclosure, the scope of various embodiments of the disclosure is to be interpreted to include not only embodiments disclosed herein but also changed or modified forms thereof. Additionally, it will be understood that any embodiment(s) described herein may be used in conjunction with any other embodiment(s) described herein.

## Claims

1. A foldable electronic device comprising:
a foldable housing comprising a first housing, a second housing, and a hinge part configured to connect the first housing and the second housing;
a flexible display module comprising a third display area positioned to correspond to the hinge part, a first display area which extends from the third display area and is disposed in the first housing, and a second display area which extends from the third display area and is disposed in the second housing; and
a flexible film disposed in the foldable housing between the foldable housing and the flexible display module,
wherein the hinge part comprises a center plate comprising a recess provided on one surface thereof, the one surface facing the third display area, and
wherein a part or all of the flexible film is supported by the center plate between the third display area and the center plate and thus is flatly disposed, and overlaps the recess.

2. The foldable electronic device of claim 1, wherein one surface of the center plate, which faces the third display area, comprises a surface area configured to provide the recess, and
wherein the surface area is provided to have a curved-surface shape substantially matching a part of a rear surface of the third display area disposed in a bent shape in a folded state of the foldable housing, the part being aligned with the surface area.

3. The foldable electronic device of claim 1, wherein the hinge part comprises:
a hinge module comprising a first bracket fixed to the first housing, a second bracket fixed to the second housing, and a bracket connection part which is configured to connect the first bracket and the second bracket and comprises the center plate; and
a first plate and a second plate which are coupled to the bracket connection part,
wherein in an unfolded state of the foldable housing, a first surface included in the first plate is configured to support a part of the third display area, and a second surface included in the second plate is configured to support a part of the third display area,
wherein in an unfolded state of the foldable housing, the flexible film is configured to support a part of the third display area, the part corresponding to a portion between the first surface and the second surface, and
wherein in a folded state of the foldable housing, the first surface and the second surface face each other while being spaced apart from each other, and the third display area is disposed in a bent shape in a space between the first surface, the second surface, and the center plate.

4. The foldable electronic device of claim 3, wherein in a folded state of the foldable housing, the first surface and the second surface are configured to be arranged parallel to each other.

5. The foldable electronic device of claim 3, wherein in a folded state of the foldable housing, the first surface and the second surface form an acute angle, and a space between the first surface and the second surface is configured to have a shape widening in a direction toward the center plate.

6. The foldable electronic device of claim 3, wherein when viewed from above the flexible display module in an unfolded state of the foldable housing, the center plate comprises a third surface positioned between the first surface and the second surface,
wherein when viewed from above the flexible display module in an unfolded state of the foldable housing, the third surface comprises a first surface area, a second surface area, and a third surface area positioned between the first surface area and the second surface area and configured to provide the recess, and
wherein the flexible film comprises a first area attached to the first surface area, a second area attached to the second surface area, and a third area configured to connect the first area and the second area and overlap the recess.

7. The foldable electronic device of claim 3, wherein when viewed from above the flexible display module in an unfolded state of the foldable housing, the center plate comprises a third surface positioned between the first surface and the second surface and configured to provide the recess,
wherein when viewed from above the flexible display module in an unfolded state of the foldable housing, the flexible film overlaps the first surface, the second surface, and the third surface,
wherein the foldable electronic device further comprises a fixation area which is disposed between the flexible film and the foldable housing and comprises a bonding material or an adhesive material configured to couple the flexible film and the foldable housing, and
wherein the fixation area comprises a first fixation area positioned in at least a part between the flexible film and the first surface, and a second fixation area positioned in at least a part between the flexible film and the second surface.

8. The foldable electronic device of claim 3, wherein when viewed from above the flexible display module in an unfolded state of the foldable housing, the center plate comprises a third surface positioned between the first surface and the second surface and configured to provide the recess,
wherein when viewed from above the flexible display module in an unfolded state of the foldable housing, the flexible film overlaps the first surface, the second surface, the third surface, a first support area of the first housing, the first display area being disposed in the first support area, and a second support area of the second housing, the second display area being disposed in the second support area,
wherein the foldable electronic device further comprises a fixation area which is disposed between the flexible film and the foldable housing and comprises a bonding material or an adhesive material configured to couple the flexible film and the foldable housing, and
wherein the fixation area comprises a first fixation area positioned in at least a part between the flexible film and the first support area, and a second fixation area positioned in at least a part between the flexible film and the second support area.

9. The foldable electronic device of claim 1, wherein the hinge part comprises:
a center part comprising the center plate;
a first portion connected to the center part so as to be rotatable around a first rotational axis;
a third portion connected to the center part so as to be rotatable around a third rotational axis which is parallel to the first rotational axis;
a first bracket connected to the first portion and the third portion and fixed to the first housing;
a second portion connected to the center part so as to be rotatable around a second rotational axis;
a fourth portion connected to the center part so as to be rotatable around a fourth rotational axis which is parallel to the second rotational axis; and
a second bracket connected to the third portion and the fourth portion and fixed to the second housing,
wherein the first rotational axis and the second rotational axis are positioned to be symmetric to each other with reference to the center part, and the first portion and the second portion are provided to be symmetric to each other with reference to the center part,
wherein the third rotational axis and the fourth rotational axis are positioned to be symmetric to each other with reference to the center part, and the third portion and the fourth portion are provided to be symmetric to each other with reference to the center part,
wherein the first portion and the first bracket are connected to be slidable relative to each other in a first straight line direction,
wherein the second portion and the second bracket are connected to be slidable relative to each other in a second straight line direction which is symmetric to the first straight line direction with reference to the center part,
wherein the third portion and the first bracket are connected to be rotatable relative to each other with reference to a fifth rotational axis which is parallel to the first rotational axis,
wherein the fourth portion and the second bracket are connected to be rotatable relative to each other with reference a sixth rotational axis which is parallel to the second rotational axis, and
wherein the fifth rotational axis and the sixth rotational axis are positioned to be symmetric to each other with reference to the center part.

10. The foldable electronic device of claim 9, wherein the hinge part comprises a first plate configured to connect the first bracket and the first portion, a second plate configured to connect the second bracket and the second portion, a first pin disposed in the first portion, and a second pin disposed in the second portion,
wherein the first plate is connected to the first bracket so as to be rotatable around a seventh rotational axis which is parallel to the first rotational axis, and comprises a first pin rail corresponding to the first pin,
wherein the second plate is connected to the second bracket so as to be rotatable around an eighth rotational axis which is symmetric to the seventh rotational axis with reference to the center part, is provided to be symmetric to the first pin rail with reference to the center part, and comprises a second pin rail corresponding to the second pin, and
wherein in an unfolded state of the foldable housing, a first surface included in the first plate is configured to support a part of the third display area, and a second surface included in the second plate is configured to support a part of the third display area,
wherein in an unfolded state of the foldable housing, the flexible film is configured to support a part of the third display area, the part corresponding to a portion between the first surface and the second surface, and
wherein in a folded state of the foldable housing, the first surface and the second surface face each other while being spaced apart from each other, and the third display area is disposed in a bent shape in a space between the first surface, the second surface, and the center plate.

11. The foldable electronic device of claim 1, wherein the hinge part comprises:
a center part comprising the center plate;
a first portion connected to the center part so as to be rotatable around a first rotational axis;
a third portion connected to the center part so as to be rotatable around a third rotational axis which is parallel to the first rotational axis;
a first bracket connected to the first portion and the third portion and fixed to the first housing;
a second portion connected to the center part so as to be rotatable around a second rotational axis;
a fourth portion connected to the center part so as to be rotatable around a fourth rotational axis which is parallel to the second rotational axis; and
a second bracket connected to the third portion and the fourth portion and fixed to the second housing,
wherein the first rotational axis and the second rotational axis are positioned to be symmetric to each other with reference to the center part, and the first portion and the second portion are provided to be symmetric to each other with reference to the center part,
wherein the third rotational axis and the fourth rotational axis are positioned to be symmetric to each other with reference to the center part, and the third portion and the fourth portion are provided to be symmetric to each other with reference to the center part,
wherein the first portion and the first bracket are connected to be slidable relative to each other in a first straight line direction,
wherein the second portion and the second bracket are connected to be slidable relative to each other in a second straight line direction which is symmetric to the first straight line direction with reference to the center part,
wherein the third portion and the first bracket are connected to be slidable relative to each other in a third straight line direction different from the first straight line direction, and
wherein the fourth portion and the second bracket are connected to be slidable relative to each other in a fourth straight line direction symmetric to the third straight line direction with reference to the center part.

12. The foldable electronic device of claim 11, wherein the hinge part comprises a first plate coupled to the third portion and a second plate coupled to the fourth portion,
wherein in an unfolded state of the foldable housing, a first surface included in the first plate is configured to support a part of the third display area, and a second surface of the second plate is configured to support a part of the third display area,
wherein in an unfolded state of the foldable housing, the flexible film is configured to support a part of the third display area, the part corresponding to a portion between the first surface and the second surface, and
wherein in a folded state of the foldable housing, the first surface and the second surface face each other while being spaced apart from each other, and the third display area is disposed in a bent shape in a space between the first surface, the second surface, and the center plate.

13. The foldable electronic device of claim 11, wherein the hinge part comprises a first connection part configured to connect the first bracket and the third portion, a second connection part configured to connect the second bracket and the fourth portion, a first plate coupled to the first connection part, and a second plate coupled to the second connection part,
wherein the first connection part is connected to the first bracket so as to be rotatable around a fifth rotational axis which is parallel to the first rotational axis, and comprises a first pin positioned in a first pin rail provided in the third portion,
wherein the second connection part is connected to the second bracket so as to be rotatable around a sixth rotational axis which is symmetric to the fifth rotational axis with reference to the center part, and comprises a second pin positioned in a second pin rail which is provided in the fourth portion to be symmetric to the first pin rail with reference to the center part,
wherein in an unfolded state of the foldable housing, a first surface included in the first plate is configured to support a part of the third display area, and a second surface included in the second plate is configured to support a part of the third display area,
wherein in an unfolded state of the foldable housing, the flexible film is configured to support a part of the third display area, the part corresponding to a portion between the first surface and the second surface, and
wherein in a folded state of the foldable housing, the first surface and the second surface face each other while being spaced apart from each other, and the third display area is disposed in a bent shape in a space between the first surface, the second surface, and the center plate.

14. The foldable electronic device of claim 1, wherein the flexible film comprises a lattice structure comprising multiple openings or multiple slits provided to correspond to the third display area.

15. The foldable electronic device of claim 1, wherein the flexible display module comprises a flexible display and a support sheet disposed on a rear surface of the flexible display, and
wherein the support sheet comprises a lattice structure comprising multiple openings or multiple slits provided to correspond to the third display area.
